# EUROPEAN PATENT APPLICATION

(11) **EP 1 696 446 A1**
(43) Date of publication of application: **30.08.2006**
(21) Application number: 04747096.8
(22) Date of filing: 07.07.2004
(51) Int. Cl.: H01G 9/058, H01G 9/038

(54) **CAPACITOR AND METHOD FOR MANUFACTURING SAME**

(30) Priority: 07.07.2003 JP 2003193229; 10.07.2003 JP 2003195412; 10.10.2003 JP 2003352909; 05.11.2003 JP 2003376261; 06.11.2003 JP 2003377008; 10.11.2003 JP 2003380211; 02.12.2003 JP 2003403652; 08.12.2003 JP 2003409511; 05.03.2004 JP 2004062508; 12.04.2004 JP 2004117234
(71) Applicant: Eamex Corporation, Suita-shi, Osaka 564-0062 (JP)
(72) Inventor: ONISHI, Kazuo, Suita-shi, Osaka 5640062 (JP); SEWA, Shingo, Suita-shi, Osaka 5640062 (JP); SUGIYAMA, Minoru, Suita-shi, Osaka 5640062 (JP); KATO, Kenji, Suita-shi, Osaka 5640062 (JP)
(74) Representative: Luderschmidt, Schüler & Partner
(86) International application number: PCT/JP2004/009627
(87) International publication number: WO 2005/013299

(57) **Abstract**

To provide a capacitor comprising at least a polymer electrolyte between metal electrodes opposite to each other, **characterized in that** the metal electrodes have projecting portions, which are in contact with the polymer electrolyte and form electrode components of the metal electrodes, in a boundary region with the polymer electrolyte, and as a method for efficiently manufacturing the capacitor, a method for efficiently manufacturing such a capacitor wherein a metal electrode is formed on a polymer electrolyte by a nonelectrolytic plating process, **characterized in that** the nonelectrolytic plating process comprises an adsorption step wherein the polymer electrolyte is caused to adsorb a metal complex and a following reduction step wherein the polymer electrolyte on which the metal complex is adsorbed is brought into contact with a reduction solution.

## Description

### TECHNICAL FIELD

A capacitor is also called a condenser and is an apparatus or a circuit element to store electric charges between electrodes. The capacitor has recently attracted much attention because it can be used as a backup power supply for memory of personal computers, cellular phones and the like, and also as a power supply for coping with instantaneous power failures and in storage systems of solar power energy in combination with solar cells.

A metal electrode and a carbon electrode are mainly used as an electrode for the capacitor(condenser). The carbon electrode is an electrode using carbon material and is suitable for mass storage with a large specific surface area thereof. However, because granular material must be handled to knead powdered carbon material, the carbon electrode is hard to handle and lacks workability. If an electrode is made of carbon material, a current collector such as a metallic mesh body or a metal plate is needed as an electrode. If a capacitor is made without using any current collector, the shape thereof is limited, for example, to a button type, reducing flexibility in designing a capacitor shape and making it difficult to provide desired shapes for various uses. Moreover, if a current collector is used for each electrode made of carbon material, the capacitor becomes thicker for a portion of the current collector and cannot be made thinner. The capacitor electrode is preferably a metal electrode requiring no current collector.

The capacitor using a metal electrode includes a thin-film polymer film condenser with the electrode formed on a polymer layer (See, for example, Patent Reference 1). The polymer film condenser has, with an area of 1 cm², a capacitance of 0.015-0.02 µF when a thickness thereof is 0.35-0.41 µm and the capacitance of 25-40 µF when the thickness thereof is 0.8-1.8 µm. Thus, the capacitance is not sufficient and further improvement of the capacitance is needed.

### Patent Reference 1: Patent Application No. Heisei 11-8153

### DISCLOSURE OF THE INVENTION

### Means for Solving the Problems

An object of the present invention is to provide a high-capacity capacitor having metal electrodes as electrodes thereof and a large capacitance of an interface between an electrolyte layer and an electrode layer and a method for manufacturing the same.

The present inventors, after an intensive study, have found that a capacitor comprising at least a polymer electrolyte between metal electrodes opposite to each other characterized in that the metal electrodes have projecting portions, which are in contact with the polymer electrolyte and form electrode components of the metal electrodes, in a boundary region with the polymer electrolyte can have a capacitance of 3 mF/cm² or more by a cyclic voltammetry method with two electrodes and 2 F/cm³ or more by a constant current discharge method.

Furthermore, the present inventors have found that the metal electrodes comprising a porous metal membrane present in contact with a surface of the polymer electrolyte and the projecting portions comprising components of the porous metal membrane and present in the boundary region inside the polymer electrolyte, wherein the porous metal membrane and the projecting portions are linked and integrated make a collecting electrode plate of a capacitor unnecessary and increase the capacitance of the capacitor.

Moreover, the present inventors have found that a capacitor can efficiently be manufactured by a manufacturing method of a capacitor, wherein a metal electrode is formed on a polymer electrolyte by a nonelectrolytic plating process, characterized in that the nonelectrolytic plating process comprises an adsorption step wherein the polymer electrolyte is caused to adsorb a metal complex and a following reduction step wherein the polymer electrolyte on which the metal complex is adsorbed is brought into contact with a reduction solution.

Furthermore, the present inventors have found that a capacitor comprising at least an ionic material, a polar liquid, and a polymer electrolyte between metal electrodes opposite to each other, characterized in that the metal electrodes have projecting portions, which are in contact with the polymer electrolyte and form electrode components of the metal electrodes, in a boundary region with the polymer electrolyte and the polymer electrolyte has a space part can further improve the capacitance. They have found that there are a plurality of space parts present in the polymer electrolyte of the capacitor, shapes thereof are often approximately circular or semicircular, and a shortest value of a diameter thereof is 10 nm or more. Among others, they have found that the polymer electrolyte is a cation exchange resin, the polar liquid is propylene carbonate, and the capacitance and capacitor structure are stable when the ionic material is Li(CF₃SO₂)₂N. They have also found that such a capacitor has a capacitance of 40 F/cm³ or more by measuring the capacitance using the constant current discharge method.

Furthermore, the present inventors have found that the capacitor can efficiently be manufactured by undergoing a first step wherein a polymer electrolyte is swollen by infiltrating a good solvent or a mixed solvent containing the good solvent, a second step wherein a metal electrode is formed on the swollen polymer electrolyte by the nonelectrolytic plating process, a third step wherein bubbles are generated by electrolyzing liquid present between the formed metal electrodes to create porous space in the polymer electrolyte by pressure of the bubbles, and a fourth step wherein the liquid between the metal electrodes is removed, and an ionic material and a polar liquid are filled in.

Furthermore, the present inventors have found that the capacitance of a capacitor obtained by the manufacturing method can further be improved by a swelling step wherein a swollen polymer electrolyte has a predetermined shape and a thickness of the polymer electrolyte in a swollen state is 120% or more of that in a dry state for the first step, a step wherein the nonelectrolytic plating process comprises an adsorption step wherein the polymer electrolyte is caused to adsorb a metal complex and a following reduction step wherein the polymer electrolyte on which the metal complex is adsorbed is brought into contact with a reduction solution is carried out more than once for the second step, and selecting water or a mixed solution of water and alcohols as the liquid to be electrolyzed for the third step, and thus has been made the present invention.

### Effect of the Invention

A capacitor having a larger capacitance than a capacitor having conventional metal electrodes can be obtained by the manufacturing method of capacitor of the present invention. Furthermore, the manufacturing method of capacitor of the present invention can manufacture a capacitor showing still a larger capacitance by performing a swelling step as a pretreatment step of the nonelectrolytic plating process.

Since a capacitor of the present invention has a large capacitance, the capacitor can be used for a wide range of uses, for example, as a backup power supply for instantaneous power failures. Since the capacitor also has a metal electrode layer, no collecting electrode plate is needed, reducing the number of parts and facilitating slimming down and miniaturization/weight reduction.

### BRIEF DESCRIPTION OF THE DRAWINGS

FIG. 1 is a view of an electron microscope photo (SEM photo) taken by a scanning electron microscope (SEM) of a sectional view in a capacitor thickness direction in a capacitor according to a first embodiment of the present invention.
FIG. 2 is an SEM photo in the capacitor thickness direction in a capacitor according to a second embodiment of the present invention.
FIG. 3 is an SEM photo in the capacitor thickness direction in the capacitor according to the second embodiment of the present invention.
FIG. 4 is an SEM photo in the capacitor thickness direction in the capacitor according to the second embodiment of the present invention.
FIG. 5 is an SEM photo in the capacitor thickness direction in the capacitor according to the second embodiment of the present invention.
FIG. 6 is an SEM photo in the capacitor thickness direction in the capacitor according to the second embodiment of the present invention.
FIG. 7 is an SEM photo in the capacitor thickness direction of a capacitor without space part according to the present invention.
FIG. 8 is a schematic diagram of a shape in the capacitor thickness direction in the capacitor according to the second embodiment of the present invention.
FIG. 9 is an SEM photo in the capacitor thickness direction in the capacitor according to the second embodiment of the present invention.
FIG. 10 is a diagram showing the capacitor in the view of the SEM photo of FIG. 1 as a diagrammatic drawing.
FIG. 11 (a) is an SEM photo of the sectional view in the thickness direction according to another embodiment of a capacitor of the present invention. (b) is a view of an SEM photo of the sectional view in the thickness direction of the same capacitor as in FIG. 3 (a).
FIG. 12 is an SEM photo of the sectional view in the capacitor thickness direction according to the other embodiment of the capacitor of the present invention.
FIG. 13 is an SEM photo of the sectional view in the capacitor thickness direction according to the other embodiment of the capacitor of the present invention.
FIG. 14 is an SEM photo of the sectional view in the capacitor thickness direction according to the other embodiment of the capacitor of the present invention.
FIG. 15 is an SEM photo of the sectional view in the capacitor thickness direction according to the other embodiment of the capacitor of the present invention.
FIG. 16 is an SEM photo of the sectional view in the capacitor thickness direction according to the other embodiment of the capacitor of the present invention.
FIG. 17 is, as a three-dimensional image of the capacitor of the present invention by X-rays, a perspective view of a plane image when viewed from above in a B direction at an angle.
FIG. 18 is a perspective view obtained by adding leading lines for illustration to FIG. 17.
FIG. 19 is, as a three-dimensional image of the capacitor of the present invention by X-rays, a perspective view when viewed in FIG. 17 from above in an A direction at an angle.
FIG. 20 is a perspective view obtained by adding leading lines for illustration to FIG. 19.
FIG. 21 is, as a three-dimensional image of the capacitor of the present invention by X-rays, a perspective view obtained by rotating around a B-D axis in FIG. 19 and enlarging and viewing from the A direction, including the sectional view in the capacitor thickness direction.
FIG. 22 is a perspective view obtained by adding leading lines for illustration to FIG. 5.
FIG. 23 is, as a three-dimensional image of the capacitor of the present invention by X-rays, an enlarged sectional view of the capacitor viewed from the A direction in FIG. 21 and a stereoscopic image in a depth direction thereof.
FIG. 24 is a view obtained by adding leading lines for illustration to FIG. 23.
FIG. 25 is, as a three-dimensional image of the capacitor of the present invention by X-rays, a sectional view (fault) inside the capacitor in the thickness direction and a stereoscopic image in the depth direction thereof after further penetrating into the capacitor in FIG. 23.
FIG. 26 is a view obtained by adding leading lines for illustration to FIG. 25.
FIG. 27 is, as a three-dimensional image of the capacitor of the present invention by X-rays, a sectional view (fault) inside the capacitor in the thickness direction and a stereoscopic image in the depth direction thereof after further penetrating into the capacitor in FIG. 25.
FIG. 28 is a view obtained by adding leading lines for illustration to FIG. 11.
FIG. 29 is, as a three-dimensional image of the capacitor of the present invention by X-rays, a sectional view (fault) inside the capacitor in the thickness direction and a stereoscopic image in the depth direction thereof after further penetrating into the capacitor in FIG. 27.
FIG. 30 is a sectional view obtained by adding leading lines for illustration to FIG. 29.
FIG. 31 is, as a three-dimensional image of the capacitor of the present invention by X-rays, a sectional view (fault) inside the capacitor in the thickness direction and a stereoscopic image in the depth direction thereof after further penetrating into the capacitor in FIG. 29.
FIG. 32 is a view obtained by adding leading lines for illustration to FIG. 31.
FIG. 33 is, as a three-dimensional image of the capacitor of the present invention by X-rays, a sectional view when viewed from an oblique direction in a C direction in FIG. 18 and a stereoscopic image in the depth direction thereof.
FIG. 34 is a view obtained by adding leading lines for illustration to FIG. 33.
FIG. 35 is a sectional image in a direction perpendicular to the thickness direction of the capacitor of the present invention by X-rays.
FIG. 36 is a sectional view obtained by adding leading lines for illustration to FIG. 35.
FIG. 37 is, as a sectional image in a direction perpendicular to the thickness direction of the capacitor of the present invention by X-rays, a sectional view 9 µm away from FIG. 35.
FIG. 38 is a sectional view obtained by adding leading lines for illustration to FIG. 37.
FIG. 39 is, as a sectional image in a direction perpendicular to the thickness direction of the capacitor of the present invention by X-rays, a sectional view 9 µm away from FIG. 37.
FIG. 40 is a sectional view obtained by adding leading lines for illustration to FIG. 39.
FIG. 41 is an 80x surface photo of a porous metal electrode in a capacitor according to a third embodiment of the present invention.
FIG. 42 is an 80x surface photo of a metal electrode having a shine.
FIG. 43 is a 500x surface photo of the porous metal electrode in the capacitor according to the third embodiment of the present invention.
FIG. 44 is a 500x surface photo of the metal electrode having a shine.
FIG. 45 is a 3000x surface photo of the porous metal electrode in the capacitor according to the third embodiment of the present invention.
FIG. 46 is a 3000x surface photo of the metal electrode having a shine.

### Description of the Symbols

- 201: Metal electrode
- 211: Projecting portion
- 202: Polymer electrolyte
- 221: Space part
- 301: Capacitor
- 302, 302': Polarizable electrode
- 303: Polymer electrolyte
- 304, 304': Projecting portion
- 305: Capacitor surface
- 306, 307: Bay-like insertion portion
- 308, 308': Pore
- 309, 309': Narrow bay portion
- 310: Insular part
- 321: Capacitor
- 322: Polymer electrolyte
- 323, 323': Polarizable electrode
- 331: Capacitor
- 332: Polymer electrolyte
- 333, 333': Polarizable electrode
- 341: Capacitor
- 342: Polymer electrolyte
- 343, 343': Polarizable electrode
- 344: Capacitor surface
- 351: Capacitor
- 352: Polymer electrolyte
- 353, 353': Polarizable electrode
- 354: Capacitor surface
- 361: Capacitor
- 362: Polymer electrolyte
- 363, 363': Polarizable electrode
- 364: Capacitor surface
- 371: Capacitor
- 372: Polymer electrolyte
- 373, 373': Polarizable electrode
- 374: Capacitor surface
- 401: Capacitor
- 402: Projecting portion
- 403: Porous metal membrane
- 500: Capacitor of the present embodiment
- 511: One metal electrode
- 511a: Electrode component
- 511b, c, d, f, h, k, 1, m: Example of projecting portions formed by components of one metal electrode
- 512: The other electrode
- 512e, I, j, n: Example of projecting portions formed by components of the other metal electrode
- 521: Boundary region where components of one metal electrode and the polymer electrolyte are mixed
- 522: Boundary region where components of the other metal electrode and the polymer electrolyte are mixed
- 523: Polymer electrolyte region
- A1,: A2Boundary region
- F1,: F3 Polarizable electrode region
- F2: Polymer electrolyte region
- R1, R4: Electrode region rich in electrode components
- R2, R3: Electrode region rich in polymer electrolyte components

### BEST MODE FOR CARRYING OUT THE INVENTION

### (Method for manufacturing a capacitor)

Methods for efficiently manufacturing capacitors according to first to third embodiments of the present invention will be described.

### [First embodiment]

A method for efficiently manufacturing a capacitor according to a first embodiment of the present invention is a method wherein a metal electrode is formed on a polymer electrolyte by a nonelectrolytic plating process, characterized in that the nonelectrolytic plating process comprises an adsorption step wherein the polymer electrolyte is caused to adsorb a metal complex and a following reduction step wherein the polymer electrolyte on which the metal complex is adsorbed is brought into contact with a reduction solution. Using the manufacturing method of the present invention, metal generated in the reduction step is deposited on a surface of the polymer electrolyte in a process in which the adsorption step and the reduction step are repeated, and the metal is further deposited and grown toward an inner part of the polymer electrolyte to form a metal electrode.

Since the metal electrode is obtained by growing deposited metal, when compared with a metal electrode obtained by a conventional metal electrode forming method such as vapor deposition, a larger specific surface area of the metal electrode in an interface between a metal electrode layer and a polymer electrolyte layer and a larger capacitance in the interface between the metal electrode layer and the polymer electrolyte layer are obtained. Thus, the capacitor obtained by the manufacturing method of the present invention has a larger capacitor capacity than a capacitor with a conventional metal electrode.

### (Nonelectrolytic plating)

In an nonelectrolytic plating process to form a metal electrode according to the manufacturing method of capacitor of the present invention, the adsorption step to cause the polymer electrolyte to adsorb a metal complex is performed and then the reduction step to bring the reduction solution into contact with the polymer electrolyte on which the metal complex is adsorbed is performed. By performing the reduction step after performing the adsorption step, the metal complex is reduced and deposited on the polymer electrolyte as metal and a metal layer is formed to produce a capacitor. By performing the nonelectrolytic plating process after the swelling step for the polymer electrolyte, a manufacturing method of a capacitor comprising a metal layer and a polymer electrolyte layer characterized in that the metal layer is formed by the manufacturing method of capacitor of the present invention, that is, by performing, after performing the swelling step, as a pretreatment step for the nonelectrolytic plating to the polymer electrolyte, in which a good solvent or a mixed solvent containing the good solvent is infiltrated into the polymer electrolyte to swell the polymer electrolyte so that the swollen polymer electrolyte has a predetermined shape and the thickness in a swollen state of the polymer electrolyte is 120% or more of that in a dry state thereof, the adsorption step to cause the polymer electrolyte to adsorb the metal complex and the reduction step to bring the reduction solution into contact with the polymer electrolyte on which the metal complex is adsorbed, is provided.

### (Adsorption step)

There is no particular restriction on the adsorption step in the manufacturing method of capacitor of the present invention as long as the polymer electrolyte has a predetermined shape and a metal complex is adsorbed by the polymer electrolyte. In the adsorption step, a metal complex solution may be applied to the polymer electrolyte, but immersion of the polymer electrolyte into the metal complex solution is preferable because of easier work.

Conditions such as temperature and immersion time for the adsorption step are not particularly limited as long as a metal complex is adsorbed by the polymer electrolyte, but the temperature of 20 °C or higher is preferable for efficient swelling.

In the adsorption step, the metal complex solution may contain a good solvent of the polymer electrolyte to facilitate adsorption of the metal complex into the polymer electrolyte. There is no particular restriction on the metal complex solution in the adsorption step as long as a complex of metal capable of functioning as an electrode is contained in a metal layer formed by reduction. There is no particular restriction on the metal complex as long as the metal can assure conductivity and the metal complex can be used as nonelectrolytic plating.

### (Reduction step)

The reduction step of the present invention is a step to deposit metal by reducing the metal complex adsorbed on the polymer electrolyte in the adsorption step. There is no particular restriction on the reduction solution used for the present invention as long as a reducing agent is dissolved regardless of the shape of the polymer electrolyte. A type of the reducing agent can be selected and used appropriately based on the type of the metal complex used in the metal complex solution adsorbed on the polymer electrolyte and, for example, sodium sulfite, hydrazine, and sodium borohydride can be used. When reducing the metal complex, acid or alkali may be added if necessary. There is no particular restriction on a concentration of the reduction solution as long as a sufficient quantity of reducing agent is contained to obtain a quantity of metal to be deposited by reducing the metal complex, but the concentration equal to that of a metal complex solution used for forming an electrode by conventional nonelectrolytic plating may also be used. A good solvent of the polymer electrolyte may also be contained in the reduction solution.

In the manufacturing method of capacitor of the present invention, the capacitance in the interface between the metal electrode and polymer electrolyte layer can be made larger than a conventional value by repeating the adsorption step and the reduction step. When, according to the present invention, the adsorption step and the reduction step are performed alternately and repeatedly, a capacitor with still a larger capacitance can easily be obtained by repeating a step in which the reduction step is performed after the adsorption step is performed preferably twice or more, or more preferably four times or more.

When the adsorption step and the reduction step are performed repeatedly, it is preferable to perform a washing step after the reduction step and perform the adsorption step after the washing step to facilitate adsorption of the metal complex in the adsorption step by removing the reducing agent from the polymer electrolyte.

There is no particular restriction on the washing step and the reducing agent may be removed by washing in cold water.

### (Pretreatment swelling step)

In the manufacturing method of capacitor of the present invention, the swelling step in which the polymer electrolyte is swollen may be performed as a pretreatment step to be performed prior to the nonelectrolytic plating process. In the swelling step, swelling may be performed using water as a swelling solvent for performing swelling, it is preferable to infiltrate a good solvent or a mixed solvent containing the good solvent into the polymer electrolyte so that the swollen polymer electrolyte has the predetermined shape and a thickness in a swollen state of the polymer electrolyte is 120% or more of the thickness in a dry state thereof. By swelling the polymer electrolyte so that the thickness in a swollen state of the polymer electrolyte is 120% or more of that in a dry state thereof, degree of freedom of segment movements for side chains having a functional group is increased in resin components forming the polymer electrolyte. This increase in the degree of freedom facilitates adsorption of the metal complex from the surface into the inner part of the polymer electrolyte in the adsorption step by the nonelectrolytic plating process and also the adsorption of the reducing agent in the reduction solution from the surface into the inner part of the polymer electrolyte in the reduction step, facilitating Brownian motion of the metal complex and reducing agent inside the polymer electrolyte.

A capacitor with a metal layer formed on a polymer electrolyte obtained by the nonelectrolytic plating process performed in the swelling step has a larger capacitance of an electrode layer than a conventional capacitor using the metal layer as the electrode layer. In the metal layer of the capacitor obtained by the nonelectrolytic plating process, a cross section of the metal layer forms a structure more uneven than a conventional fractal structure in the interface between the polymer electrolyte layer and metal layer and, even when the polymer electrolyte contracts after obtaining a capacitor, the fractal structure formed during swelling is considered to retain the shape thereof.

If the reduction step is performed after the swelling step, the metal complex penetrates into the inner part of the polymer electrolyte as described above to become particle-like metal by the reduction step and the particle-like metal is linked to each other to form a metal electrode on an electrolyte.

Since the metal electrode is formed in this way on the polymer electrolyte of a capacitor of the present invention, the interface between the metal electrode and electrolyte layer is not necessarily distinct. There is an area rich in metal components near an outside of the polymer electrolyte and a structure in which electrolyte components gradually become richer toward a center of the electrolyte could be set up. That is, the metal electrode of the capacitor of the present invention does not have to exist as a distinct layer on the electrolyte and instead a conductive portion, which can be used as an electrode, formed by linking at least metal existing near the outside of the electrolyte to each other is sufficient. Therefore, the capacitor of the present invention may have a structure without a distinct interface by visual inspection between the metal electrode layer and electrolyte layer, wherein an electrolyte portion having resistance as an electrolyte layer is sandwiched by both conductive portions containing metal as a primary component, which can be used as an electrode.

The good solvent is a solvent that can swell cross-linked polymers well and depends on the type of polymer forming the polymer electrolyte. Therefore, an appropriate type of solvent can be used as the good solvent in accordance with a composition of the polymer electrolyte adopted based on uses of a capacitor ultimately obtained with the nonelectrolytic plating process. The good solvent may be provided by mixing a plurality of types of good solvent. As the good solvent, for example, methanol, dimethyl sulfoxide, N-methyl pyrolidone, dimethyl formamide, ethylene glycol, diethylene glycol, glycerin, and tetraproryl hydroxide can be used. If the polymer electrolyte is perfluorocarboxylic acid resin or perfluorosulfonic acid resin, methanol, ethanol, propanol, hexafluoro-2-propanol, diethylene glycol, or glycerin can be used. If, particularly in the swelling step, the polymer electrolyte is perfluorocarboxylic acid resin or perfluorosulfonic acid resin, it is preferable to swell the polymer electrolyte so that the thickness in a swollen state of the polymer electrolyte is 120% or more of that in a dry state thereof by infiltrating a solvent containing methanol or ethanol. This is because ethanol is easy to use for swelling and treat, and workability thereof is good.

If, in the swelling step, the polymer electrolyte can be swollen so that the thickness in a swollen state of the polymer electrolyte is 120% or more of that in a dry state thereof, the polymer electrolyte may be swollen using the good solvent only or a mixed solvent containing the good solvent.

By swelling the polymer electrolyte, the degree of crystallinity of the polymer electrolyte is reduced and particularly entanglement of side chains having a functional group is relaxed, increasing the degree of freedom of segment movements for the side chains. Thus, a capacitor comprising a metal layer and a polymer electrolyte layer obtained by the nonelectrolytic plating process having the swelling step as a pretreatment step can be considered capable of obtaining a larger displacement due to more efficient movement of ions.

There is no particular restriction on a mixing ratio of a good solvent to other solvents in a mixed solvent containing the good solvent of the polymer electrolyte as long as the mixed solvent is obtained by mixing the good solvent with other solvents in any proportion and the polymer electrolyte can be swollen so that the thickness in a swollen state of the polymer electrolyte is 120% or more of that in a dry state thereof. The other solvents are different solvents from the good solvent of the polymer electrolyte in use and can be water or any organic solvent if a stable mixed state with the good solvent can be maintained. If, however, the adsorption step to be performed after the swelling step is performed in a metal complex solution, water is preferable because adsorption of the metal complex such as metal complex deposition is not inhibited. If the polymer electrolyte is perfluorocarboxylic acid resin or perfluorosulfonic acid resin, and a good solvent or a mixed solvent containing the good solvent, which is a swelling solvent for swelling the polymer electrolyte, is a mixed solvent containing methanol and water, methanol is preferably contained 5-100% by weight in the swelling solvent to obtain a larger capacitance. If the perfluorocarboxylic acid resin or perfluorosulfonic acid resin has an ion exchange capacity of 1.8 meq/g, methanol is more preferably contained 5-40% by weight in the swelling solvent to easily obtain a large swelling. If the perfluorocarboxylic acid resin or perfluorosulfonic acid resin has the ion exchange capacity of 1.4 meq/g, methanol is still more preferably contained 100% by weight in the swelling solvent.

If, in the pretreatment step, a swollen polymer electrolyte has a predetermined shape and the polymer electrolyte can be swollen so that the thickness in a swollen state of the polymer electrolyte is 120% or more of that in a dry state thereof, there is no particular restriction on means for infiltrating a good solvent or a mixed solvent containing the good solvent into the polymer electrolyte.

The polymer electrolyte may be immersed in a good solvent or a mixed solvent containing the good solvent, or the good solvent or the mixed solvent containing the good solvent may be applied to the surface of the polymer electrolyte. However, it is preferable to use a method for immersing the polymer electrolyte in the good solvent or the mixed solvent containing the good solvent due to ease of workability.

### [Second embodiment]

A capacitor according to a second embodiment of the present invention can efficiently be obtained according to the following manufacturing method. That is, the capacitor can be obtained through a first step in which a polymer electrolyte is swollen by infiltrating a good solvent or a mixed solvent containing the good solvent, a second step in which a metal electrode is formed on the swollen polymer electrolyte by the nonelectrolytic plating process, a third step in which bubbles are generated by electrolyzing liquid present between the formed metal electrodes to create porous space in the polymer electrolyte by pressure of the bubbles, and a fourth step in which the liquid between the metal electrodes is removed, and ionic material and polar liquid are filled in. Here, the first and second steps are steps in which an area in contact with the polymer electrolyte or a liquid electrolyte is increased by forming the shape of the metal electrodes which comprising a projecting portions into the inner part, on the polymer electralyte. The third and fourth steps, on the other hand, are steps in which ionic components contributing to formation of an electric double layer are increased by creating a space part inside the polymer electrolyte and filling in the ionic material and polar liquid therein. Therefore, the first and second steps only or the third and fourth steps only are a step that could contribute to increasing capacitance, but a capacitor obtained through all steps of the first through fourth steps will have capacitance properties improved synergistically. Each of the steps will be described below.

### (First step)

The first step in the manufacturing method of capacitor of the present invention is, as a pretreatment step performed prior to nonelectrolytic plating process, a swelling step in which the polymer electrolyte is swollen. In the swelling step, swelling may be performed using water as a swelling solvent for performing swelling, it is preferable to infiltrate a good solvent or a mixed solvent containing the good solvent into the polymer electrolyte so that the swollen polymer electrolyte has the predetermined shape and the thickness in a swollen state of the polymer electrolyte is 120% or more of that in a dry state thereof. By swelling the polymer electrolyte so that the thickness in a swollen state of the polymer electrolyte is 120% or more of that in a dry state thereof, the degree of freedom of segment movements for side chains having a functional group is increased in resin components forming the polymer electrolyte.

This increase in the degree of freedom facilitates adsorption of a metal complex from the surface into the inner part of the polymer electrolyte in the adsorption step by the nonelectrolytic plating process and also the adsorption of a reducing agent in a reduction solution from the surface into the inner part of the polymer electrolyte in the reduction step, facilitating Brownian motion of the metal complex and reducing agent inside the polymer electrolyte.

A good solvent used in the first step is a solvent that can swell cross-linked polymers well and depends on the type of polymer forming the polymer electrolyte. Therefore, an appropriate type of solvent can be used as the good solvent in accordance with the composition of the polymer electrolyte adopted based on uses of a capacitor ultimately obtained with the nonelectrolytic plating process. The good solvent may be provided by mixing a plurality of types of good solvent. As the good solvent, for example, methanol, dimethyl sulfoxide, N-methyl pyrolidone, dimethyl formamide, ethylene glycol, diethylene glycol, glycerin, and tetraproryl hydroxide can be used. If the polymer electrolyte is perfluorocarboxylic acid resin or perfluorosulfonic acid resin, methanol, ethanol, propanol, hexafluoro-2-propanol, diethylene glycol, or glycerin can be used. If, particularly in the swelling step, the polymer electrolyte is perfluorocarboxylic acid resin or perfluorosulfonic acid resin, it is preferable to swell the polymer electrolyte so that the thickness in a swollen state of the polymer electrolyte is 120% or more of that in a dry state thereof by infiltrating a solvent containing methanol or ethanol. This is because ethanol is easy to use for swelling and treat and workability thereof is good.

If, in the swelling step, the polymer electrolyte can be swollen so that the thickness in a swollen state of the polymer electrolyte is 120% or more of that in a dry state thereof, the polymer electrolyte may be swollen using the good solvent only or a mixed solvent containing the good solvent. By swelling the polymer electrolyte, the degree of crystallinity of the polymer electrolyte is reduced and particularly entanglement of side chains having a functional group is relaxed, increasing the degree of freedom of segment movements for the side chains.

Thus, a capacitor comprising an electrolyte between metal electrodes opposite to each other obtained by the nonelectrolytic plating process having the swelling step as a pretreatment step can be considered capable of obtaining a larger displacement due to more efficient movement of ions.

There is no particular restriction on the mixing ratio of a good solvent to other solvents in a mixed solvent containing the good solvent of the polymer electrolyte as long as the mixed solvent is obtained by mixing the good solvent with other solvents in any proportion and the polymer electrolyte can be swollen so that the thickness in a swollen state of the polymer electrolyte is 120% or more of that in a dry state thereof. The other solvents are different solvents from the good solvent of the polymer electrolyte in use and can be water or any organic solvent if a stable mixed state with the good solvent can be maintained. If, however, the adsorption step to be performed after the swelling step is performed in a metal complex solution, water is preferable because adsorption of the metal complex such as metal complex deposition is not inhibited. If the polymer electrolyte is perfluorocarboxylic acid resin or perfluorosulfonic acid resin, and a good solvent or a mixed solvent containing the good solvent, which is a swelling solvent for swelling the polymer electrolyte, is a mixed solvent containing methanol and water, methanol is preferably contained 5-100% by weight in the swelling solvent to obtain a larger capacitance. If the perfluorocarboxylic acid resin or perfluorosulfonic acid resin has an ion exchange capacity of 1.8 meq/g, methanol is more preferably contained 5-40% by weight in the swelling solvent to easily obtain a large swelling. If the perfluorocarboxylic acid resin or perfluorosulfonic acid resin has the ion exchange capacity of 1.4 meq/g, methanol is still more preferably contained 100% by weight in the swelling solvent.

If, in the swelling step, a swollen polymer electrolyte has a predetermined shape and the polymer electrolyte can be swollen so that the thickness in a swollen state of the polymer electrolyte is 120% or more of that in a dry state thereof, there is no particular restriction on means for infiltrating a good solvent or a mixed solvent containing the good solvent into the polymer electrolyte. The polymer electrolyte may be immersed in a good solvent or a mixed solvent containing the good solvent, or the good solvent or the mixed solvent containing the good solvent may be applied to the surface of the polymer electrolyte. However, it is preferable to use a method for immersing the polymer electrolyte in the good solvent or the mixed solvent containing the good solvent due to ease of workability.

### (Second step)

The second step in the manufacturing method of capacitor of the present invention is a step to form a metal electrode on the swollen polymer electrolyte by the nonelectrolytic plating process. In the nonelectrolytic plating process, the adsorption step to cause the polymer electrolyte to adsorb the metal complex is performed and then the reduction step to bring the reduction solution into contact with the polymer electrolyte on which the metal complex is adsorbed is performed. By performing the reduction step after performing the adsorption step, the metal complex is reduced and deposited on the polymer electrolyte as metal and metal electrodes are formed to provide a capacitor. By performing the nonelectrolytic plating process after the swelling step for the polymer electrolyte, metal electrodes having projecting portions described above on the polymer electrolyte are efficiently formed by the manufacturing method of the capacitor of the present invention, that is, by performing, after performing the swelling step, as a pretreatment step for the nonelectrolytic plating to the polymer electrolyte, in which a good solvent or a mixed solvent containing the good solvent is infiltrated into the polymer electrolyte to swell the polymer electrolyte so that the swollen polymer electrolyte has a predetermined shape and the thickness in a swollen state of the polymer electrolyte is 120% or more of that in a dry state thereof, the adsorption step to cause the polymer electrolyte to adsorb the metal complex and the reduction step to bring the reduction solution into contact with the polymer electrolyte on which the metal complex is adsorbed.

### (Adsorption step)

There is no particular restriction on the adsorption step in the second step as long as the polymer electrolyte has a predetermined shape and the step causes the polymer electrolyte to adsorb a metal complex. The adsorption step may be performed by applying the metal complex solution to the polymer electrolyte, but it is preferable to immerse the polymer electrolyte in the metal complex solution due to ease of work.

There is no particular restriction on the metal complex solution in the adsorption step as long as a complex of metal capable of functioning as an electrode is contained in metal formed by reduction. There is no particular restriction on the metal complex as long as the metal can assure conductivity and the metal complex can be used as nonelectrolytic plating.

Conditions such as temperature and immersion time for the adsorption step are not particularly limited as long as the step causes the polymer electrolyte to adsorb a metal complex, but the temperature of 20 °C or higher is preferable for efficient swelling.

In the adsorption step, the metal complex solution may contain a good solvent of the polymer electrolyte to facilitate adsorption of the metal complex into the polymer electrolyte.

### (Reduction step)

The reduction step of the present invention is a step to deposit metal by reducing the metal complex adsorbed on the polymer electrolyte in the adsorption step. There is no particular restriction on the reduction solution used for the present invention as long as a reducing agent is dissolved regardless of the shape of the polymer electrolyte. The type of the reducing agent can be selected and used appropriately based on the type of the metal complex used in the metal complex solution adsorbed into the polymer electrolyte and, for example, sodium sulfite, hydrazine, and sodium borohydride can be used. When reducing the metal complex, acid or alkali may be added if necessary. There is no particular restriction on the concentration of the reduction solution as long as a sufficient quantity of reducing agent is contained to obtain a quantity of metal to be deposited by reducing the metal complex, but the concentration equal to that of a metal complex solution used for forming an electrode by conventional nonelectrolytic plating may also be used. A good solvent of the polymer electrolyte may also be contained in the reduction solution.

The capacitance in the interface between the metal electrode and polymer electrolyte can be made larger than a conventional value by repeating the adsorption step and the reduction step, which belong to the second step. When, according to the present invention, the adsorption step and the reduction step are performed alternately and repeatedly, a capacitor with still a larger capacitance can easily be obtained by repeating a pair of step in which the reduction step is performed after the adsorption step is performed preferably twice or more, or more preferably four times or more.

When the adsorption step and the reduction step are performed repeatedly, it is preferable to perform a washing step after the reduction step and perform the adsorption step after the washing step to facilitate adsorption of the metal complex in the adsorption step by removing the reducing agent from the polymer electrolyte. There is no particular restriction on the washing step and it is easy and convenient to remove the reducing agent by simply washing in cold water.

A capacitor with metal electrodes formed on a polymer electrolyte obtained through the second step, an nonelectrolytic plating process, after performing the first step, the swelling step, has a larger capacitance of the electrode layer than a conventional capacitor with electrodes formed as electrode layers.

In the metal electrodes of the capacitor obtained by the nonelectrolytic plating process, a cross section of the metal electrodes forms a structure more uneven than a conventional fractal structure in the interface between the polymer electrolyte and metal electrodes and, even when the polymer electrolyte contracts after obtaining a capacitor, the fractal structure formed during swelling is considered to retain the shape thereof.

If the second step is performed after the first step, the metal complex penetrates into the inner part of the polymer electrolyte as described above to become particle-like metal by the reduction step and the particle-like metal is linked to each other to form a metal electrode on an electrolyte. Since the metal electrode is formed in this way on the polymer electrolyte of a capacitor of the present invention, the interface between the metal electrode and electrolyte layer is not necessarily distinct. There is an area rich in metal components near the outside of the polymer electrolyte and a structure in which electrolyte components gradually become richer toward the center of the electrolyte could be set up. That is, the metal electrode of the capacitor of the present invention does not have to exist as a distinct layer on the electrolyte and instead a conductive portion, which can be used as an electrode, formed by linking at least metal existing near the outside of the electrolyte to each other is sufficient. Therefore, the capacitor of the present invention may have a structure without a distinct interface by visual inspection between the metal electrode and electrolyte, wherein an electrolyte portion having resistance as an electrolyte is sandwiched by both conductive portions containing metal as a primary component, which can be used as an electrode.

Therefore, according to the manufacturing method of capacitor of the present invention, if a cross section of a capacitor is observed in the thickness direction of the capacitor, by undergoing the first and second steps, observations described below are made: the metal electrode has a shape with projecting portions, the projecting portions have a bay-like insertion portion, and the shape of the projecting portions is, for example, like the aforementioned fractal structure or a peninsula.

### (Third step)

The third step is a step in which a capacitor with at least a polymer electrolyte between metal electrodes opposite to each other, preferably a capacitor with projecting portions on both metal electrodes directed toward the inner polymer electrolyte in a cross section along the thickness direction of the capacitor after undergoing the first and second steps, is electrolyzed in liquid to generate bubbles inside the capacitor, thereby deforming the polymer electrolyte to create a space part inside the polymer electrolyte.

The liquid used for electrolysis is preferably water or a mixture of water and alcohols. The alcohols refer to alcohol such as methanol, ethanol, and propanol. Using lower alcohol is economical, but higher alcohol may also be used. A voltage of 3-12 V is preferable for the electrolysis. If the voltage is too low, no electrolysis of the liquid occurs. If, on the other hand, the voltage is too high, the capacitor may be affected unfavorably.

Gas is generated inside the capacitor by electrolyzing the liquid. The generated gas applies pressure on the polymer electrolyte existing around the gas, deforming the polymer electrolyte. Since the metal electrodes also receive pressure to the outside from the generated gas, the capacitor as a whole will become thicker. Since a space part is created inside the polymer electrolyte by such a mechanism, the shape of the space part is indefinite and tends to take an approximate circular shape or an approximate semicircular shape. If, however, the quantity of generated gas is increased by increasing the voltage, the space part becomes larger and the polymer electrolyte may be observed as if to exist on a pole inside the capacitor.

### (Ionic species exchange step)

A step to exchange ionic species may be provided after the second step or third step when an ion exchange resin is used as the polymer electrolyte. The ionic species contained in the polymer electrolyte after the second step derives from the reduction solution used in the reduction step. For example, the ionic species when sodium sulfite is used as the reduction solution is sodium ions. Therefore, a step to exchange adhered ionic species for a desired ionic species in a capacitor can be provided. To exchange for the desired ionic species, immerse the polymer electrolyte in a solution containing the desired ionic species for 12 hours or longer to completely exchange ions.

If the aforementioned ionic species exchange step is not undergone, it is still possible to exchange for the desired ionic species by, prior to the fourth step to be described later, immersing the polymer electrolyte with metal electrodes that has undergone the third step in a solution obtained by mixing the desired ionic species with polar liquid.

### (Drying step)

Since the polymer electrolyte with the metal electrodes that has undergone the aforementioned steps has a moisture content, if nonaqueous polar liquid is used as a capacitor solvent, the capacitor must be dried up to remove the moisture content before filling in polar liquid in the fourth step. The drying step can be performed more efficiently by vacuum drying.

### (Fourth step)

The fourth step is a step in which the polymer electrolyte with metal electrodes obtained through the third step is filled with the polar liquid (liquid electrolyte) containing ionic material to produce a capacitor of the present invention. Concrete examples of ionic electrolyte and the polar liquid used in this step are as described above. By immersing the polymer electrolyte with formed metal electrodes obtained through the third step in the liquid electrolyte, the space part of the polymer electrolyte can be filled with the liquid electrolyte.

### (Third embodiment)

A method for efficiently manufacturing a capacitor according to a third embodiment, which is a further application of the present invention, will be described. The capacitor according to the third embodiment of the present invention can be manufactured also by preparing two sheets of substrate with bonded porous electrodes and sandwiching an electrolyte with the porous electrodes. However, according to the present manufacturing method, a bonding step to bond the porous electrodes and the substrate using, for example, a binder is needed after preparing the porous electrodes, leading to higher costs. The capacitor obtained as described above is inferior in integrity between the substrate and porous electrodes. Thus, it is preferable to manufacture a capacitor using a manufacturing method comprising at least first and second steps shown below.

### (First step)

The first step is a step in which an electrode-laminated substrate is obtained by laminating porous metallic electrodes on the surface of a substrate using electrolytic plating or nonelectrolytic plating process. Since the bonding step can be left out if the first step is performed, a capacitor of the present invention can efficiently be manufactured. The electrode-laminated substrate obtained through the first step is superior in integrity between the substrate and porous electrodes. Therefore, a capacitor obtained using the electrode substrate is also preferable because it is superior in integrity between the substrate and porous electrodes.

Particularly if the nonelectrolytic plating process is used in the first step, choices can be made from a wider range of substrate because nonconductive material can also be selected as a substrate. It is also allowed to perform electrolytic plating after providing conductivity on the surface by performing nonelectrolytic plating.

By adjusting plating conditions, instead of plating of glossy metal, plating to form lusterless porous metal can be provided using the electrolytic plating or nonelectrolytic plating process. More specifically, in the case of electrolytic plating, porous metal is more likely to be formed by preparing a roughened surface for plating and making the voltage of the plating conditions higher than that of plating conditions for ordinary glossy plating to increase a plating rate. According to the nonelectrolytic plating process, on the other hand, porous metal can easily be formed. The nonelectrolytic plating is normally performed by reducing metal complex adsorbed on a substrate surface by a reducing agent to deposit metal on the substrate surface. To form porous metal on the substrate surface, prepare the substrate surface as a roughened surface and use more reducing material than normal, for example, more than double to make formation of porous metal.

### (Second step)

A capacitor according to the third embodiment of the present invention can be manufactured through the second step in which, after preparing two sheets of the electrode-laminated substrate in the first step, a desired electrolyte is sandwiched by both plates, with an electrode-laminated surface on which porous metal of the electrode-laminated substrate is laminated directed toward an inner side.

### [Capacitor structure]

### [First embodiment]

A capacitor according to the first embodiment of the present invention efficiently obtainable by the manufacturing method of the capacitor has a fractal structure with large unevenness in a cross section of metal electrodes formed in the interface between the polymer electrolyte and the metal electrodes, which is a metal layer, and a large capacitance can be obtained if the metal layer formed on the polymer electrolyte is used as an electrode layer. That is, the obtained capacitor is a capacitor according to the present invention and a capacitor containing a polymer electrolyte sandwiched by two electrode layers and a capacitor whose capacitance in the interface between the electrode layer and polymer electrolyte layer is 3 mF/cm² or more by the cyclic voltammetry method.

The capacitor is also a capacitor whose capacitance is 2 F/cm³ or more by the constant current discharge method. There is no particular restriction on the thickness of a capacitor of the present invention. A capacitor of the present invention has a weak leakage current and is superior to a conventional capacitor in temperature characteristics and durability.

### (Metal electrode)

There is no particular restriction on metal electrode material usable for a capacitor of the present invention, but if water is used as a solvent for the polymer electrolyte, it is preferable to use a noble metal such as gold, platinum, and palladium for the metal electrode. If, on the other hand, high-boiling nonaqueous polar liquid is used as a solvent for the capacitor, other metal material than the above one can also be suitably used. For example, metals such as cobalt, nickel, copper, ruthenium, rhodium, palladium, silver, cadmium, indium, tin, antimony, platinum, gold, lead, and bismuth capable of nonelectrolytic deposition, and metals such as boron, nitrogen, vanadium, chrome, manganese, iron, zinc, molybdenum, tungsten, rhenium, and titan capable of nonelectrolytic deposition in coexistence with other metals, though not capable of nonelectrolytic deposition alone can also be suitably used. Among others, indium, lead, zinc, tin, cadmium, bismuth, antimony, copper, silver, iron, nickel, and titan are preferable. Particularly preferable are tin, copper, iron, and nickel. These metals can be used also as an alloy. If water is used as a solvent for the capacitor and a rust-prone metal such as iron, copper, silver, and aluminum other than the aforementioned noble metals is used for electrodes, such a metal can still be used for the electrodes by providing publicly known rust prevention treatment such as an oxide layer.

### (Metal electrode shape)

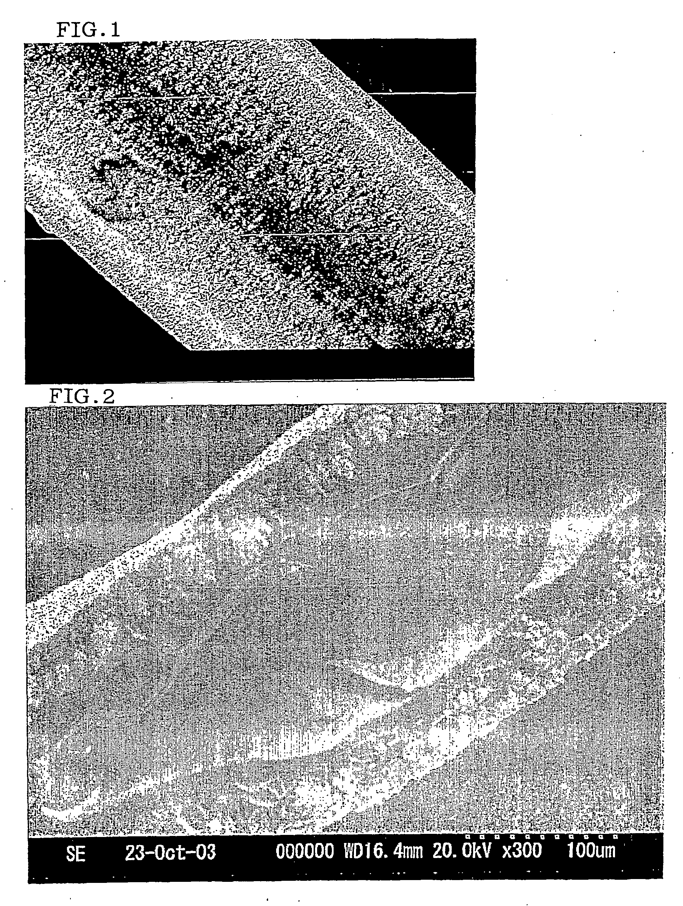

Since a capacitor of the present invention has the metal electrodes as described above, if a cross section of the capacitor of the present invention is observed in the capacitor thickness direction using a scanning electron microscope (SEM), both metal electrodes existing approximately parallel and opposite to each other can be observed with projecting portions from outside the electrolyte to the center thereof in shape such as a fractal shape, curved shape, peninsular shape, icicle shape, tree shape, needle-leaf tree shape, mushroom shape, polyp shape, and coral shape. FIG. 1 shows, as an embodiment of a capacitor of the present invention, an SEM photo of observation of a cross section along the thickness direction of the capacitor. Whitish portions are metal components and a dark portion sandwiched by the metal components is a polymer electrolyte.

Both metal electrodes are about 160 µm apart. In the capacitor in FIG. 1, it is evident that projecting portions exist with metal components in the metal electrode layer directed toward the polymer electrolyte in an icicle shape or needle-leaf tree shape. An outside metal electrode generated during manufacture of capacitor is not connected to the polymer electrolyte layer used for the capacitor of the present invention, as is evident from FIG. 1, and particle-like metal portions that do nor form a metal electrode may exist.

### (Porous metal membrane)

Metal electrodes used for a capacitor of the present invention has the projecting portions in a boundary region with the polymer electrolyte and a porous metal membrane existing in contact with the surface of the polymer electrolyte, and the porous metal membrane and the projecting portions may be linked and integrated to form a metal electrode.

Since the porous metal membrane of the metal electrodes according to this embodiment is used as part of the metal electrodes of the capacitor together with the projecting portions by forming the porous metal membrane in contact with the surface of the polymer electrolyte, it is preferable to form the porous metal membrane using the polymer electrolyte as a substrate in the manufacturing stage.

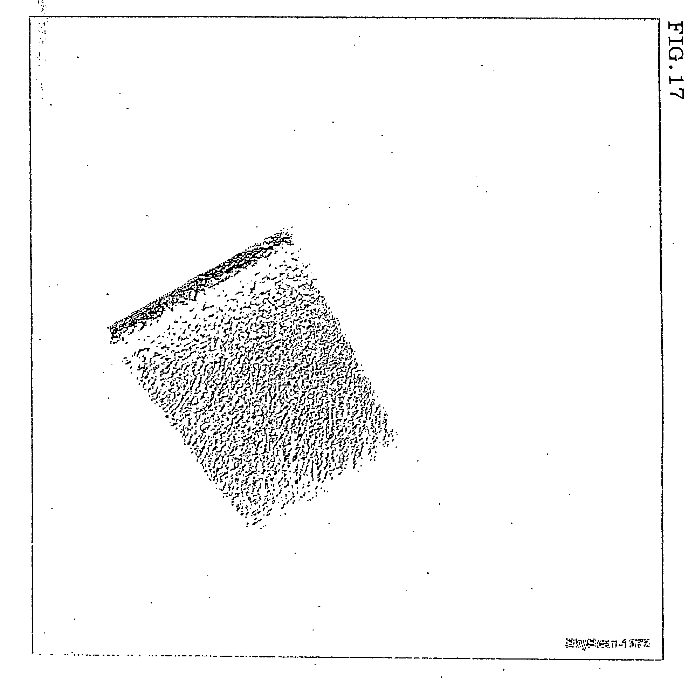

FIG. 16 is an electron microscope photo taken by SEM of a cross section along the thickness direction according to the embodiment of a capacitor of the present invention. FIG. 16 shows an SEM photo taken under magnification of 500x of a capacitor of the present invention with the thickness of 160 µm. A porous metal membrane 403 is formed on the polymer electrolyte surface of the metal electrodes of a capacitor 401 and a projection portion 402 is formed by penetrating into the inner part of the polymer electrolyte.

To manufacture a capacitor with the metal electrodes according to this embodiment, first deposit a plurality of metallic particles on the polymer electrolyte surface and then grow the metallic particles to form a projecting portion in a boundary region with the polymer electrolyte by metallic bond among metallic particles, and at the same time a porous metal membrane on the polymer electrolyte surface. Since, in a capacitor with such a porous metal membrane, the metal electrodes and the polymer electrolyte in an interface bind strongly, electrons in the interface can be moved smoothly, allowing preferable characteristics as a capacitor to be demonstrated.

In contrast to a capacitor obtained by bonding metal electrodes and a polymer electrolyte (or a separator) using, for example, a binder or a capacitor not bonded with a separator like many winding types and laminating types, a capacitor manufactured by the above manufacturing method has strong binding in the interface between the polymer electrolyte and porous metal membrane. That is, with improved integrity as a capacitor, mechanical strength is improved. Whether binding between the polymer electrolyte and porous metal membrane can be determined by measuring tensile strength between the electrodes and polymer electrolyte.

### (Polymer electrolyte)

There is no particular restriction on the polymer electrolyte as long as the electrolyte is formed mainly with polymers, but an ion exchange resin is preferable to adsorb a sufficient amount of metal complex. Containing the ion exchange resin as resin components in the polymer electrolyte is also preferable because the polymer electrolyte functions as a capacitor without containing a large amount of solvent molecules even in a swollen state and provides larger capacitances than a conventional one. There is no particular restriction on the ion exchange resin and any publicly known resin can be used; for example, polyethylene, polystyrene, or fluororesin with an introduced hydrophilic functional group such as a sulfonic group or carboxyl group can be used. Perfluorocarboxylic acid resin and perfluorosulfonic acid resin as concrete examples of the ion exchange resin can be used and, for example, Nafion resin (perfluorocarboxylic acid resin, DuPont) and Fleomin (perfluorocarboxylic acid resin or perfluorosulfonic acid resin, manufactured by Asahi Glass Co., Ltd.) can be used. Among the ion exchange resins, a cation exchange resin is preferable because the cation exchange resin has a greater degree of freedom to choose ion types of electrolyte salts and thus a wider range of combinations according to uses and characteristics can be chosen. Since, as the polymer electrolyte, a polymer electrolyte formed product in a shape suitable as a capacitor shape obtained from the nonelectrolytic plating process can be used, desired shapes such as a filmy shape, tabular shape, tubular shape, pillar shape, and solenoidal shape can be chosen.

### (Electrolyte)

The polymer electrolyte of a capacitor of the present invention is in a state swollen by a solution containing ions. The electrolyte may be an organic electrolyte or an aqueous electrolyte. The polymer electrolyte may contain solvent molecules of the electrolyte to some extent.

If the polymer electrolyte of a capacitor of the present invention is in a state swollen by the solution containing ions, the ions are not particularly limited. If resin components of the polymer electrolyte are a cation exchange resin, as cations contained in the solution containing the ions, tetraalkyl ammonium ions with an alkyl group whose carbon number is in a range of 1-4 such as (C₂N₅)₄N⁺, (C₂N₅)₃(CN₃)N⁺, and (CN₃)₄N⁺, tetraalkyl phosphonium ions such as (C₂N₅)₄P⁺, univalent ions with a small volume such as H⁺, Li⁺, Na⁺, K⁺, Rb⁺, Cs⁺, and Fr⁺, and furthermore divalent and trivalent ions such as Cu²⁺, Ni²⁺, Co²⁺, Fe²⁺, Fe³⁺, Al²⁺, Al³⁺, Zn²⁺, Pb²⁺, Sn²⁺, Mg²⁺, Ca²⁺, Sr²⁺, and Ba²⁺, and Cr can be used. Among others, small-sized ions (C₂N₅)₄N⁺, (C₂N₅)₃(CN₃)N⁺, (C₂N₅)₄P⁺H⁺, and Li⁺ can suitably be used. Because the ions are small-sized, capacitance of the capacitor of the present invention can be made larger. If, on the other hand, the solution to swell the polymer electrolyte of the capacitor of the present invention is a solution containing anions, BF₄⁻, PF₆⁻, ClO₄⁻, Ts⁻, SO₄²⁻, NO₃⁻, Cl⁻, Br⁻, I⁻, CFaSO₄⁻, C₄F₉SO₄⁻, (CF₃SO₂)₂N⁻, BCH₃(C₂N₅)₄⁻, B(C₂N₅)₄⁻, B(C₄N₉)₄⁻, AsF⁻, and SbF₆⁻ can be used as anions. Among others, ClO₄⁻ and (CF₃SO₂)₂N⁻ are preferable and (CF₃SO₂)₂N⁻ is particularly preferable. Ionic liquid (cold fused salt) can also be used as a solution containing ions. Among others, imidazolium salt of the amidine electrolyte is preferable and Li(CF₃SO₂)₂N, H(CF₃SO₂)₂N, and borohydrofluoric acid amidine salt are particularly preferable.

Water can be used as a solvent used as a solution to swell the polymer electrolyte of capacitor elements of the present invention. However, if water is chosen as a solvent, it is preferable to use a noble metal for the electrodes, as described above, to prevent ionization of metals in charging and discharging steps of the capacitor. Nonaqueous polar liquid can also be used as a solvent. If nonaqueous polar liquid with high permittivity and decomposition voltage is chosen as a solvent, withstand voltage becomes higher and energy density increases because a potential window becomes wider and electrolysis is more unlikely to occur, leading to electrochemical stability. Furthermore, if nonaqueous polar liquid is chosen as a solvent, other metals than the noble metal that are hard to use as an electrode of a capacitor when water is used as a solvent can now be used and is also favorable in terms of cost.

More specifically, propylene carbonate, N-methylpyrolidone, dimethylsulfoxide, acetonitrile, N,N-dymethylformamide, N-methylformamide, tetrahydrofuran, hexametylphosphoric triamide, γ-butyrolactone, 1,2-dimethoxyethane, N-methylacetamide, sulfolane ethylene carbonate, glutarnitrile, adiponitrile, nitromethane, nitroethane, and pyridine can be used. Preferably, propylene carbonate, n-methylpyrolidone, dimethylsulfoxide, N-methylformamide, and γ-butyrolactone, and more preferably nonaqueous polar liquid such as propylene carbonate, N-methylformamide, γ-butyrolactone, and 1,4-dioxolane can be used, and propylene carbonate can be cited as a particularly preferable polar liquid.

### (Capacitance)

An upper limit of the capacitance of a capacitor of the present invention is not limited as long as the capacitance is 3 mF/cm² or more by the cyclic voltammetry method or 2 F/cm³ or more by the constant current discharge method. A larger value of the capacitance of the metal electrode layer of the capacitor is suitable for practical uses because the capacitor capacity increases with the capacitance. Since the capacitor can be used for more practical uses, the capacitance is preferably 5 mF/cm² or more by the cyclic voltammetry method, and more preferably 10 mF/cm² or more. In terms of the constant current discharge method, the capacitance is preferably 10 F/cm³ or more, and more preferably 20 F/cm³ or more. Using the capacitor of the present invention, a capacitor with a large capacity of 3 mF/cm² or more by the cyclic voltammetry method can be obtained even if the capacitor is 160 µm thick in terms of dry film thickness. The capacitor of the present invention is also superior in energy efficiency because conventional capacitance can be obtained at a lower applied voltage. To obtain a value of capacitance in terms of the dry film thickness 160 µm of the capacitor, multiply a value of an electric double layer obtained by measurement by a value (160/d) obtained by dividing 160 µm by the thickness (d) [µm] of the capacitor used for the measurement.

Capacitances of capacitor of this application are values of capacitance measured by the cyclic voltammetry method with two electrodes and the constant current discharge method.

In the case of the cyclic voltammetry method with two electrodes, the capacitance of the capacitor can be obtained as a value in a third cycle under measurement conditions of the voltage in the range of -0.5 V to +0.5 V and a scanning voltage rate of 10 mV/sec.

When the constant current discharge method is used, on the other hand, the capacitance of the capacitor is a value by conforming to the Standard No. EIAJ RC-2377 (established in April 2000, Test method of an electric double layer capacitor, 3.3.1 Constant current discharge method) of the Japan Electronics Industries Association Standard issued by Electronic Industries Association of Japan.

### [Second embodiment]

The capacitor according to the second embodiment of the present invention that can efficiently be obtained by the aforementioned manufacturing method of the capacitor is a capacitor comprising at least an ionic material, polar liquid, and polymer electrolyte between metal electrodes opposite to each other characterized in that metal electrodes have projecting portions, which are in contact with the polymer electrolyte and form electrode components of the polymer electrolyte, in a boundary region with the polymer electrolyte, and the polymer electrolyte has a space part. A capacitor with such characteristics has an increased contact surface area in an interface between the metal electrodes and the polar liquid including the ionic material or the polymer electrolyte due to the projecting portions formed on the metal electrodes, and ions forming the electric double layer increase by filling particularly the space part with the liquid electrolyte comprising the polar liquid containing concentrated ionic material. This greatly improves an electric capacity as a capacitor. The polymer electrolyte contributes also to formation of an electric double layer. Even if a capacitor structure is unstable with a liquid electrolyte only, the capacitor structure can become stable because the polymer electrolyte has a fixed form.

### (Metal electrode)

Any electrode used for a capacitor of the present invention can be used without limitation as long as the electrode has excellent conductivity. For example, in addition metals, carbon, conductive polymers, and conductive polymers containing carbon powder and metallic powder distributed therein may also be used. According to a manufacturing method of a capacitor of the present invention described later, however, the electrode is prepared as a metal electrode. If any polar liquid other than water is used as a capacitor solvent, the capacitor of the present invention can be used regardless of the type of metal. For example, the capacitor can suitably be used with such metals as cobalt, nickel, copper, ruthenium, rhodium, palladium, silver, cadmium, indium, tin, antimony, platinum, gold, lead, bismuth, boron, nitrogen, vanadium, chrome, manganese, iron, zinc, molybdenum, tungsten, rhenium, and titan.

Among others, indium, lead, zinc, tin, cadmium, bismuth, antimony, copper, silver, iron, nickel, and titan are preferable. Particularly preferable metals are tin, copper, iron, and nickel. These metals can be used also as an alloy. If, on the other hand, water is used as the polar liquid, from the perspective of chemical stability, it is preferable to use a noble metal gold, platinum, or palladium as a metal to be used for the metal electrode, and among others, gold is particularly preferable.

Metal electrodes of the present invention have, when a cross section of the capacitor is observed in the thickness direction of the capacitor, projecting portions directed toward the inner part. With the metal electrodes having such projecting portions, the capacitor capacity improves with the increased contact area with the polymer electrolyte or liquid electrolyte. These projecting portions can take on various aspects. For example, the contact area can be increased with the projecting portions having a bay-like insertion portion. The projecting portions can increase the contact area by taking on various shapes. Examples of the shapes of the projecting portions of the metal electrodes that have such an effect will be shown.

The projecting portions in the boundary region with the polymer electrolyte can take the shape of a narrow bay portion into which the polymer electrolyte penetrates in a cross section along the thickness direction. That is, this is a shape that appears as if the polymer electrolyte is penetrating into the metal electrodes. The narrow bay portion may be formed linearly, but it is preferable to form the narrow bay portion with curves or bending. Particularly the above capacitor preferably has a projecting shape from around the surface of the capacitor toward the inner part in a part sandwiched by the narrow bay portions. By providing a projecting shape for the part sandwiched by the narrow bay portions, the interface between the polymer electrolyte and polarized electrodes becomes wider and the capacitance of the capacitor can be improved. A borderline of the part sandwiched by the narrow bay portions may be like an approximate cyclic curve or indeterminate, and because the interface between the polymer electrolyte and polarized electrodes becomes wider, the borderlines may also be curved or bending. If a part sandwiched by the narrow bay portions having the projecting shape is recognized as the projecting portion, the present invention may be recognizable as a capacitor comprising the polymer electrolyte and polarized electrodes characterized in that, in a cross section along the thickness direction of the capacitor, the metal electrodes have projecting portions, which are in contact with the polymer electrolyte and form electrode components of the polarized electrodes, in a boundary region with the polymer electrolyte.

The projecting portions may take the shape of a fractal. As typical shapes of fractals, for example, the shapes of Koch curves, trees curves, vein curves, fern-leaves, and gaskets can be illustrated. The projecting portions may take the shape of a peninsula. The peninsular shape may be crescentic or bell-shaped, as long as components forming the polarized electrodes project into the polymer electrolyte and have a certain level of spread. The projecting portions may take the shape having a neck-like narrow section in an insular part. A shape of an insular part with a certain level of spread having a neck-like narrow section whose width is narrower than that of the insular part is sufficient for the shape having a neck-like narrow section in an insular part in a peninsular shape. There is no particular restriction on the insular part as long as it has a certain level of spread, and may be approximately circular or elliptical, or polygonal including triangular and quadrangular. The projecting portions may take the shape of a tree. The tree shape may have the spread of a broad-leaf tree or has heights with an acute-angled tip like a needle-leaf tree on projecting portions' flanks. The projecting portions may take the shape of a mushroom. The shape of a mushroom may be like an open umbrella or a closed umbrella looking like a bud. The projecting portions may take the shape of an icicle. There is no particular restriction on the shape of icicle as long as the tip of the projecting portions is formed at an acute angle, and an overall shape may be linear, distorted, or curved. The projecting portions may take the shape of a polyp. There is no particular restriction on the shape of polyp as long as there is a protuberance and may be, for example, warty, styloid, or have a cave-in near a top part of a warty protuberance. The projecting portions may take the shape of a coral. There is no particular restriction on the shape of coral and tubular or tentacle-like electrode components may form a lump.

The projecting portions only need to be, in a cross section along the thickness direction, in a boundary region with the polymer electrolyte and there is no particular restriction on a position of the cross section along the thickness direction of the capacitor. Therefore, as long as a capacitor of the present invention has the projecting portions in a cross section along the thickness direction, a shape of the projecting portions in one cross section and that of the projecting portions in another cross section need not match.

Many of the projecting portions are found in the boundary region and the shapes thereof are diverse. The cross section preferably has the projecting portion in any position in the thickness direction of the capacitor. However, linearly in a cross section along the thickness direction, a part having no projecting portion may be formed intentionally or accidentally by, for example, forming a passage of solvent contained in the polymer electrolyte.

In each cross section of the same capacitor, shapes of the projecting portions of a capacitor of the present invention do not have to match in details thereof. That is, the projecting portions are three-dimensional and in observations through a cross section, each time a cross section of part thereof is observed. There is no particular restriction on the shape of three-dimensional projecting portions as long as the projecting portions can be formed in a cross section along the thickness direction. The three-dimensional projecting portions may be formed in an incisor shape, a canine shape, a premolar shape, a molar shape, a bolt shape, a tree shape, a mushroom shape, an icicle shape, a coral shape, or a shape having a neck-like narrow section in an capitate part.

### (Porous metal membrane)

Like the capacitor according to the first embodiment of the present invention, the metal electrodes used for the capacitor according to the second embodiment of the present invention have the projecting portion in the boundary region with the polymer electrolyte and the porous metal membrane existing in contact with the surface of the polymer electrolyte, and the porous metal membrane and the projecting portions may be linked and integrated to form a metal electrode.

### (Polymer electrolyte)

There is no particular restriction on the polymer electrolyte as long as the electrolyte is formed mainly with polymers and has a certain level of shape maintainability to maintain the fixed form thereof. However, if a capacitor of the present invention is manufactured by a manufacturing method of the present invention described later, an ion exchange resin is preferable from the standpoint of adsorbing a sufficient amount of metal complex for forming a metal electrode. There is no particular restriction on the ion exchange resin and any publicly known resin can be used; for example, polyethylene, polystyrene, or fluororesin with an introduced hydrophilic functional group such as a sulfonic group or carboxyl group can be used.

Perfluorocarboxylic acid resin and perfluorosulfonic acid resin as concrete examples of the ion exchange resin can be used and, for example, Nafion resin (perfluorocarboxylic acid resin, DuPont) and Fleomin (perfluorocarboxylic acid resin or perfluorosulfonic acid resin, manufactured by Asahi Glass Co., Ltd.) can be used. Among the ion exchange resins, a cation exchange resin is preferable because the cation exchange resin has a greater degree of freedom to choose ion types of electrolyte salts and thus a wider range of combinations according to uses and characteristics can be chosen. Since, as the polymer electrolyte, a separable polymer electrolyte formed product can be used, desired shapes such as a filmy shape, tabular shape, tubular shape, pillar shape, and solenoidal shape can be chosen.

### (Space part)

A capacitor of the present invention contains polar liquid containing ionic material and the polar liquid becomes a liquid electrolyte to form, like a polymer electrolyte, an electric double layer in the capacitor. Therefore, the polymer electrolyte according to the present invention must maintain the liquid electrolyte. Thus, the polymer electrolyte in the capacitor of the present invention preferably has a space part to facilitate maintenance of the liquid electrolyte. From this, the space part according to the present invention is a site of the polymer electrolyte where a certain amount of the liquid electrolyte can be filled in.

The space part of the polymer electrolyte is preferably in an approximate circular shape or an approximate semicircular shape in a cross section along the thickness direction of the capacitor to facilitate movement of the liquid electrolyte and improve capacitance. Moreover, at least in one of the approximate circular or approximate semicircular space parts contained in the polymer electrolyte, a shortest value in diameter of the approximate circle or approximate semicircle is preferably 10 nm or more. Still preferably, 1 µm. If a corresponding radius is too small, no increase of capacitance resulting from movement of the liquid electrolyte can be expected. If the diameter is made larger, the volume of the space part increases and mobility of the liquid electrolyte becomes greater, which is preferable, but it becomes harder to maintain the fixed form of the capacitor. Affected also by limitations resulting from a size of the capacitor itself, the shortest value of the diameter of the approximate circle or approximate semicircle becomes maximally equal to or below the thickness between the metal electrodes. Moreover, it is preferable that a plurality of such approximate circular or approximate semicircular space parts exist in the polymer electrolyte. This is because, with a plurality of such space parts in the polymer electrolyte, more liquid electrolyte can be filled in while an effect of the capacitor fixed form of the polymer electrolyte is maintained.

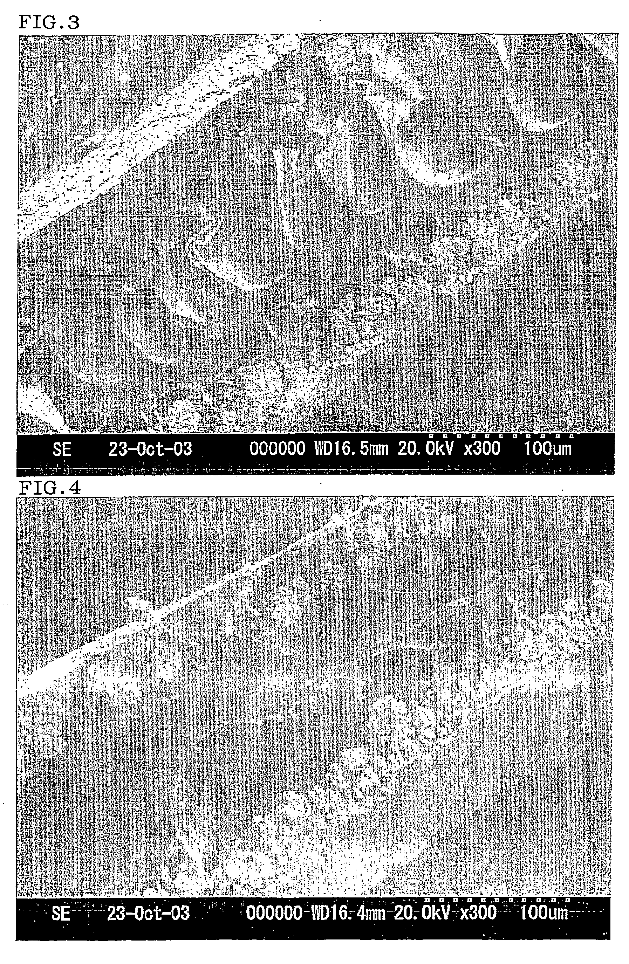

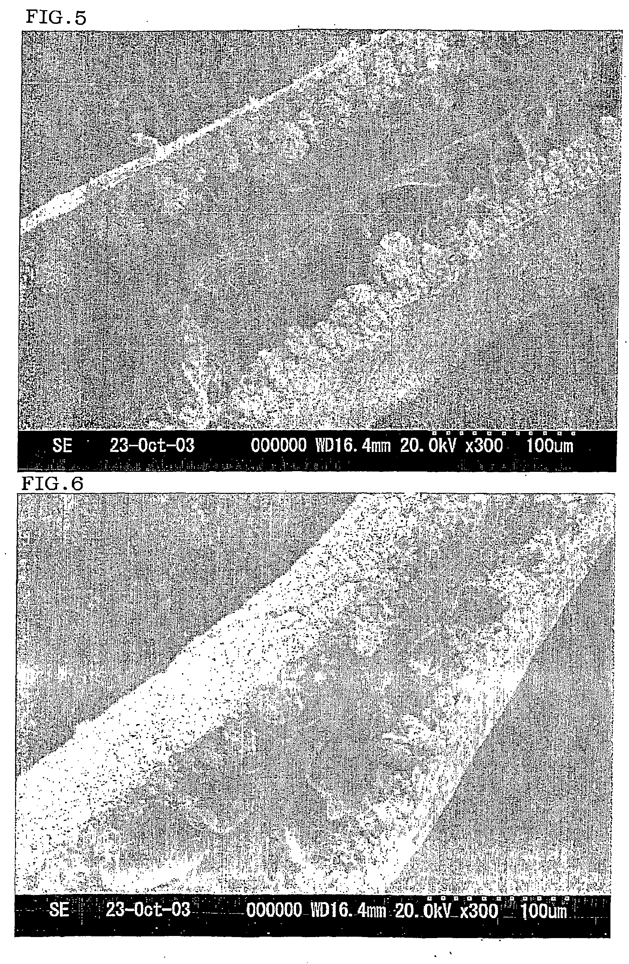

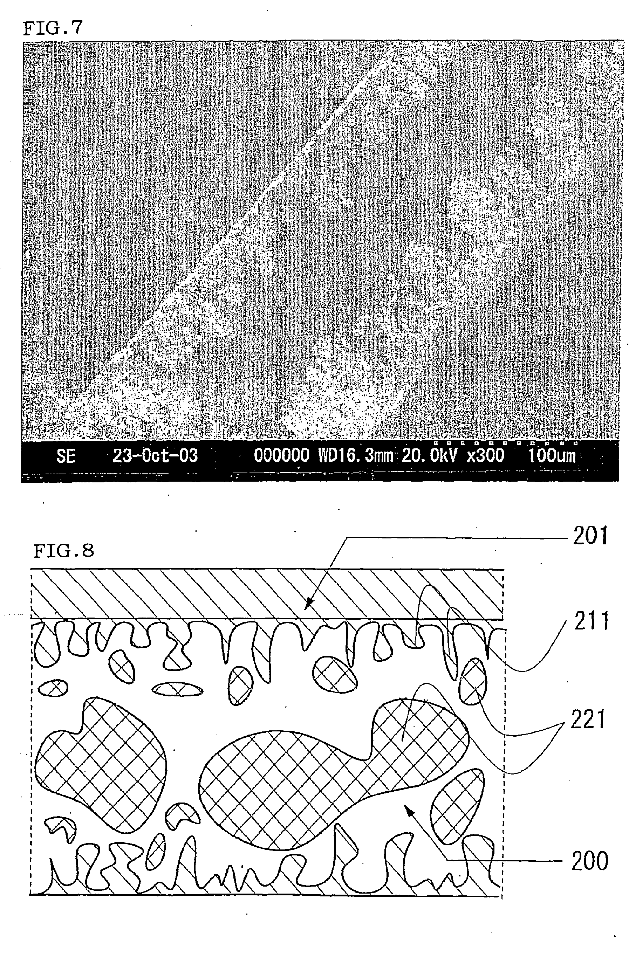

Specific internal shapes of the capacitor according to the second embodiment of the present invention will be described with reference to FIGS. 2 to 8. FIGS. 2 to 7 are photos (300x) of capacitor cross sections according to the second embodiment of the present invention using a scanning electron microscope (SEM). FIG. 8 schematically shows the SEM photos of FIGS. 2 to 7 to illustrate to which section each part of the capacitor of the present invention corresponds. However, to facilitate an understanding of the position of each part of the capacitor in the SEM photos, FIG. 8 illustrates by simplifying details of the shape of each part. Therefore, FIG. 8 does not restrict the shape of each part of the capacitor of the present invention. FIGS. 2 to 6 show examples of the capacitors according to the second embodiment of the present invention comprising a space part in the polymer electrolyte and FIG. 7 shows an example of a capacitor comprising no space part in the polymer electrolyte for comparison. In the cross section along the capacitor thickness direction schematically shown in FIG. 8, a polarized electrode 201 exists on both outer parts of the capacitor. The polarized electrode 201 has projecting portions 211 directed toward the inner part of the capacitor. The inner part of the capacitor sandwiched by the polarized electrodes contains a liquid electrolyte (not shown due to a lack of fixed form) comprising ionic material and polar liquid and a polymer electrolyte 202. The polymer electrolyte 202 has a space part 221. The space part holds the liquid electrolyte. In most cases, a plurality of the space part 221 exist in the capacitor and the shape thereof is indeterminate. Among others, the space part 221 frequently takes the shape of an approximate circle or approximate semicircle.

### (Ionic material)

Ionic material in a capacitor of the present invention works as a liquid electrolyte with the polar liquid as a solvent. The liquid electrolyte containing the ionic material can easily adjust components that can contribute to an electric double layer by adjusting the concentration of the ionic material and the liquid electrolyte has great mobility of the electrolyte in the capacitor, providing a basis for producing a fast capacitor in response speed.

Material that ionizes in a polar solvent can be used as ionic material of the present invention. Concrete examples of such ionic material will be shown. However, the ionic material of the present invention is not limited to the following concrete examples. Examples of cations contained in the ionic material are: tetraalkyl ammonium ions with an alkyl group whose carbon number is in the range of 1-4 such as (C₂N₅)₄N⁺, (C₂N₅)₃(CN₃)N⁺, and (CN₃)₄N⁺, tetraalkyl phosphonium ions such as (C₂N₅)₄P⁺, univalent ions with a small volume such as H⁺, Li⁺, Na⁺, K⁺, Rb⁺, Cs⁺, and Fr⁺, and furthermore divalent and trivalent ions such as Cu²⁺, Ni²⁺, Co²⁺, Fe²⁺, Fe³⁺, Al²⁺, Al³⁺, Zn²⁺, Pb²⁺, Sn²⁺, Mg²⁺, Ca²⁺, Sr²⁺, Ba²⁺, and Cr.

Among others, small-sized ions (C₂N₅)₄N⁺, (C₂N₅)₃(CN₃)N⁺, (C₂N₅)₄P⁺H⁺, and Li⁺ are preferable because a stable solution can easily be created. By making the ions as small as possible, capacitance of the capacitor can be made larger. On the other hand, examples of anions contained in the ionic material are: BF₄⁻, PF₆⁻, ClO₄⁻, Ts⁻, SO₄²⁻, NO₃⁻, Cl⁻, Br⁻, I⁻, CF₃SO₄⁻, C₄F₉SO₄⁻, (CF₃SO₂)₂N⁻, BCH₃(C₂N₅)₄⁻, B(C₂N₅)₄⁻, B(C₄N₉)₄⁻, AsF⁻, and SbF₆⁻. Among others, ClO₄⁻ and (CF₃SO₂)₂N⁻ are preferable and (CF₃SO₂)₂N⁻ is particularly preferable. Therefore, Li(CF₃SO₂)₂N, H(CF₃SO₂)₂N, and borohydrofluoric acid amidine salt can be cited as particularly preferable ionic material.

### (Polar liquid)

Water can be used as a polar liquid used as a solvent for a capacitor of the present invention. As an alternative solvent, nonaqueous polar liquid can also be used. Since the nonaqueous polar liquid has high permittivity and decomposition voltage, if it is chosen as a solvent, compared with a case in which water is chosen as a solvent, withstand voltage becomes higher and energy density increases, which is preferable, because a potential window becomes wider and electrolysis is more unlikely to occur, leading to electrochemical stability. More specifically, propylene carbonate, N-methylpyrolidone, dimethylsulfoxide, acetonitrile, N,N-dymethylformamide, N-methylformamide, tetrahydrofuran, hexametylphosphoric triamide, γ-butyrolactone, 1,2-dimethoxyethane, N-methylacetamide, sulfolane ethylene carbonate, glutarnitrile, adiponitrile, nitromethane, nitroethane, and pyridine can be used. Preferably, propylene carbonate, N-methylpyrolidone, dimethylsulfoxide, N-methylformamide, and γ-butyrolactone, and more preferably nonaqueous polar liquid such as propylene carbonate, N-methylformamide, γ-butyrolactone, and 1,4-dioxolane can be used, and propylene carbonate can be cited as a particularly preferable polar liquid. By choosing such water or nonaqueous polar liquid as a solvent for the ionic material, mobility of the electrolyte is provided.

Gel material, on the other hand, is not preferable because mobility of the electrolyte is not provided.

### (Capacitance)

A capacitor of the present invention has an aforementioned structure and, as a result, has a feature of 40 F/cm³ or more of capacitance by the constant current discharge method of the capacitance. Furthermore, by adjusting manufacturing conditions, the capacitor can be made to have 50 F/cm³ or more. In this case, the upper limit of the capacitor is not restricted. The capacitor of the present invention is also superior in energy efficiency because a conventional capacitance can be obtained at a lower applied voltage. The capacitance of a capacitor of the present invention is a value measured by conforming to the Standard No. EIAJ RC-2377 (established in April 2000, Test method of an electric double layer capacitor, 3.3.1 Constant current discharge method) of the Japan Electronics Industries Association Standard issued by Electronic Industries Association of Japan.

### [Detailed shape of the projecting portions]

### (Observation method of the shape)

The shape of each part of a capacitor in a cross section along the capacitor thickness direction of the capacitor of the present invention can suitably be observed using the scanning electron microscope (SEM). Consequently, it is preferable to identify projecting shapes of the metal electrodes and space part shapes of the polymer electrolyte by observing SEM photos. A method for identifying detailed shape of the capacitor of the present invention will be described. First, cut the capacitor whose shape should be observed vertically in the thickness direction of the capacitor to cut out a cross section along the thickness direction of the capacitor. To help determine the shape of each part in the capacitor cross section in SEM photos, gold may be vacuum-deposited on the cut cross section. Put the capacitor cross section processed as described above on a SEM observation stand and then the shape of each part of the capacitor in the cross section can be observed by SEM photos, which show the cross section under magnification of 100x-1500x. If the capacitor thickness is about 160 µm, the magnification of the SEM photos of about 300x is preferable for observation of the shape of each part.

### (Shape by secondary observation)

Furthermore, the present invention relates to a capacitor comprising at least a polymer electrolyte between metal electrodes opposite to each other, characterized in that, in a cross section along the thickness direction of the capacitor, the metal electrodes have projecting portions, which are in contact with the polymer electrolyte and form electrode components of the metal electrodes, in a boundary region with the polymer electrolyte.

The projecting portions will be further described with reference to cross sectional views observed by an electron microscope of a plurality of aspects of a capacitor of the present invention.

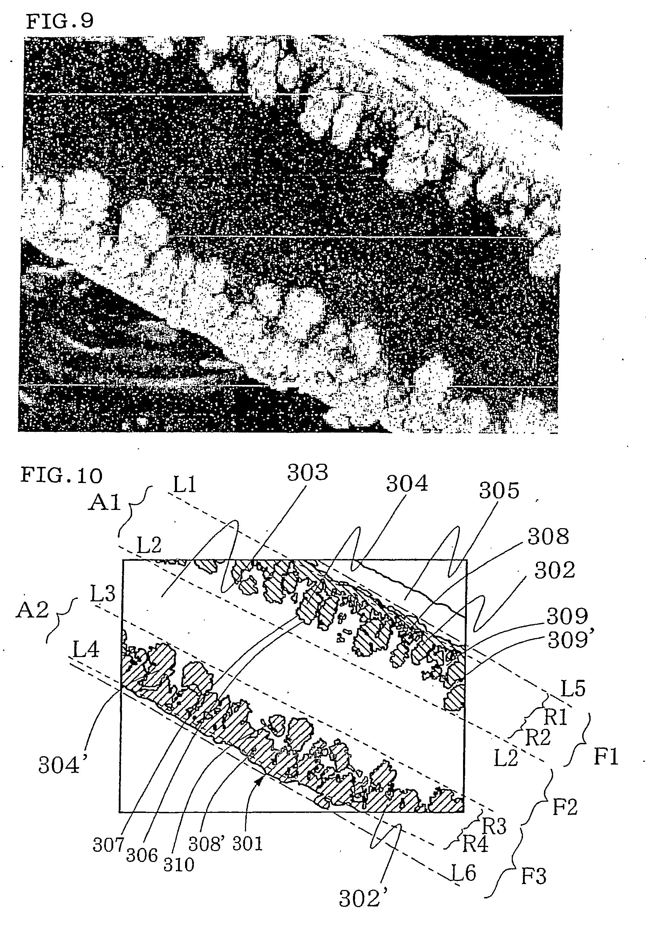

FIG. 9 shows a view of an electron microscope photo taken by SEM of a cross section along the thickness direction of a capacitor of the present invention. FIG. 10 is a diagram showing the capacitor in the view of the SEM photo of FIG. 9 as a diagrammatic drawing.

FIG. 9 shows a view of the photo taken by the SEM of the cross section of a capacitor of the present invention obliquely from above. Since FIG. 10 represents FIG. 9 as a diagrammatic drawing, the capacitor of the present invention will be described, for convenience of illustration, with reference to FIG. 10. In FIG. 10, a capacitor 301 has metal electrodes 302 and 302' and a polymer electrolyte 303. In the capacitor 301, a pair of the metal electrodes 302 and 302' is formed across the polymer electrolyte 303. In the capacitor shown in FIGS. 9 and 10, each of the metal electrodes has a surface and a metal surface 305 is the surface of the metal electrode 302. The metal electrode 302 and metal electrode 302' each have an interface with the polymer electrolyte 303. The metal electrode 302 has a plurality of projecting portions 304. Like the metal electrode 302, the metal electrode 302' also has projecting portions.

A capacitor of the present invention also has an interface between the metal electrodes and polymer electrolyte formed in a cross direction of the capacitor. Thus, the capacitor 301 has a boundary region A1 between the metal electrode 302 and polymer electrolyte 303 and also a boundary region A2 between the metal electrode 302' and polymer electrolyte 303. The boundary region is, in a cross section along the thickness direction of the capacitor, a range between a position of the interface closest to the center in the thickness direction of the capacitor and a position of the interface closest to the surface, in which the interface between the metal electrode and polymer electrolyte is contained.

In FIG. 10, in the boundary region A1 divided by dotted lines L1 and L2 and the boundary region A2 divided by dotted lines L3 and L4, the metal electrode 302 and metal electrode 302' have many projecting portions 304 and 304' respectively. The projecting portions 304 and 304' each extend from around the surface of the capacitor 301 to the center in the thickness direction of the capacitor 301 and are in contact with the polymer electrolyte 303.

The projecting portions 304 and 304' function as part of the metal electrodes 302 and 302' respectively, and form electrode components of the metal electrodes 302 and 302'. Since the metal electrodes are in contact with the polymer electrolyte and have the projecting portions forming electrode components of the metal electrodes in the boundary region between the metal electrodes and polymer electrolyte, a capacitor of the present invention has, compared with a conventional capacitor whose interface between metal electrodes and a polymer electrolyte layer is approximately smooth, a wider surface area of the interface.

In FIG. 10, the projecting portion 304 of the capacitor 301 has minute unevenness and the minute unevenness forms a bay-like insertion portion. The projecting portion 304 has a bay-like insertion portion 306 and a bay-like insertion portion 307, and still a plurality of bay-like insertion portions. A capacitor of the present invention has, by providing the bay-like insertion portions on the projecting portions, a larger interface between the polymer electrolyte and metal electrodes, compared with a case in which contours of the projecting portions are formed by straight lines, curves, or a combination thereof, and thus the capacitance increases.

In the projecting portion 304, a borderline of the projecting portion has the shape of an approximate cyclic curve in a tip part thereof. There is no particular restriction on the shape of an approximate cyclic curve as long as the curve is cyclic and, for example, the borderline may have the shape of a sine curve. The borderline of the cyclic curve may be part of the projecting portion or a whole of the projecting portion. By providing an approximate cyclic curve of the borderline for the projecting portion, the interface between the metal electrodes and polymer electrolyte is made still larger, and thus the capacitance increases.

The projecting portions in a capacitor of the present invention preferably have the shape of a fractal.

By providing the shape of the fractal for the projecting portions in a cross section along the thickness direction, the interface between the metal electrodes and polymer electrolyte is made still larger and the capacitance of the capacitor is further improved. There is no particular restriction on the shape of fractal and any publicly known fractal shape may be used. As typical shapes of fractals, for example, the shapes of Koch curves, trees curves, vein curves, fern-leaves, and gaskets can be illustrated.

The projecting portions of a capacitor of the present invention preferably take the shape of a peninsula. By providing the shape of the peninsula for the projecting portion in a cross section along the thickness direction, the interface between the metal electrodes and polymer electrolyte is made still larger and the capacitance of the capacitor is further improved.

The peninsular shape may be crescentic or bell-shaped, as long as components forming the metal electrodes project into the polymer electrolyte and have a certain level of spread.

The projecting portions of a capacitor of the present invention preferably take the shape having a neck-like narrow section in an insular part. By providing the shape having a neck-like narrow section in an insular part for the projecting portion in a cross section along the thickness direction, the interface between the metal electrodes and polymer electrolyte is made still larger and the capacitance of the capacitor is further improved. A shape of an insular part with a certain level of spread having a neck-like narrow section whose width is narrower than that of the insular part is sufficient for the shape having a neck-like narrow section in an insular part in a peninsular shape. There is no particular restriction on the insular part as long as it has a certain level of spread, and may be approximately circular or elliptical, or polygonal including triangular and quadrangular. By providing a narrow section even for such shapes, the interface between the metal electrodes and polymer electrolyte is made still larger and the capacitance of the capacitor is improved.

The projecting portions of a capacitor of the present invention preferably take the shape of a tree. By providing the shape of the tree for the projecting portion in a cross section along the thickness direction, the interface between the metal electrodes and polymer electrolyte is made still larger and the capacitance of the capacitor is further improved. There is no particular restriction on the shape of tree and may have the spread of a broad-leaf tree or has heights with an acute-angled tip like a needle-leaf tree on projecting portions' flanks.

The projecting portions of a capacitor of the present invention preferably take the shape of a mushroom. By providing the shape of the mushroom for the projecting portion in a cross section along the thickness direction, the interface between the metal electrodes and polymer electrolyte is made still larger and the capacitance of the capacitor is further improved. There is no particular restriction on the shape of mushroom and may be like an open umbrella or a closed umbrella looking like a bud.

The projecting portions of the capacitor of a present invention preferably take the shape of an icicle. By providing the shape of the icicle for the projecting portion in a cross section along the thickness direction, the interface between the metal electrodes and polymer electrolyte is made still larger and the capacitance of the capacitor is further improved. There is no particular restriction on the shape of icicle as long as the tip of the projecting portions is formed at an acute angle, and an overall shape may be linear, distorted, or curved.

The projecting portions of a capacitor of the present invention preferably take the shape of a polyp. By providing the shape of the polyp for the projecting portion in a cross section along the thickness direction, the interface between the metal electrodes and polymer electrolyte is made still larger and the capacitance of the capacitor is further improved. There is no particular restriction on the shape of a polyp as long as there is a protuberance and may be, for example, warty, styloid, or have a cave-in near the top part of a warty protuberance.

The projecting portions of a capacitor of the present invention may take the shape of a coral. By providing the shape of the coral for the projecting portion in a cross section along the thickness direction, the interface between the metal electrodes and polymer electrolyte is made still larger and the capacitance of the capacitor is further improved. There is no particular restriction on the shape of a coral and tubular or tentacle-like electrode components may form a lump.

A capacitor of the present invention preferably has the projecting portions and contains polymer electrolyte components inside the metal electrodes. In FIG. 10, the metal electrodes 302 and 302' contain pores 308 and 308' containing the polymer electrolyte components and electrode components contain the polymer electrolyte components. By containing the polymer electrolyte components inside the metal electrodes, the capacitance of the capacitor can further be improved because, in addition to an interface between the metal electrodes around the projecting portions and the polymer electrolyte, an interface between the polymer electrolyte components and the metal electrodes around a perimeter thereof is provided.

In FIG. 10, pores as small as visually recognizable with electron microscope photos are provided. A capacitor of the present invention may also have submicron fine pores. For example, ion exchange resins usable as the polymer electrolyte have often fine pores as small as 1 nm. By providing such fine pores as small as 1 nm for the metal electrodes, the interface between the metal electrodes and polymer electrolyte is made larger and the capacitance of the capacitor can further be improved. The projecting portions in the capacitor of the present invention may have submicron fine pores if the projecting portions can be recognized as having a projecting shape, and on a scale of molecular level, matrix resin of the polymer electrolyte and conductive components such as metal contained in the metal electrodes may be mixed.

In FIG. 10, a capacitor of the present invention can be divided into metal electrode areas F1 and F3, which are an area where a metal electrode is contained in a cross section along the thickness direction and a polymer electrolyte area F2, which is an area where no metal electrode is contained in a cross section along the thickness direction, and instead, the polymer electrolyte is contained. Since the projecting portions form the electrode components of the metal electrodes, the projecting portions are metal electrodes and are distinguished from the metal electrode area. That is, the metal electrode area is an area ranging from the surface of the capacitor to a position of the interface closest to the center along the thickness direction of the capacitor. The metal electrode area corresponds, in FIG. 10, to the area F1 divided by a line L5 and the line L2 and the area F3 divided by a line L6 and the line L3. The polymer electrolyte area may contain massive or particulate metal parts generated by isolation from the metal electrode area and corresponds, in FIG. 10, to an area divided by the line L2 and the line L3.

In a capacitor of the present invention, a ratio in thickness of the polymer electrolyte area and a pair of metal electrode areas in a cross section along the thickness direction, that is, metal electrode area : polymer electrolyte area : metal electrode area in the range of 3:4:3 to 1:8:1 is preferable because still a larger capacitance can be obtained. The ratio of metal electrode area : polymer electrolyte area : metal electrode area in FIG. 10 is about 3:4:3, but in the capacitor of the present invention, sufficient electric double layers can be considered to form by taking the ratio in thickness of metal electrode area : polymer electrolyte area : metal electrode area in the range of 3:4:3 to 1:8:1.

A capacitor of the present invention preferably has electrode areas R2 and R3 rich in polymer electrolyte components on the polymer electrolyte side of the metal electrode areas and polymer electrolyte area, that is, on a center side along the thickness direction and electrode areas R1 and R4 rich in electrode components on an opposite side of the polymer electrolyte. By providing the electrode areas containing a large amount of polymer electrolyte components on the polymer electrolyte side and the electrode areas rich in electrode components on the opposite side of the polymer electrolyte for the capacitor, the capacitor of the present invention can improve the capacitance as a capacitor because the interface between the metal electrodes and polymer electrolyte will be present more widely.

Moreover, the present invention relates to a capacitor comprising a polymer electrolyte and metal electrodes characterized in that, in a cross section along the thickness direction of the capacitor, the metal electrodes have narrow bay portions into which the polymer electrolyte penetrates in a boundary region with the polymer electrolyte.

In FIG. 10, the metal electrode area F1 has narrow bay portions 309 and 309' where an interface between the polymer electrolyte and metal electrode is formed like a narrow bay. As shown in FIG. 10, the narrow bays are formed by the polymer electrolyte penetrating into the metal electrode. The narrow bays may be formed linearly, but curved or bending shapes are preferable because the interface between the polymer electrolyte and metal electrode will become wider. In the capacitor, particularly a part sandwiched by the narrow bay portions preferably has a projecting shape from around the surface of the capacitor to the inner part. By providing a projecting shape for the part sandwiched by the narrow bay portions, the interface between the metal electrodes and polymer electrolyte is made still wider and the capacitance of the capacitor is improved. A borderline of the part sandwiched by the narrow bay portions is preferably curved or bending because a borderline having an approximate cyclic curve or indeterminate forms makes the interface between the polymer electrolyte and polarized electrodes wider. If a part sandwiched by the narrow bay portions having the projecting shape is recognized as the projecting portion, the present invention may be recognizable as a capacitor comprising a polymer electrolyte and metal electrodes characterized in that, in a cross section along the thickness direction of the capacitor, the metal electrodes have projecting portions, which are in contact with the polymer electrolyte and form electrode components of the metal electrodes, in a boundary region with the polymer electrolyte.

Having, in a cross section along the thickness direction, the projecting portions in a boundary region with the polymer electrolyte, as described above, is sufficient for a capacitor of the present invention, as a capacitor comprising a polymer electrolyte and metal electrodes, wherein, in a cross section along the thickness direction of the capacitor, the metal electrodes have projecting portions, which are in contact with the polymer electrolyte and form electrode components of the metal electrodes, in a boundary region with the polymer electrolyte, and there is no particular restriction on the position of a cross section along the thickness direction in the capacitor. Therefore, as long as the capacitor of the present invention has the projecting portions in a cross section along the thickness direction, a shape of the projecting portions in one cross section and that of the projecting portions in another cross section need not match.

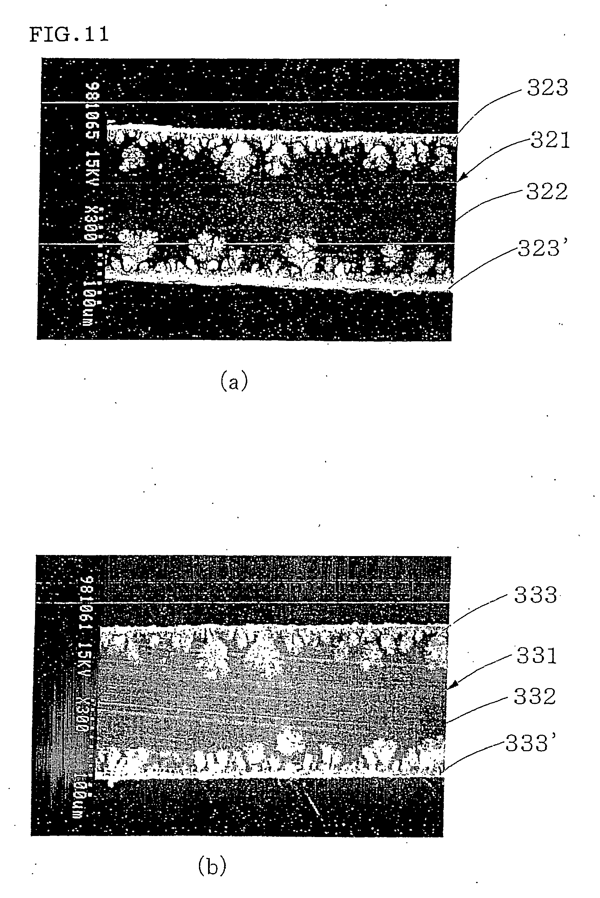

FIGS. 11 (a) and 11 (b) show the views of SEM photos of cross sections along the thickness direction of the capacitors of the present invention. More specifically, FIGS. 11 (a) and 11 (b) show the views of 300x SEM photos in the cross direction near the center of a cross section formed in the thickness direction by cutting a 20 mm long, 2 mm wide, 160 µm thick capacitor lengthwise at intervals of several mm in such a way that a cutout line on the surface of the metal electrode of the capacitor is parallel to the cross direction.

In FIG. 11 (a), a capacitor 321 has a polymer electrolyte 3322 and metal electrodes 323 and 323'. The metal electrodes 323 and 323' have projecting portions extending to the center in the thickness direction of the capacitor. In FIG. 11 (a), many projecting portions from both the metal electrodes 323 and 323' are recognizable and shapes thereof are diverse. Two or more fractal or tree-shaped projecting portions from the metal electrodes 323 and 323' are visually recognizable in FIG. 11 (a).

Also in FIG. 11 (b), a capacitor 331 has a polymer electrolyte 322 and metal electrodes 333 and 333'. The metal electrodes 333 and 333' have projecting portions extending to the center in the thickness direction of the capacitor. In FIG. 11 (a), many projecting portions from both the metal electrodes 333 and 333' are recognizable and shapes thereof are diverse. Two or more fractal or tree-shaped projecting portions from the metal electrodes 333 and 333' are visually recognizable in FIG. 11 (a).

Both FIGS. 11 (a) and 11 (b) have projecting portions that are in contact with the polymer electrolyte and form electrode components of the metal electrodes. However, sizes of the projecting portions in FIGS. 11 (a) and 11 (b) do not perfectly match. That is, if the metal electrodes are in contact with the polymer electrolyte and have projecting portions forming electrode components of the metal electrodes, the capacitor of the present invention will have a wider interface between the polymer electrolyte and metal electrodes, leading to a larger capacitance in the interface between the polymer electrolyte and metal electrodes.

A capacitor of the present invention preferably has the projecting portion in a cross section along the thickness direction at any position. Furthermore, the capacitor of the present invention may have, linearly in a cross section along the thickness direction, a part having no projecting portion formed intentionally or accidentally by, for example, forming a passage of solvent contained in the polymer electrolyte so that the capacitance of the interface between the metal electrodes and polymer electrolyte is about 2 F/cm³ or more by the constant current discharge method.

As described above, in each cross section of the same capacitor, shapes of the projecting portions of the capacitor of the present invention do not have to match in details thereof. In other words, a capacitor of the present invention may be a capacitor in which metal electrodes are in contact with the polymer electrolyte and have three-dimensional projecting portions forming electrode components of the metal electrodes. The three-dimensional projecting portions are not particularly limited in shape, and if the projecting portion can be formed in a cross section along the thickness direction, there is no particular restriction on the shape thereof. The three-dimensional projecting portions are preferably formed in an incisor shape, a canine shape, a premolar shape, a molar shape, a bolt shape, a tree shape, a mushroom shape, an icicle shape, a coral shape, or a shape having a neck-like narrow section in an capitate part, and in a three-dimensional shape because the interface between the polymer electrolyte and metal electrodes becomes wider and has a fixed width so that electric connection will be less frequently cut off. An island 310 is observed also in FIG. 10, but cases in which the island is connected to the metal electrode 302' in other cross sections of the capacitor 301 are also included in examples of the present invention.

In a capacitor of the present invention, as a capacitor comprising a polymer electrolyte and metal electrodes, wherein, in a cross section along the thickness direction of the capacitor, the metal electrodes have projecting portions, which are in contact with the polymer electrolyte and form electrode components of the metal electrodes, in a boundary region with the polymer electrolyte, the projecting portions preferably have a shape visually recognizable by observing a cross section along the thickness direction of the capacitor using SEM photos because the interface between the polymer electrolyte and metal electrodes becomes wider. Also for a capacitor comprising a polymer electrolyte and metal electrodes, wherein, in a cross section along the thickness direction of the capacitor, the metal electrodes have narrow bay portions into which the polymer electrolyte penetrates in a boundary region with the polymer electrolyte, the narrow bay portions preferably have a shape visually recognizable by observing a cross section along the thickness direction of the capacitor using SEM photos because the interface between the polymer electrolyte and metal electrodes becomes wider. Photos taken by a publicly known method can be used as the SEM photos.

As a method of taking the SEM photos, for example, a capacitor with a cross section along the thickness direction is chosen as material, gold is caused to adhere to the material by a publicly known sputtering method and a publicly known method of taking a photo is used under vacuum conditions.

There is no particular restriction on magnification and, for example, 150x to 1500x can be used. However, the magnification under which the width of the capacitor is within a frame is preferable because it becomes easier to recognize the projecting portions or narrow bay portions, and the thickness of each interface of the polymer electrolyte layer and a pair of metal electrodes. If the thickness of the capacitor is about 160 µm, the magnification of the SEM photos is preferably 300x to 500x to observe the shape of each part.

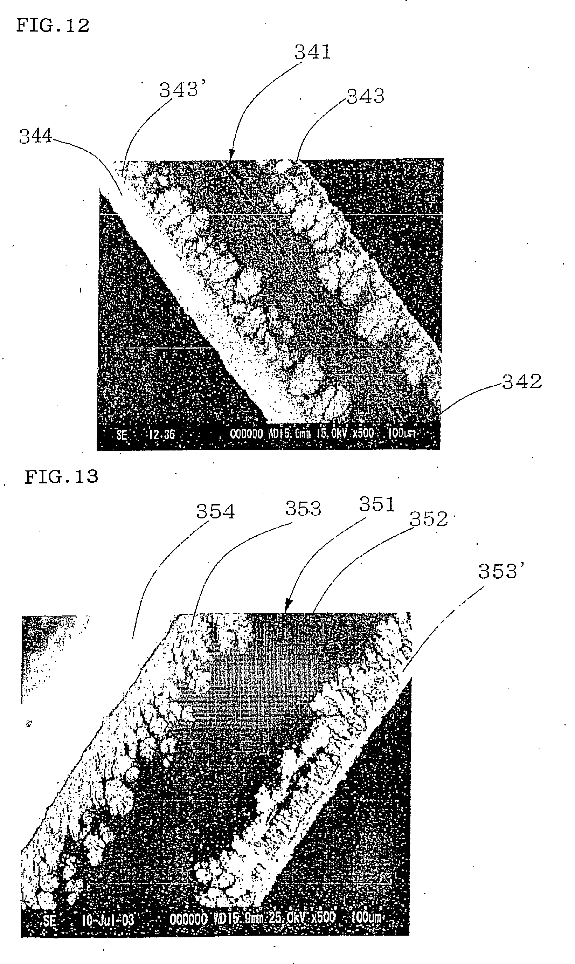

FIGS. 12 to 15 show SEM photos of cross sections of capacitors of the present inventions.

FIG. 12 shows a view of an electron microscope photo taken by SEM of a cross section along the thickness direction in an aspect of a capacitor of the present invention. FIG. 12 shows a view of an SEM photo taken under magnification of 500x of a 160 µm thick capacitor of the present invention. A capacitor 341 has a pair of metal electrodes 343 and 343' and a polymer electrolyte 342, the metal electrodes have many projecting portions, and the projecting portions are in contact with the polymer electrolyte and form electrode components of the metal electrodes. In FIG. 12, the projecting portions take various shapes, and a projecting portion having a plurality of bay-like insertion portions, a projecting portion whose borderline has an approximate cyclic curve, a projecting portion whose borderline has indeterminate forms, a fractal projecting portion, a peninsular projecting portion, a projecting portion having a neck-like narrow section in an insular part, and a tree-shaped projecting portion are visually recognizable.

FIG. 13 shows a view of an electron microscope photo taken by SEM of a cross section along the thickness direction in another aspect of a capacitor of the present invention. FIG. 12 shows a view of an SEM photo taken under magnification of 500x of the 160 µm thick capacitor of the present invention. A capacitor 351 has a pair of metal electrodes 353 and 353' and a polymer electrolyte 352, the metal electrodes have many projecting portions, and the projecting portions are in contact with the polymer electrolyte and form electrode components of the metal electrodes. In FIG. 13, the projecting portions take various shapes, and a projecting portion having a plurality of bay-like insertion portions, a projecting portion whose borderline has an approximate cyclic curve, a projecting portion whose borderline has indeterminate forms, a fractal projecting portion, a peninsular projecting portion, an icicle-shaped projecting portion, a polyp-shaped projecting portion, a coral-shaped projecting portion, and a tree-shaped projecting portion are visually recognizable.

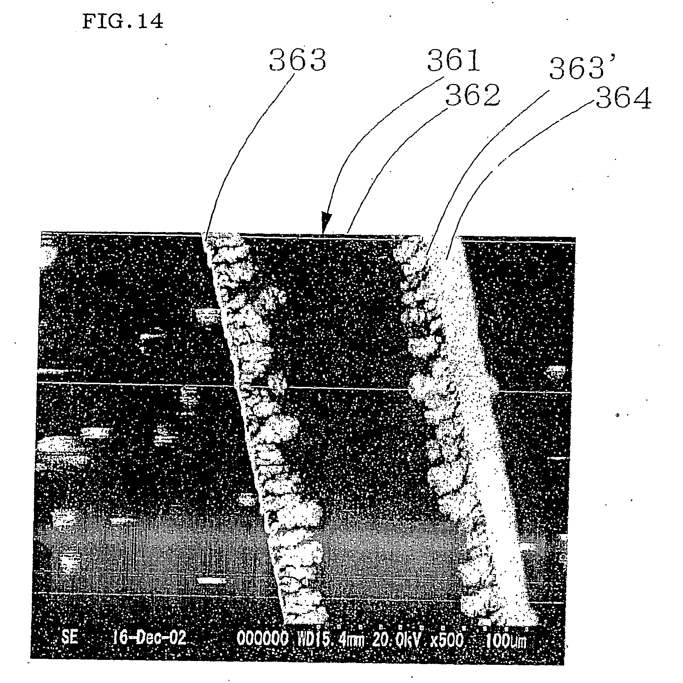

FIG. 14 shows a view of an electron microscope photo taken by SEM of a cross section along the thickness direction in another aspect of a capacitor of the present invention. FIG. 14 shows a view of an SEM photo taken under magnification of 500x of the 160 µm thick capacitor of the present invention. A capacitor 361 has a pair of metal electrodes 363 and 363' and a polymer electrolyte 362, the metal electrodes have many projecting portions, and the projecting portions are in contact with the polymer electrolyte and form electrode components of the metal electrodes. In FIG. 14, the projecting portions take various shapes, and a projecting portion having a plurality of bay-like insertion portions, a projecting portion whose borderline has an approximate cyclic curve, a projecting portion whose borderline has indeterminate forms, a fractal projecting portion, a peninsular projecting portion, a projecting portion having a neck-like narrow section in an insular part, and a tree-shaped projecting portion are visually recognizable.

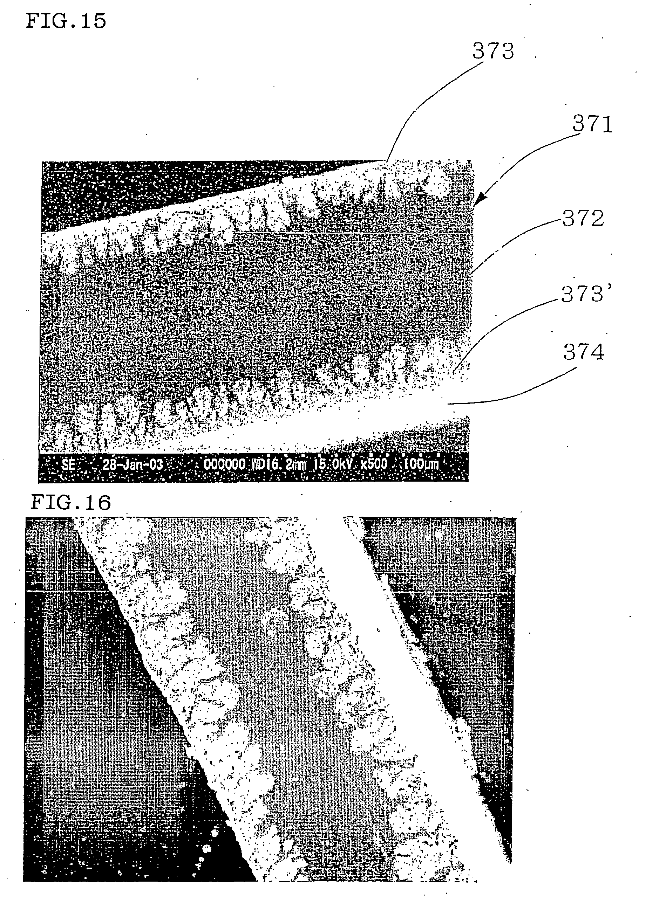

FIG. 15 shows a view of an electron microscope photo taken by SEM of a cross section along the thickness direction in another aspect of a capacitor of the present invention. FIG. 15 shows a view of an SEM photo taken under magnification of 500x of the 160 µm thick capacitor of the present invention. A capacitor 371 has a pair of metal electrodes 373 and 373' and a polymer electrolyte 372, the metal electrodes have many projecting portions, and the projecting portions are in contact with the polymer electrolyte and form electrode components of the metal electrodes. In FIG. 15, the projecting portions take various shapes, and a projecting portion having a plurality of bay-like insertion portions, a projecting portion whose borderline has an approximate cyclic curve, a projecting portion whose borderline has indeterminate forms, a fractal projecting portion, a peninsular projecting portion, a projecting portion having a neck-like narrow section in an insular part, and a tree-shaped projecting portion are visually recognizable.

### (Shape by three-dimensional observation)

Up to this point, the shapes and interfaces of the metal electrodes and polymer electrolyte of a capacitor of the present invention have been shown by observing cross sections in the thickness direction. How such shapes exist in which forms and structures three-dimensionally will now be described.

FIGS. 17 to 34 show views of each static image of three-dimensional images of an appearance and inner part in an embodiment of a capacitor of the present invention take by using an X-ray micro CT scanner system (device name: SKYSCAN "Micro CT scanner 1072 type").

Views of each static image show an outline of the three-dimensional structure of the capacitor by displaying static images of bitmap images in computer software.

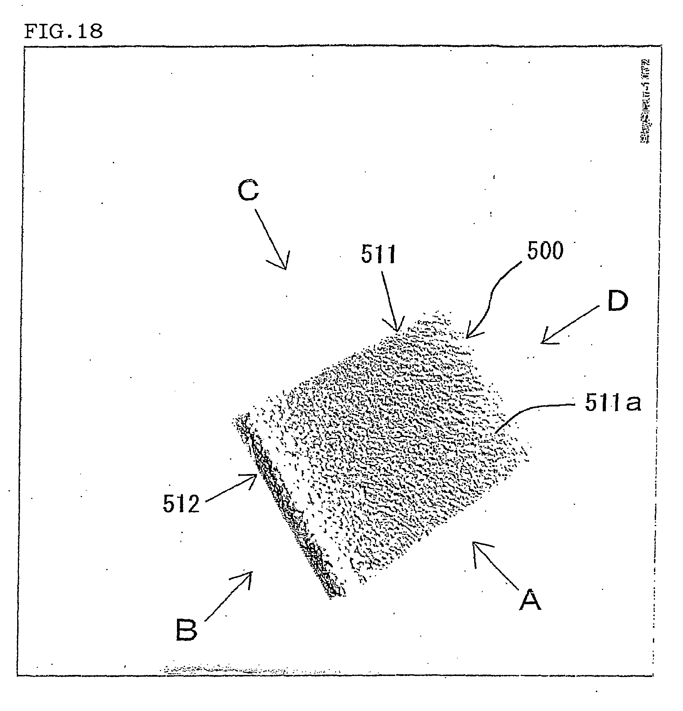

FIG. 17 is a perspective view of a plane image when viewed from above in a B direction at an angle and shows, from the B direction, a cross section in the thickness direction of the capacitor and a three-dimensional image in the depth direction thereof. FIG. 18 is a perspective view obtained by adding leading lines for illustration to FIG. 17.

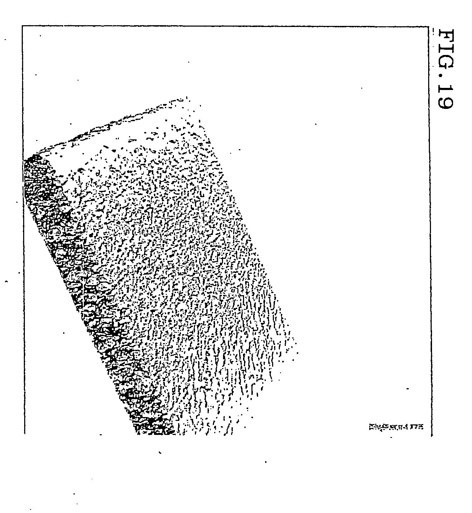

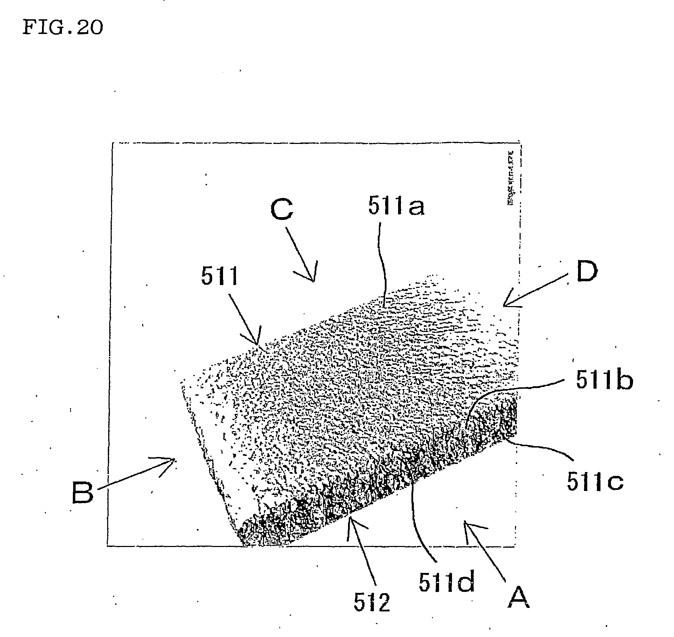

FIG. 19 is a perspective view when viewed in FIG. 17 from above in an A direction at an angle and shows, from the A direction, a cross section in the thickness direction of the capacitor and a three-dimensional image in the depth direction thereof. FIG. 20 is a perspective view obtained by adding leading lines for illustration to FIG. 19.

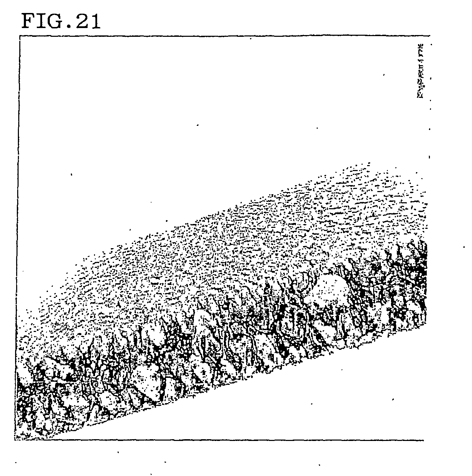

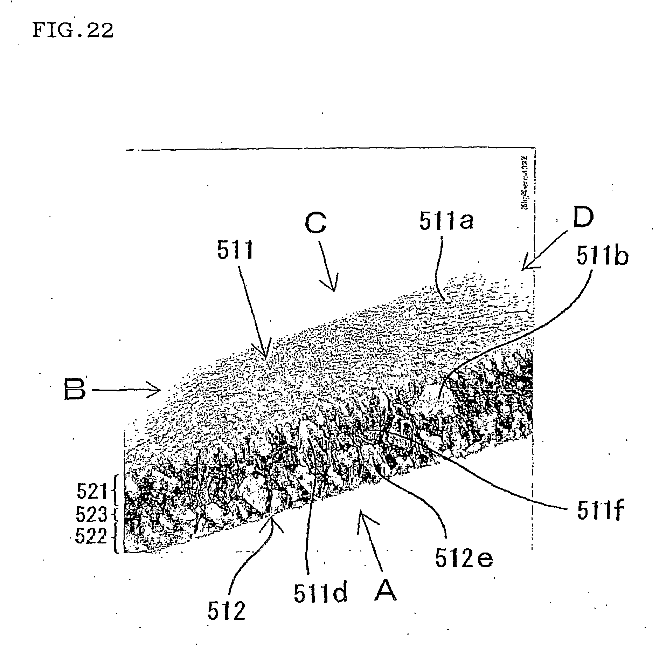

FIG. 21 is a perspective view obtained by rotating around the B-D axis in FIG. 19 and enlarging and viewing from the A direction, including the sectional view in the capacitor thickness direction. FIG. 22 is a perspective view obtained by adding leading lines for illustration to FIG. 21.

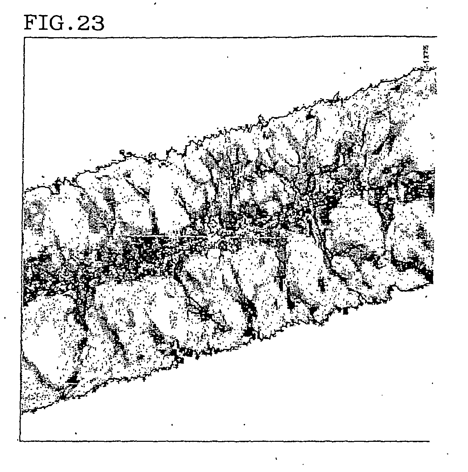

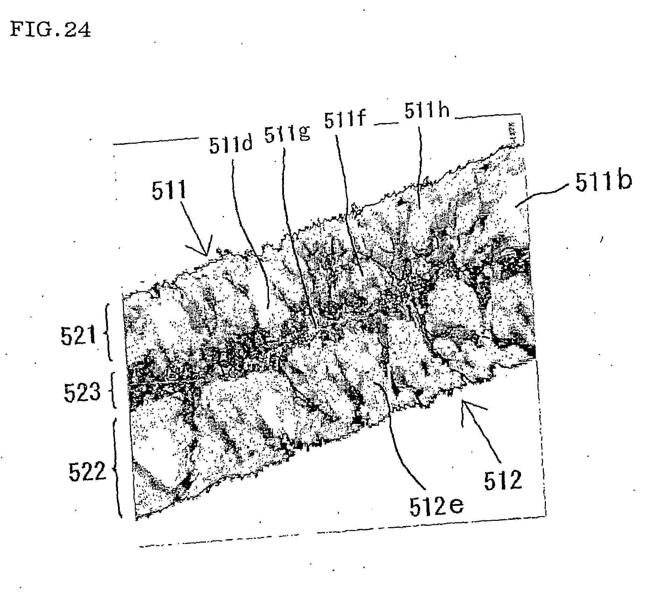

FIG. 23 is an enlarged sectional view of the capacitor viewed from the A direction in FIG. 21 and a stereoscopic image in the depth direction thereof. FIG. 24 is a perspective view obtained by adding leading lines for illustration to FIG. 23.

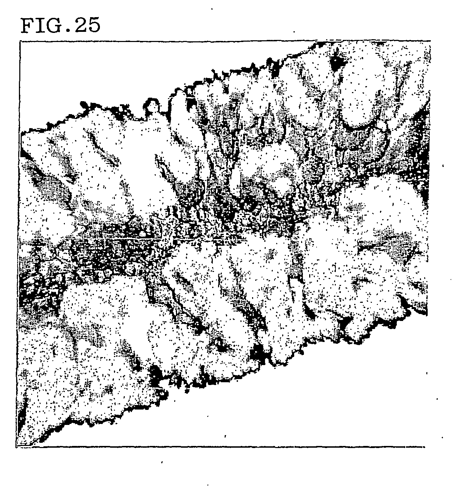

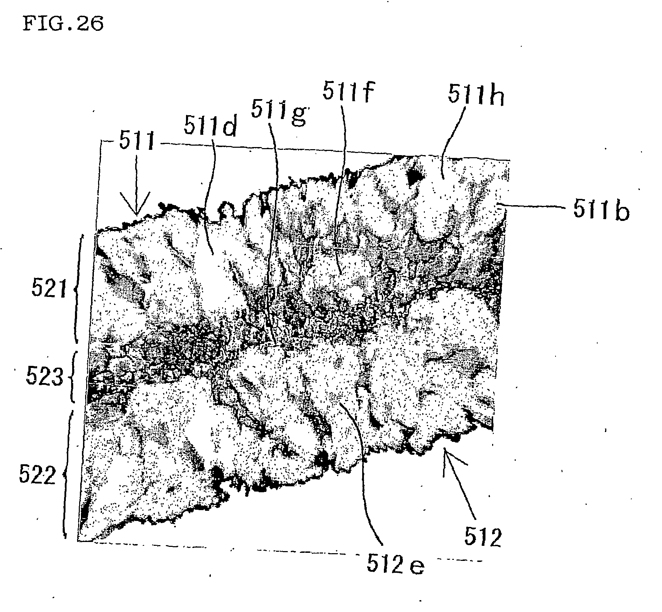

FIG. 25 is a sectional view (fault) inside the capacitor in the thickness direction and a stereoscopic image in the depth direction thereof after further penetrating into the capacitor in FIG. 23. FIG. 26 is a perspective view obtained by adding leading lines for illustration to FIG. 25.

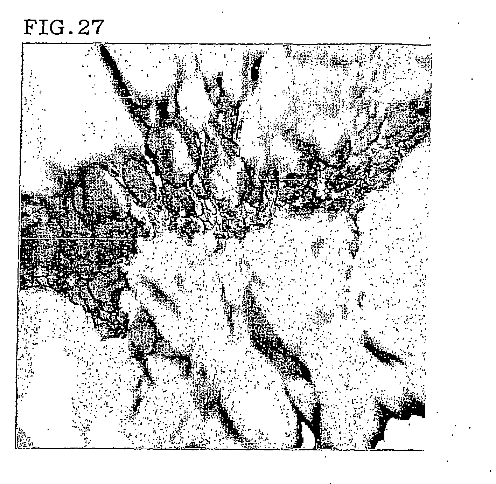

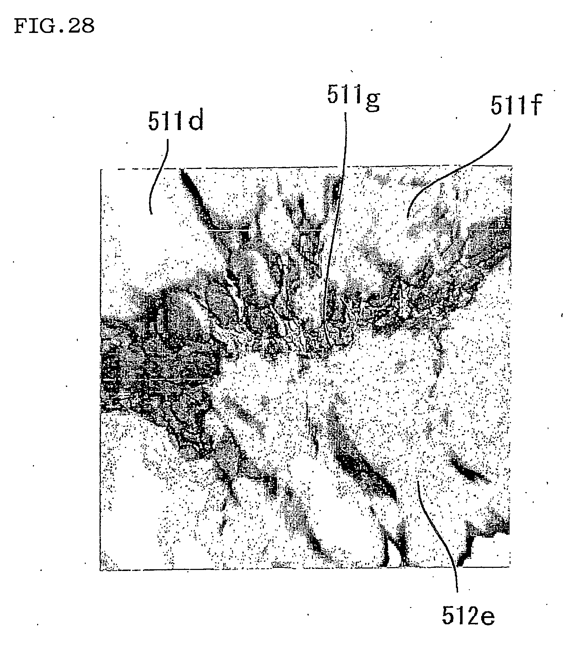

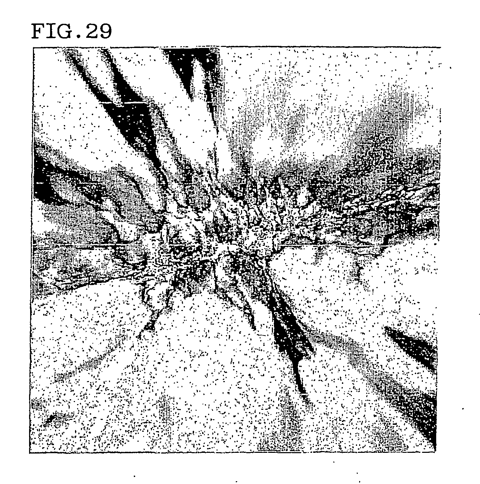

FIG. 27 is a sectional view (fault) inside the capacitor in the thickness direction and a stereoscopic image in the depth direction thereof after further penetrating into the capacitor in FIG. 25. FIG. 28 is a perspective view obtained by adding leading lines for illustration to FIG. 27.

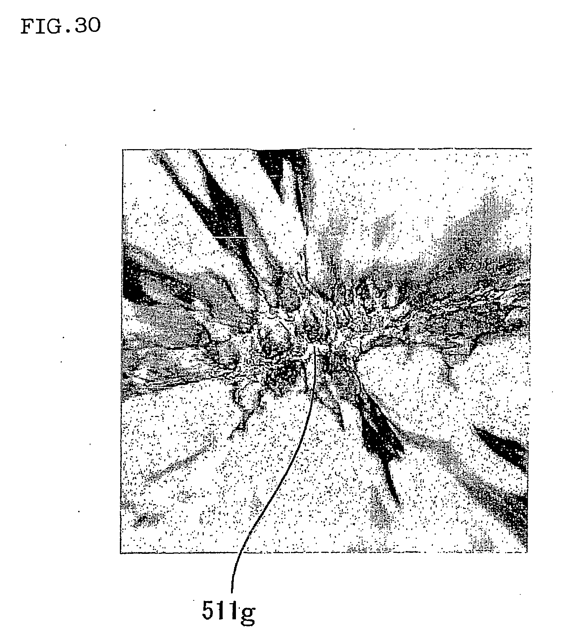

FIG. 29 is a sectional view (fault) inside the capacitor in the thickness direction and a stereoscopic image in the depth direction thereof after further penetrating into the capacitor in FIG. 27. FIG. 30 is a perspective view obtained by adding leading lines for illustration to FIG. 29.

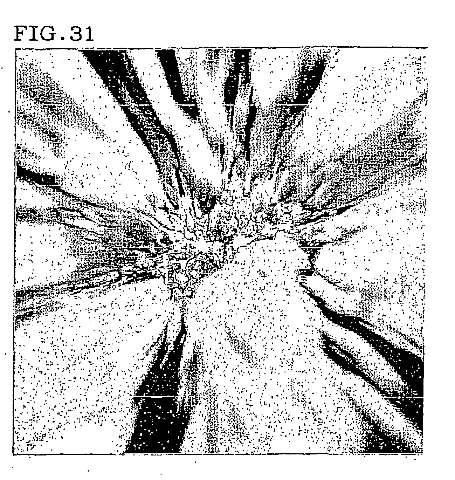

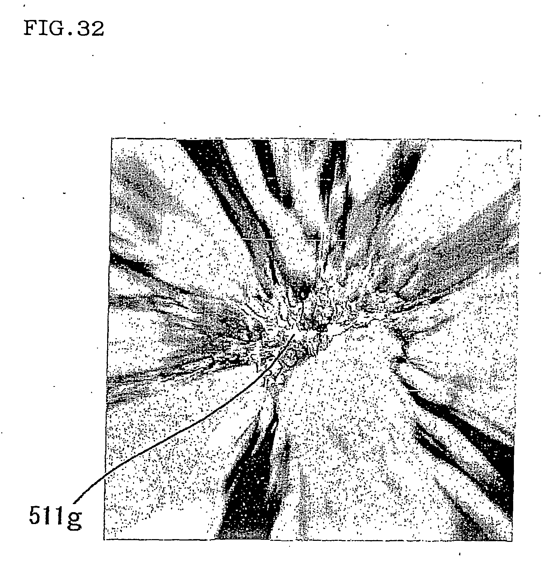

FIG. 31 is a sectional view (fault) inside the capacitor in the thickness direction and a stereoscopic image in the depth direction thereof after further penetrating into the capacitor in FIG. 29. FIG. 32 is a perspective view obtained by adding leading lines for illustration to FIG. 31.

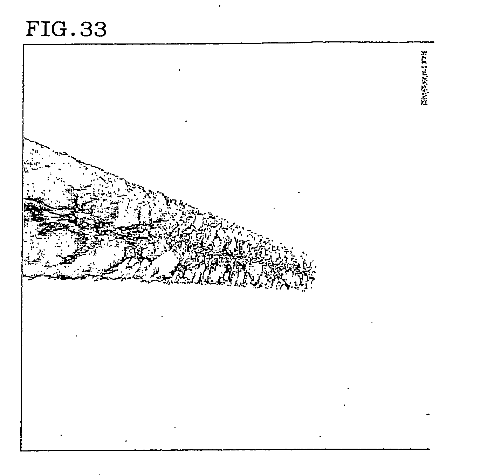

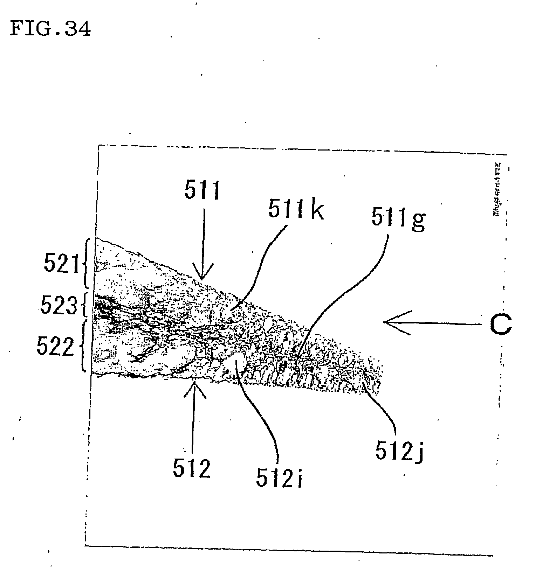

FIG. 33 is a sectional view when viewed from an oblique direction in a C direction in FIG. 18 and a stereoscopic image in the depth direction thereof. FIG. 34 is a perspective view obtained by adding leading lines for illustration to FIG. 33.

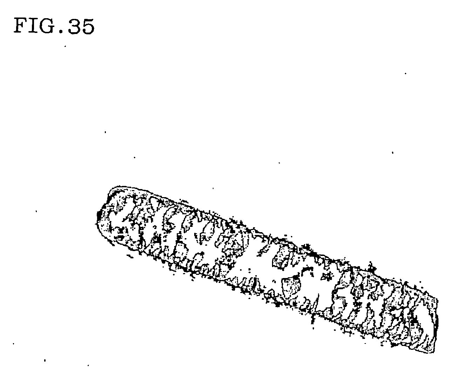

FIGS. 35 to 40, on the other hand, are vertical sectional views to the thickness direction of the capacitor of an embodiment of a capacitor of the present invention observed by using the X-ray micro CT scanner system. Since the polymer electrolyte between the metal electrodes are not sensed by X-rays, a part of the polymer electrolyte sandwiched by the metal electrodes appears darkly. In images of FIGS. 35 to 40, however, the part of the polymer electrolyte that appears darkly is left out for convenience of illustration.

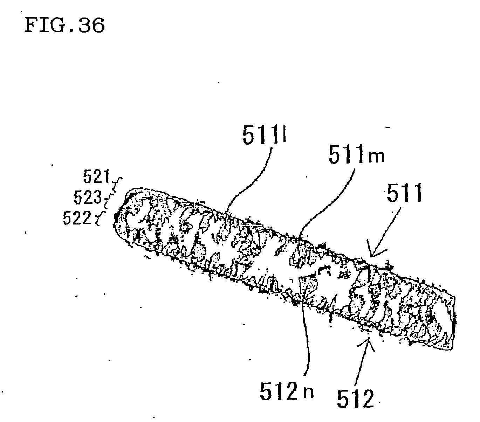

FIG. 35 is a sectional image in a direction perpendicular to the thickness direction of the capacitor of the present invention by X-rays. FIG. 36 is a perspective view obtained by adding leading lines for illustration to FIG. 35.

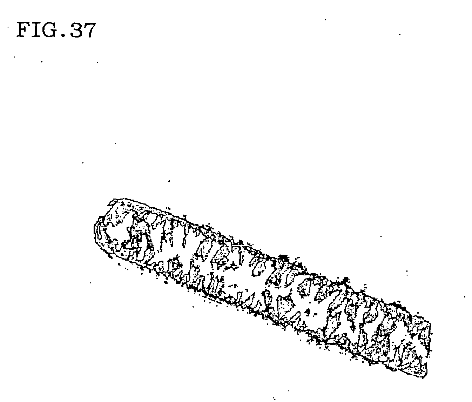

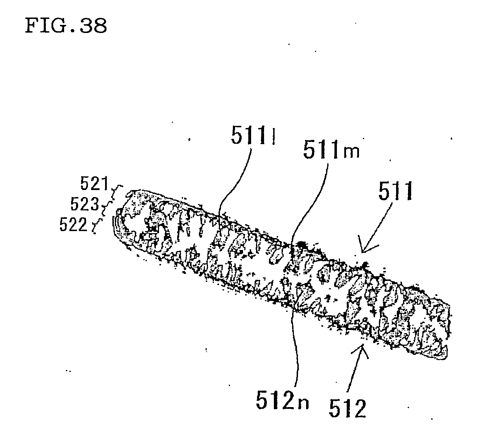

FIG. 37 is a sectional view 9 µm away from FIG. 35. FIG. 38 is a perspective view obtained by adding leading lines for illustration to FIG. 37.

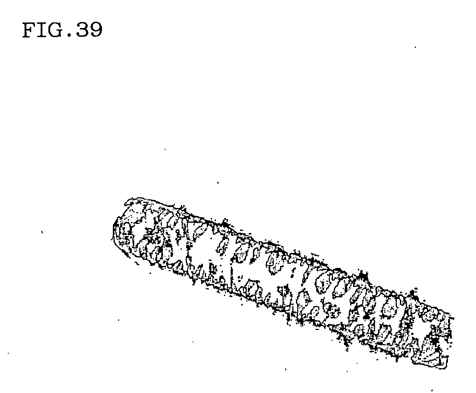

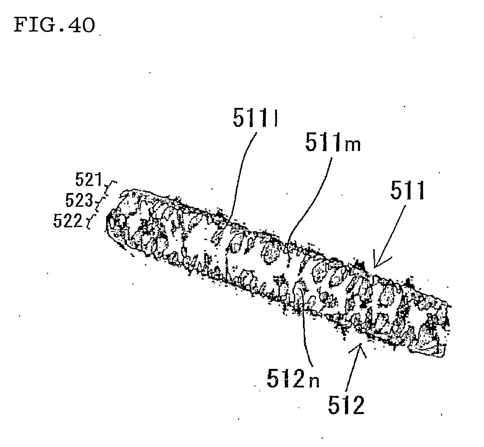

FIG. 39 is a sectional view 9 µm away from FIG. 37, that is, 18 µm away from FIG. 35. FIG. 40 is a perspective view obtained by adding leading lines for illustration to FIG. 39.

No. 500 is a capacitor in this embodiment. Nos. 511 and 512 are metal electrodes and No. 511a is an electrode component forming as an element of the metal electrodes. The metal electrodes form two poles across the polymer electrolyte (not shown), are in contact with the polymer electrolyte, and have projecting portions 511b, 511c, 511d, 512e, 511f, 511h, 512i, 512j, and 511k in interfaces region 521 and 522 with the polymer electrolyte. No. 523 is a polymer electrolyte region forming an insulation region.

That is, as illustrated, the metal electrodes 511 and 512 have projecting portions 511b, 511c, 511d, 512e, 511f, 511h, 512i, 512j, 511k, 5111, 511m, and 512n that project into the inner part of the capacitor, are in contact with the polymer electrolyte inside the capacitor, and form electrode components of the metal electrodes. Projecting portions specified by numerals are intended for illustration.

The projecting portion 511b and the electrode component 511a that appear brightly indicate that they are an image closest to the surface. For example, a rather shady image such as the projecting portion 511f indicates a projecting portion that is present further into the depth direction from the cross section.

All three-dimensional images in the depth direction of the cross sections described above are specified by perspective views to create depth perception and are specified as image views in which the projecting portions between the metal electrodes 511 and 512 move closer to each other as they go deeper in the depth direction.

Though the polymer electrolyte does not appear in the image views by X-rays, the polymer electrolyte has a region filled continuously from the polymer electrolyte region 523 forming the insulation region to boundary regions 521 and 522 in a storage area of the polymer electrolyte divided by a structure of the metal electrodes 511 and 512 including the projecting portions (for example, 511b, 511c, 511d, 512e, 511f, 511h, 512i, 512j, and 511k). Moreover, the metal electrodes have through-holes containing the polymer electrolyte for communication from the surface of the metal electrodes to the polymer electrolyte inside the capacitor.

This is reflected in a fact that the shapes and sizes of the projecting portions specified by Nos. 5511, 511m, and 512n appearing in sectional view images by X-rays change successively in the order of FIG. 35, FIG. 37, and FIG. 39.

### [Possibility of a capacitor mechanism]

As described above, the present capacitor has, together with capacitors according to the first and second embodiments, vastly larger capacitances than conventional capacitors. Such large capacitances may result because, depending on conditions such as selected electrodes, ion types, and solvents, an accumulation mechanism by oxidization reduction reaction or cell reaction is simultaneously generated, in addition to the accumulation mechanism by charge transfer as an electric double layer capacitor. For example, in a capacitor in which a gold electrode is chosen as the metal electrode, propione carbonate as the polar solvent, and Li⁺ as a contained ionic species, alloying of gold (Au) and lithium (Li) may occur in an electrode interface. Thus, a capacitor of the present invention may be a hybrid capacitor to which, in addition to a principle of an original electric double layer capacitor, the principle of redox capacitor or cell is additionally applied. This could be a factor of capacitance improvement of the capacitor of the present invention.

### [Third embodiment]

As a further application of the capacitor according to the first and second embodiments, a capacitor of the present invention can have a large capacitance without providing any projecting portion on the metal electrodes.

This capacitor will be described as a capacitor according to the third embodiment of the present invention.

### (Basic structure of the capacitor according to the third embodiment)

A basic structure of a capacitor of the present invention is a capacitor comprising at least two sheets of substrate, polarized electrodes provided inside two sheets of substrate, and an electrolyte provided between both polarized electrodes. The capacitor of the present invention may contain other useful elements or members than the described components. For example, in addition to the electrolyte, a separator to prevent contact of both electrodes may be provided between the two polarized electrodes.

### (Electrolyte)

Liquid, solid, and gel electrolytes can be used as an electrolyte according to the present invention. Concrete examples of electrolyte will be cited, but the electrolyte is not restricted by the following concrete examples. As an example of the polymer electrolyte whose electrolyte is solid or gel, an ion exchange resin can be cited. Resin types to be used include polyethylene, polystyrene, and fluororesin with an introduced hydrophilic functional group such as a sulfonic group or carboxyl group. More specifically, perfluorocarboxylic acid resin and perfluorosulfonic acid resin can be used and, for example, Nafion resin (perfluorocarboxylic acid resin, DuPont) and Fleomin (perfluorocarboxylic acid resin or perfluorosulfonic acid resin, manufactured by Asahi Glass Co., Ltd.) can be cited.

As liquid electrolytes, electrolytes obtained by dissolving solid electrolytes in a solution used as a solvent and ionizing them, and liquid electrolytes having conductivity in a molten state can be cited. Specifically, as examples of cations forming ionic material to be ionized in a solvent solution, tetraalkyl ammonium ions with an alkyl group whose carbon number is in the range of 1-4 such as (C₂N₅)₄N⁺, (C₂N₅)₃(CN₃)N⁺, and (CN₃)₄N⁺, tetraalkyl phosphonium ions such as (C₂N₅)₄P⁺, univalent ions with a small volume such as H⁺, Li⁺, Na⁺, K⁺, Rb⁺, Cs⁺, and Fr⁺, and furthermore divalent and trivalent ions such as Cu²⁺, Ni²⁺, Co²⁺, Fe²⁺, Fe³⁺, Al²⁺, Al³⁺, Zn²⁺, Pb²⁺, Sa²⁺, Mg²⁺, Ca²⁺, Sr²⁺, and Ba²⁺, and Cr can be cited. As examples of anions forming ionic material, on the other hand, BF₄⁻, PF₆⁻, ClO₄⁻, Ts⁻, SO₄ ²⁻, NO₃⁻, Cl⁻, Br⁻, I⁻, CF₃SO₄⁻, C₄F₉SO₄⁻, (CF₃SO₂)₂N⁻, BCH₃(C₂H₅)₄⁻, B(C₂H₅)₄⁻,, AsF⁻, and SbF₆⁻ can be cited.

As examples of solvent solutions to dissolve these ions, nonaqueous polar solvents such as propylene carbonate, N-methylformamide, γ-butyrolactone, and 1,4-dioxolane can be cited.

### (Substrate)

Substrate according to the present invention is used to assure form stability of the capacitor and also plays a role to maintain polarized electrodes. Solid material with a certain level of topology can be used as material for the substrate without limitation. Since properties required depend on each use, it is preferable to appropriately select material cited below. First, synthetic resin can be selected for the substrate. In this case, the substrate can be made bendable, and at the same time, is rich in flexibility and maintains the topology of the capacitor. The substrate is also economical. Next, metallic material can be selected for the substrate. In this case, the substrate can play a role like a collecting electrode plate. Since the substrate and porous metal electrodes are in contact in a capacitor according to the present invention, the above substrate can be used for an electric connection part. The shape thereof can appropriately be adjusted in thickness like a filmy shape or tabular shape depending on uses. Furthermore, ceramics can be selected for the substrate. Ceramics is a product made from inorganic matter by heat treatment. As main ceramics, metallic oxides, metallic borides, metallic carbides, and metallic nitrides can be cited. Since ceramics has in most cases high hardness and insulating characteristics, a capacitor made of ceramics is suitable for a part requiring strength or a part where insulation should be assured.

### (Polarized electrode)

Polarized electrodes of a capacitor of the present invention are made of porous metal. The porous metal according to the present invention is metal formed substantially by metal only not only on the surface thereof, but also inside thereof. That is, the porous metal according to the present invention does not include porous material coated with metal or porous metal powder formation using a binder. Thus, carbon as an element that often becomes components of plated material or binder is not contained in the porous metal electrodes according to the present invention, except when carbon is contained as impurities. Whether carbon as an element is contained in the polarized electrodes can be determined by separating the polarized electrodes from the capacitor and measuring the polarized electrodes by a publicly known analysis method such as fluorescent X-ray analysis measurement.

Whether any binder component is contained can be determined also by pulverizing the polarized electrodes and measuring pulverized electrodes using infrared analysis measurement or the like.

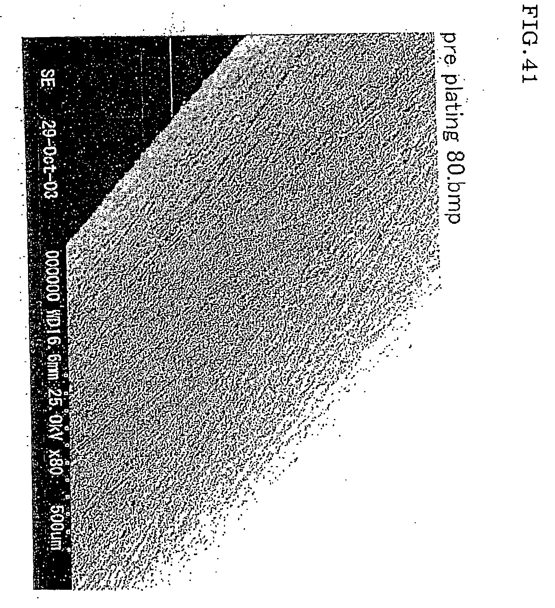

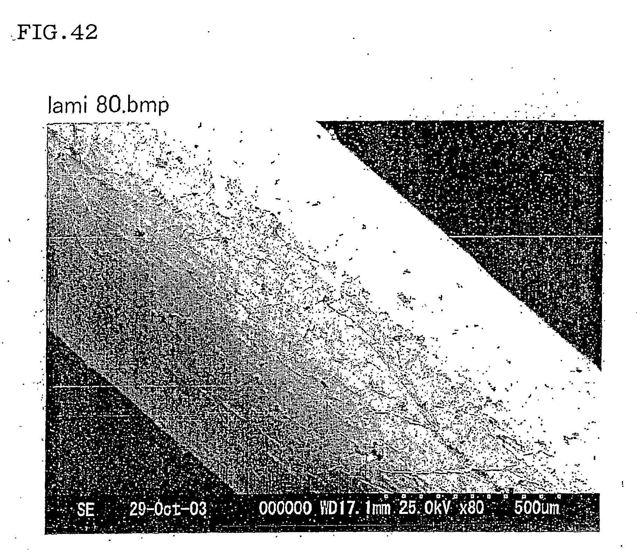

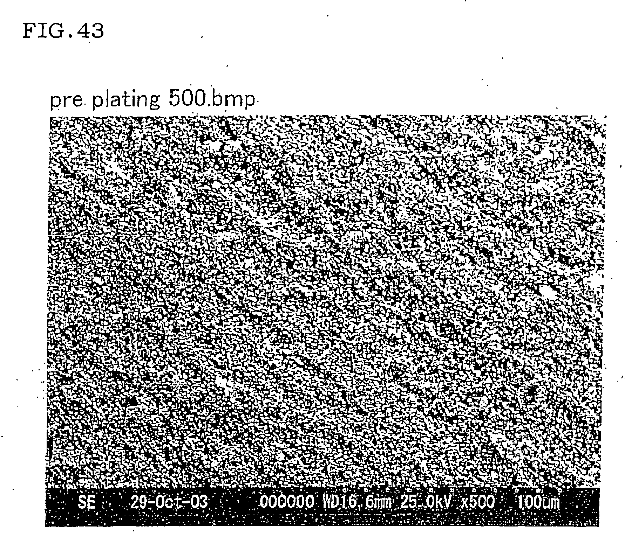

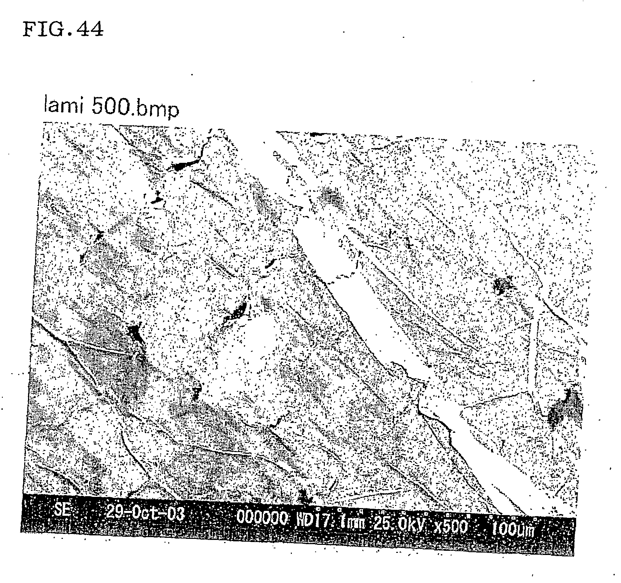

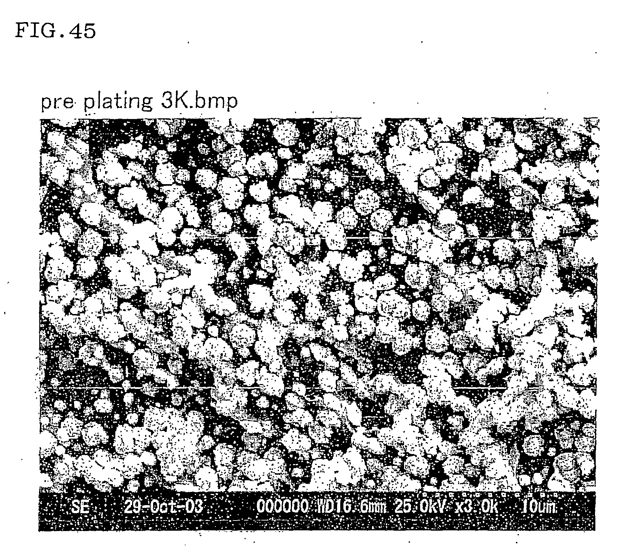

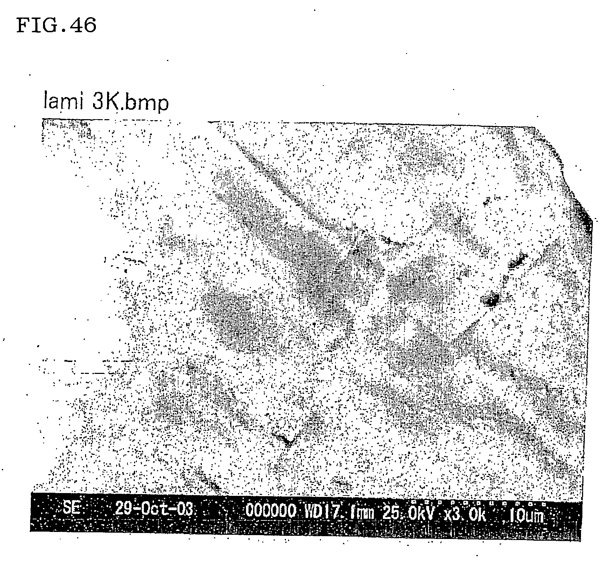

Since the polarized electrodes according to the present invention are made of porous metal, the specific surface area thereof is large. The specific surface area can be measured by determining the quantity of gas or liquid adsorbed on the surface of metal. The surface of porous metal has no metallic luster. That is, in contrast to ordinary metal plates, light incident on the surface of porous metal electrodes is reflected irregularly. Thus, compared with the ordinary metal plates, surface reflectance is lower. As examples of such metal surfaces, FIGS. 41 to 46 show SEM photos of metal electrodes taken by SEM. In FIG. 41, Nos. 603 and 605 are the surface of polarized electrodes using porous metal used for the capacitor of the present invention. In FIG. 42, on the other hand, Nos. 604 and 606 are the surface of polarized electrodes of ordinary metal having a shine for comparison thereof. The shape of all polarized electrodes used for observation is solenoidal. No. 602 in FIG. 41 is an 80x photo, No. 604 in FIG. 43 a 500x photo, and No. 606 in FIG. 45 a 3000x photo. The magnification of each photo can also be found based on an interval of dots shown at a right bottom of each photo. The interval of dots of No. 602 in FIG. 41 is 500 µm, that of No. 604 in FIG. 41 is 100 µm, and that of No. 606 in FIG. 45 is 100 µm. As is evident from these SEM photos, the porous metal according to the present invention is in a state in which metal in particulate shapes is aggregated like Nos. 603 and 605. That is, means such as the surface reflectance or enlarged observation by SEM or the like can be used to determine whether the polarized electrodes made of metal are porous.

Except for quicksilver, which is liquid at room temperature, and metals whose conductivity is lower than that of carbon, metal components can be used for polarized electrodes according to the present invention without limitation. More specifically, cobalt, nickel, copper, ruthenium, rhodium, palladium, silver, cadmium, indium, tin, antimony, platinum, gold, lead, bismuth, boron, nitrogen, vanadium, chrome, manganese, iron, zinc, molybdenum, tungsten, rhenium, and titan can be cited as examples of metal. Among others, particularly when a liquid electrolyte or gel electrolyte is used, metals chemically inactive to the electrolyte are preferable. More specifically, noble metals such as gold, indium, lead, zinc, tin, cadmium, bismuth, antimony, copper, silver, iron, titan, and nickel are preferable.

Particularly preferable metals depend on the electrolyte to be used. If an electrolyte obtained by dissolving by water as a solvent is used, noble metals are particularly preferable. If, on the other hand, an electrolyte obtained by dissolving by polar solvent other than water such as propylene carbonate is used, tin, copper, iron, and nickel are particularly preferable. It is also possible to make an alloy, which is chemically inactive to the solvent, from these metals and use the alloy.

Polarized electrodes provided inside the substrate according to the present invention is preferably formed with porous metal by plating on the substrate surface. This is because integrity of the substrate and polarized electrodes is increased by forming the polarized electrodes on the surface of substrate by plating and thus form stability as a capacitor is further improved. Moreover, because no extra component such as a binder is used, this contributes to improvement of electric characteristics of the capacitor.

### [Structure of capacitor elements]

A capacitor of the present invention can be assembled by laminating, folding, or winding capacitor elements consisting of a solid electrolyte layer and two solid electrode layers formed across the solid electrolyte layer and forming the capacitor elements into a coin type or laminate type to be accommodated in a capacitor container such as a capacitor can or laminate pack. Then, the capacitor elements can be assembled as a capacitor part by can sealing for the capacitor can or heat sealing for the laminate pack. In above methods, a capacitor part can also be assembled by filling the container with a specific electrolyte solution before performing the can sealing or heat sealing of the capacitor container. By accommodating the capacitor of the present invention in a closed-end exterior case and obturating an open end of the exterior case with sealing material made of an elastic member to obtain the capacitor part, which is a chip part. Insulating material with a small coefficient of linear expansion may fill a case in which the capacitor of the present invention is accommodated.

A capacitor of the present invention can be used as a coin type sealed by a metal lid through a gasket, a winding type in which elements wound through a separator are accommodated together with a liquid electrolyte in a metal case between a positive electrode and a negative electrode and obturated, or a laminate type in which layered products formed by laminated elements through a separator are incorporated between the positive electrode and the negative electrode. When the laminate type is adopted, elements may be laminated so that positive electrodes overlap one another and negative electrodes overlap one another.

A capacitor of the present invention can be made into a large plate stacked solid electrolytic capacitor. The metal electrodes of the capacitor of the present invention can be U-shaped or solenoidal. A solenoidal metal electrode can be circular, triangular, square, rectangular, or polygonal. The shape of the capacitor itself of the present invention is arbitrary. If the shape has a corner, a curved surface with a predetermined curvature can be formed in the corner to prevent damage by thermal stress, mechanical stress, or distortion resulting from a difference of thermal expansion with a resin armor body, and leakage current fault.

A capacitor of the present invention can be made a capacitor part of an electrode laminate type or section elliptical winding type. When capacitor elements are wound, a capacitor part of the winding type can be made by using capacitor elements wound through a separator, vinylon nonwoven fabric made mainly of vinylon fabric. In a capacitor part of the winding type, an insulation protection layer may be provided around a peripheral face of wound capacitor elements. In a winding configuration capacitor, meandering linear parts existing continuously in a winding length direction of the capacitor can be used as a lead. If the capacitor of the present invention is used as a wound capacitor, the length of tape used to wind the capacitor to hold it may be shorter than the perimeter of the capacitor elements.

A capacitor of the present invention may be configured as an array type by arranging a plurality of capacitors as a part and integrally packaging them. In the capacitor, square pattern electrodes are created in a single sheet-shaped solid electrolyte to obtain a capacitor in each square. Then, the surface and negative electrode lead frame of each negative electrode layer are bonded to a metal wire using a wire bonder, or after bonding metal foil to at least part of the surface of each negative electrode layer, the surface of the metal foil and the negative electrode lead frame are bonded to the metal wire using the wire bonder.

In a button type capacitor part, a lower base part and a top cover part of a metal container are bonded to be sealed up by insulating ring packing, so that the capacitor elements can be put into the metal container.

After coating the surface of the capacitor elements with resin, they may be inserted into a closed-end tubular aluminum case to form a capacitor part by performing aging after obturating with rubber an opening by deep drawing.

Sealing force can appropriately be improved by improving properties of an obturating member. The obturating member may have a two-layer structure consisting of a first layer that does not allow hydrogen gas located on a capacitor side to pass through or is hard for the hydrogen gas to pass through, and a second layer made of elastic material located on an outside surface of an electrolytic capacitor that is more likely to pass through the hydrogen gas than the first layer. When accommodating a capacitor in a case, the opening may be obturated by forming a pressing groove on the peripheral face of the case as if to sandwich a first layer of the obturating member from above and below. Another possibility is to accommodate a first case in which a capacitor is contained in a second case, obturate the opening the of the second case using an elastic member such as rubber, and a lead terminal of the capacitor is led through the elastic obturating member to the outside.

In a capacitor of the present invention, a layered product having at least two layers of capacitor elements, each consisting of a solid electrolyte and two metal electrodes across the solid electrode, may be coated with a sheath resin so that an anode terminal connected to an electrode layer to be an anode of the capacitor elements and part of a cathode terminal connected to an electrode layer to be an cathode via a conductive adhesive are exposed to an outer surface. The sheath resin can be used as an exterior case by, for example, thermosetting a thermosetting resin such as an epoxy resin. In a laminate type capacitor part, it is preferable to provide working such as lead frame beveling, that is, shaving a sharp-angle part evenly to round it off to alleviate concentration of stress of elements near the sharp-angle part. The lead frame outside the sheath resin may be bent along the sheath resin to make it into a laminate type capacitor part as an external lead. The sheath resin on a surface opposite to an anode lead-through surface on an anode lead-through wire side may be ground.

When forming an outer sheath on the capacitor, electrodes of the capacitor may be exposed by filling resin, forming a pyramidal or conical sheath resin part using a metallic mold, and breaking and removing the sheath resin part.

A sheath resin can generally be formed by using an epoxy thermosetting resin with dip molding (lead wire type) or mold molding (chip type).

Flanks of the capacitor may be coated with resin. If a solid electrolyte layer is more projecting than an electrode, the projecting portion may be covered with thermosetting resin. An insulating resin layer can be provided on the surface of a part where thickness of the solid electrolyte layer is thin of the capacitor of the present invention to improve withstand voltage in corner and edge line parts.

In a configuration of the capacitor part, an electrode terminal can be connected onto a metal electrode. A typical method for connecting the electrode terminal to the metal electrode is to use conductive adhesives including carbon paste and/or silver paste to establish connection for energization. When connecting the electrode terminal, the carbon paste, silver paste, a metallic member may be put between the metal layer and electrode terminal. The capacitor part can control potential differences between terminals and electrodes and electrochemical reaction caused by potential difference current by providing an enveloping layer on the surface of the metal electrodes, an electrochemical oxide film layer on the electrode terminal (electrode tab), or a predetermined ceramic or insulating resin layer (epoxy resin, polyamide, polyimide, polyethylene, polypropylene, and the like) on the surface of the electrode terminal made of metal such as aluminum. Leakage current can be reduced by treating the electrode terminal with a mixture of a specific organic compound such as polypyrrole and styrene sulfonic acid and a solvent. Instead of providing the electrode terminal, a collecting part may be formed by pasting metal foil such as copper and connecting a lead to the collecting part. The electrode terminal preferably has flexural strength. The electrode terminal may be wire-shaped or flat. The oxide film layer preferably has reduced impurities (film deficiency) in the oxide film to prevent leakage current. For uses in which mechanical strength such as terminal strength with which to resist during device mounting is required, nickel metal (such as 42 alloy) is used. An anode terminal of the electrode terminal is approximately V block-shaped with a V-shaped groove and may be formed so that it can engage in the anode bar from a direction perpendicular to an axis line thereof.

A capacitor tab terminal comprising a flat part to mount the capacitor elements, a round bar part to continue to the flat part, and a leader fixed to the round bar part via a weld zone can also be used.

In the capacitor part, a leading electrode can be provided by further placing metal foil on the metal electrodes. A lead part may be connected to a multilayer part after creating the multilayer part by overlapping leading electrodes. The metal surface may be covered with the surface of metal foil whose surface is roughened by etching.

An electrode lead pin may be formed at one end of the metal electrodes. An erection end of the metal electrodes can be formed so that the erection end comprises a curved surface or connected surface bulging like a roof. The erection end of the electrode lead pin can be bulged to a roof shape chosen from pyramidal, conical, centroclinal, semicylindrical, gabled, and hipped to erect the electrode lead pin at the top part or arris part of the roof shape. To provide a prevention plate to prevent lifting of the electrolyte fixed to the electrode lead pin or electrode lead wire to be implanted, the lifting prevention plate may be inserted into the electrode lead pin or electrode lead wire so that a projected part of the lifting prevention plate is in contact with the surface of the capacitor elements.

An internal surface of an L-shaped leg of the anode terminal can be bonded to a sheath resin layer by further bending one end of the L-shaped leg of the anode terminal to the outer side of the L shape and welding the end to the anode lead pin.

To make the capacitor part into a chip type, a chip type capacitor part can be formed by welding an external anode terminal to a lead connected to the electrode terminal or multilayer part, providing exterior features by transfer molding using epoxy resin, and bending parts outgoing from the sheath resin of both the external anode and cathode terminals along the sheath resin and shaping them. A surface conductor layer, which is formed on a cathode leading surface in the sheath resin layer where part of the cathode terminal is exposed to the outside, may be removed after performing a voltage application process (aging process) in high temperature, heat treatment in high temperature atmosphere, or both.

In a capacitor of the present invention, an external electrode made of a metal layer formed directly on the surface of the sheath resin coating the capacitor, wherein the external electrode is electrically connected to the anode and cathode terminals of the capacitor, may be formed. The external electrode may also be formed by providing a base metal layer containing a nonelectrolytic metal layer in an external electrode formation part containing an exposure part of an anode leader and/or a cathode leading layer in the sheath resin.

To connect the external electrode or electrode terminal and a leader, nonelectrolytic plating may be given to the connection.

The external anode terminal may be formed by welding an external anode lead frame to an anode lead erected on the anode, forming an insulating member by molding an anode lead leading surface containing the welded point, cutting an external cathode lead frame led from the insulating member, and bending the lead along the insulating member.

A cathode terminal and an anode terminal may also be provided by fitting a cathode terminal board having a 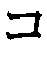 -shaped cross section into the bottom and side of the cathode leading layer, forming a resin armor body on a peripheral surface of the capacitor elements excluding the cathode terminal board, and covering the resin armor body with an anode terminal board on the anode lead leading side opposite to the cathode terminal board.

In a capacitor part using a capacitor of the present invention, a resin armor body may be formed while maintaining conductivity by applying a release agent to an anode lead, immersing capacitor elements in resin liquid after applying a release agent to an exposure surface of the cathode terminal board, forming a resin armor body on a flank of the capacitor to a top surface including a step by drying the resin liquid after lifting the capacitor elements, then after mounting an anode terminal board having a pair of flanges in an opposite side edge thereof on the top surface of the capacitor elements by engaging the flanges thereof in the step, connecting the anode terminal board to the anode lead, and removing the release agent applied to the cathode terminal board and anode lead. The flange may have a 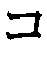 -shaped cross section.

A capacitor part of the chip type may be obtained by forming an anode side step and a cathode side step having predetermined depth on the bottom of the capacitor part on the anode side and cathode side respectively, mounting an L-shaped cathode terminal board on a surface covering a cathode side flank to the cathode side step of capacitor elements, applying the release agent to the cathode terminal board and immersing the capacitor elements in resin liquid, forming a resin armor body on a peripheral surface of the capacitor including the anode side step by drying the resin liquid after lifting the capacitor elements, then mounting an L-shaped anode terminal board on a surface covering an anode side flank to the anode side step to provide the anode terminal board. A capacitor part of the chip type may also be configured in a way that, after forming an insulating resin impregnation part in which the anode is impregnated with an insulating resin near a cross section of the anode body on the external anode electrode layer side, the anode and the external anode electrode layer are electrically connected in a formation region of the insulating resin impregnation part.

In a capacitor part using a capacitor of the present invention, after providing an anode leading part on one electrode of the capacitor and a bending part and connection in an extension of a part where a resist film is applied for masking as the anode leading part, an individual COM terminal may be connected to the connection where a cathode conductive material layer and the anode leading part are provided. An anode lead wire used in the capacitor elements using a capacitor of the present invention may also be used as an R-shaped anode lead wire in part of an edge line on the leading side.

If exterior features are formed with resin in a capacitor of the present invention, moisture-proof coating material may be applied to the surface of the exterior resin. Moreover, a liquid-repellent resin such as a water-repellent resin may be applied to each part constituting the capacitor part of the present invention to an extent that humidity in the solid electrolyte and electrodes is not inhibited. For a lead, a protective layer comprising insulating material may be formed at the base of the lead to prevent short circuits and corrosion.

A capacitor element layered product in which a plurality of capacitor elements are laminated can be configured so that one flank of an exterior member has a cathode layer and the other flank has an anode layer.

In the capacitor elements, corners of metal electrodes can sufficiently be coated with a conductive polymer layer to prevent shorts.

A carbon layer may also be formed on the metal electrodes of the capacitor elements to form a double-layered electrode layer by applying silver paste to the carbon layer.

Furthermore, a collecting electrode plate may be provided in the capacitor part. The collecting electrode plate may be formed by platinum or conductive rubber such as conductive butyl rubber. The collecting electrode plate may also be formed by thermal spraying of metal such as aluminum and nickel. A metallic mesh may also be attached to one side of the electrode layer.

In the capacitor part, when assembling a laminate type capacitor part, a sealing structure can be formed by alternately stacking cells required for a withstand voltage and packing or Teflon (registered trademark) spacers, and at the end, holding the laminate between end plates and binding it tightly. The laminate can also be sealed by separating each end plate into a fastening plate and a collecting electrode plate, holding a flexible sheet between the fastening plate and collecting electrode plate, and tightening upper and lower fastening plates using bolts to press the collecting electrode plate and capacitor elements from above and below via the flexible sheet.

To facilitate immersion in liquid, a capacitor of the present invention may have at least one hollow on at least one of the surfaces of electrodes in such a way that the hollow does not at least reach the other electrode.

To make a capacitor part of the winding type, accommodate capacitor elements in a case made of metal such as aluminum or a case made of synthetic resin to have a sealing structure. For example, a resin layer can be formed at least on a peripheral surface of the capacitor elements by accommodating the capacitor elements in a closed-end tubular exterior case made of, for example, aluminum and filling a resin having hygroscopicity when hardening in a space between the exterior case and capacitor elements. If the capacitor elements use a nonaqueous organic solvent as the electrolyte, the sealing structure preferably has a residual air amount of less than 5%. Moreover, in the capacitor part, by using an obturation body combining a hard member and an elastic member, transmission of mechanical stress applied to a lead wire into the inner part can be prevented and penetration of humidity into the inner part can also be prevented.

If an electrolyte seeps out after an opening appears in a thin wall part, by providing a thin wall part in an important section of a metal case, accommodating the capacitor and filling an electrolyte, and covering the metal case with an insulating sleeve, ions in the electrolyte that seeped out can be captured by the insulating sleeve.

In the capacitor part, an oxide film can also be formed on a lead. By forming, for example, a water-repellent resin in a junction part of the lead, adhesion of solid electrolyte to the lead can be prevented. Leakage current fault can further be reduced by forming, for example, an epoxy resin at the base of the bonded lead, reinforcing the lead base so that stress is not received, and controlling generation of oxide film deficiency.

The capacitor part can adopt a publicly known structure and an insulating gasket may suitably be provided. Furthermore, after obturation, publicly known aging can be performed by applying a predetermined voltage in a predetermined temperature.

The capacitor part may have a plurality of positive terminals having a comb-shaped aluminum lead frame whose tip is bent.

A capacitor of the present invention may be manufactured by cutting out in each square a capacitor formed in square patterns of a solid electrolyte and bonding an electrode of the obtained capacitor to an electrode lead terminal to form a capacitor element.

A capacitor of the present invention may contain a surface active agent in a solution contained in the solid electrolyte to improve wettability and impregnating ability.

If a capacitor of the present invention is accommodated inside an insulation container, gel insulating material and cushioning material, typically an elastic body, may fill a gap between the capacitors or the capacitor and insulation container to substantially reduce mechanical vibration and impact transmitted to the capacitor.

### (Size of the capacitor elements)

A capacitor of the present invention can take a publicly known size, for example, 7.3 mm X 4.3 mm X 2.0 mm. For example, the capacitor can generally take a form length of 10 mm or more, preferably 20 mm or more, and a preferable range of 25-50 mm can be set. Similarly, the capacitor can generally take a form width of 10 mm or more, preferably 20 mm or more, and the preferable range of 25-50 mm can be set. The capacitor of the present invention may be, for example, a cylindrical capacitor part having case sizes 10 mm X 16 mmL, φ 8 X 5L, 4 φ X 7L, 5 φ X 2.8L, or 5 φ X 3L

### Examples

Examples and comparative examples of the present invention will be shown, but the present invention is not restricted by these examples. The trade name "Potentio Galvanostat Model263A" (manufactured by Princeton Applied Research) was used to measure capacitance by the cyclic voltammetry method (measuring method A in Tables 1-4). Measured values are those in the third cycle under the measurement conditions of the voltage in the range of -0.5 V to +0.5 V and the scanning voltage rate of 10 mV/sec. To measure capacitance by this method, the measuring object, a polymer electrolyte, was cut into capacitors of 1 mm X 20 mm in size. Measured values by the constant current discharge method are values conforming to the standard No. EIAJ RC-2377 by using the trade name "HJ-201B" (manufactured by Hokuto Denko Co., Ltd.). To measure capacitance by this method, the measuring object, a polymer electrolyte, was cut into capacitors of 10 mm X 10 mm in size in a swollen state.

### (Examples 1-25)

Examples 1-25 are examples relating to capacitors according to the first embodiment of the present invention. In Examples 1-13, water was used as a solvent for capacitor elements. In Examples 14-25, nonaqueous polar liquid was used as a solvent for the capacitor elements.

### (Examples 1-3)

### (Metal electrode formation step)

The following steps (1)-(3) were repeated six cycles for a membranous polymer electrolyte (fluororesin ion exchange resin: perfluorocarboxylic acid resin, under the trade name "Fleomin", manufactured by Asahi Glass Co., Ltd., ion exchange capacity: See Table 1) whose thickness in a dry state is 160 µm to obtain a polymer electrolyte having a formed metal layer. (1) Adsorption step: Immerse in a solution of dichlorophenanthroline gold chloride for 12 hours to cause a molding to adsorb a dichlorophenanthroline gold complex. (2) Reduction step: The adsorbed dichlorophenanthroline gold complex was reduced in a solution containing sodium sulfite to form gold electrodes on the surface of the membranous polymer electrolyte. The reduction step of the dichlorophenanthroline gold complex continued for six hours by gradually adding sodium sulfite at temperature 60-80 °C of the solution. Then, (3) Washing step: The membranous polymer electrolyte on which gold electrodes were formed was taken out and washed for one hour with water at temperature 70 °C. In this case, an ionic species contained in the polymer electrolyte is a sodium ion originating from sodium sulfite.

### (Capacitor element preparation step)

The polymer electrolyte having a metal layer (metal electrodes) formed by the aforementioned steps was cut into predetermined sizes required for each measurement. Then, the polymer electrolyte was immersed in water containing a predetermined amount of sodium ions as a solution for capacitor elements to obtain capacitors for Examples 1-3. Measurement of the degree of swelling in Examples 1-3 was made before the adsorption step.

### (Example 4)

### (Pretreatment step)

A membranous polymer electrolyte (fluororesin ion exchange resin: perfluorocarboxylic acid resin, under the trade name "Fleomin", manufactured by Asahi Glass Co., Ltd., ion exchange capacity: 1.4 meq/g) whose thickness in a dry state is 160 µm was immersed in methanol, which serves as a swelling solvent, at 20 °C for 30 min or longer. The thickness of the swollen membranous polymer electrolyte was measured, the ratio (degree of swelling (%)) of increase in thickness after swelling with respect to the thickness in a dry state was calculated, and the membranous polymer electrolyte was immersed in the swelling solvent so that the degree of swelling thereof becomes the value (50%) listed in Table 1.

### (Metal electrode formation step)

After swelling the membranous polymer electrolyte by immersing it in the swelling solvent, the following steps (1)-(3) were repeated six cycles to obtain a polymer electrolyte (capacitor) having a formed metal layer. (1) Adsorption step: Immerse in a solution of dichlorophenanthroline gold chloride for 12 hours to cause a molding to adsorb a dichlorophenanthroline gold complex. (2) Reduction step: The adsorbed dichlorophenanthroline gold complex was reduced in a solution containing sodium sulfite to form gold electrodes on the surface of the polymer electrolyte. The reduction step of the dichlorophenanthroline gold complex continued for six hours by gradually adding sodium sulfite at temperature 60-80 °C of the solution. Then, (3) Washing step: The membranous polymer electrolyte on which gold electrodes were formed was taken out and washed for one hour with water at temperature 70 °C. In this case, an ionic species contained in the polymer electrolyte is a sodium ion originating from sodium sulfite.

### (Capacitor element preparation step)

The polymer electrolyte having a metal layer (metal electrodes) formed by the aforementioned steps was cut into predetermined sizes required for each measurement. Then, the polymer electrolyte was immersed in water containing a predetermined amount of sodium ions as a solution for capacitor elements to obtain a capacitor for Example 4.

### (Example 5)

A capacitor for Example 5 was obtained by the same steps as those for Example 4, except that the immersion time was shortened to reduce the degree of swelling to 40%.

### (Example 6)

A capacitor for Example 6 was obtained by the same steps as those for Example 4, except that the time to immerse the membranous polymer electrolyte in ethanol was changed from one hour to 30 min and the steps (1)-(3) were repeated eight cycles instead of six cycles.

### (Example 7)

A capacitor for Example 7 was obtained by the same steps as those for Example 4, except that the time to immerse the membranous polymer electrolyte in ethanol was changed from 30 min to one hour and the steps (1)-(3) were repeated 10 cycles instead of six cycles.

### (Example 8)

A capacitor for Example 8 was obtained by the same steps as those for Example 4, except that a membranous polymer electrolyte (fluororesin ion exchange resin: perfluorocarboxylic acid resin, under the trade name "Fleomin", manufactured by Asahi Glass Co., Ltd., ion exchange capacity: 1.8 meq/g) whose thickness is 160 µm was used as the membranous polymer electrolyte and a methanol-water mixed solvent (methanol: water = 3 : 7) was used as the swelling solvent.

### (Example 9)

A capacitor for Example 9 was obtained by the same steps as those for Example 4, except that a membranous polymer electrolyte (fluororesin ion exchange resin: perfluorocarboxylic acid resin, under the trade name "Fleomin", manufactured by Asahi Glass Co., Ltd., ion exchange capacity: 1.8 meq/g) whose thickness is 160 µm was used as the membranous polymer electrolyte and a methanol-water mixed solvent (methanol: water = 4 : 6) was used as the swelling solvent.

### (Examples 10 and 11)

A capacitor for Example 10 or a capacitor for Example 11 was obtained by the same steps as those for Example 4, except that dimethyl sulfoxide (DMSO) or N-methylpyrrolidinone (NMP) was used as the swelling solvent, instead of methanol.

### (Example 12)

A capacitor for Example 12 was obtained by the same steps as those for Example 4, except that four cycles of the steps (1)-(3) of Example 4 were performed.

### (Example 13)

A capacitor for Example 13 was obtained by the same steps as those for Example 4, except that a membranous polymer electrolyte (perfluorocarboxylic acid resin, under the trade name "Fleomin", manufactured by Asahi Glass Co., Ltd.) whose ion exchange capacity is 1.1 meq/g was used, instead of the membranous polymer electrolyte whose ion exchange capacity is 1.4 meq/g.

**[Table 1]**

| | | Examples | | | | | | |
|---|---|---|---|---|---|---|---|---|
| | | 1 | 2 | 3 | 4 | 5 | 6 | 7 |
| Ion exchange capacity (meq/g) | | 1.4 | 1.8 | 1.1 | 1.4 | 1.4 | 1.4 | 1.4 |
| Pretreatment | Swelling solution | Water | Water | Water | MeOH | MeOH | MeOH | MeOH |
| | Degree of swelling (%) | 10 | 10 | 10 | 50 | 40 | 60 | 60 |
| Metal electrode formation step Number of cycles | | 6 | 6 | 6 | 6 | 6 | 8 | 10 |
| Element structure | Solvent | Water | Water | Water | Water | Water | Water | Water |
| | Electrode | Gold | Gold | Gold | Gold | Gold | Gold | Gold |
| | Ion | Na⁺ | Na⁺ | Na⁺ | Na⁺ | Na⁺ | Na⁺ | Na⁺ |
| Capacitance | Measuring method A ^{Note 1} (mF/cm²) | 1.5 | 3.4 | 1.0 | 8.4 | 8.1 | 24.0 | 27.5 |
| | Measuring method B ^{Note 2} (F/cm³) | 2.0 | 3.0 | 2.0 | 5.5 | 5.0 | 10.0 | 13.5 |

| | | | | | | | | |
|---|---|---|---|---|---|---|---|---|
| Note 1) Measuring method A: Cyclic voltammetry method with two electrodes | | | | | | | | |
| Note 2) Measuring method B: Constant current discharge method conforming to the Standard No. EIAJ RC-2377 of the Japan Electronics Industries Association Standard. | | | | | | | | |

**[Table 2]**

| | | Examples | | | | | |
|---|---|---|---|---|---|---|---|
| | | 8 | 9 | 10 | 11 | 12 | 13 |
| Ion exchange capacity (meq/g) | | 1.8 | 1.8 | 1.4 | 1.4 | 1.4 | 1.1 |
| Pretreatment | Swelling solution | MeOH:Water=3:7 | MeOH:Water=4:6 | DMSO | NMP | NeOH | NeOH |
| | Degree of swelling (%) | 50 | 70 | 30 | 30 | 50 | 50 |
| Metal electrode formation step Number of cycles | | 6 | 6 | 6 | 6 | 4 | 6 |
| Element structure | Solvent | Water | Water | Water | Water | Water | Water |
| | Electrode | Gold | Gold | Gold | Gold | Gold | Gold |
| | Ion | Na⁺ | Na⁺ | Na⁺ | Na⁺ | Na⁺ | Na⁺ |
| Capacitance | Measuring method A ^{Note 1} (mF/cm²) | 6.0 | 5.8 | 7.0 | 6.8 | 5.0 | 5 |
| | Measuring method B ^{Note 2} (F/cm³) | 5.0 | 4.5 | 5.0 | 4.5 | 4.5 | 3.5 |

| | | | | | | | |
|---|---|---|---|---|---|---|---|
| Note 1) Measuring method A: Cyclic voltammetry method with two electrodes | | | | | | | |
| Note 2) Measuring method B: Constant current discharge method conforming to the Standard No. EIAJ RC-2377 of the Japan Electronics Industries Association Standard | | | | | | | |

### (Examples 14-25)

### (Pretreatment step)

A membranous polymer electrolyte (fluororesin ion exchange resin: perfluorocarboxylic acid resin, under the trade name "Fleomin", manufactured by Asahi Glass Co., Ltd., ion exchange capacity: 1.4 meq/g) whose thickness in a dry state is 160 µm was immersed in methanol, which serves as a swelling solvent, at 20 °C for 30 min or longer.

The thickness of the swollen membranous polymer electrolyte was measured, the ratio (degree of swelling (%)) of increase in thickness after swelling with respect to the thickness in a dry state was calculated, and the membranous polymer electrolyte was immersed in the swelling solvent so that the degree of swelling thereof becomes the value (50%) listed in Table 3 or 4.

### (Metal electrode formation step)

The following steps (1)-(3) were repeated the predetermined number (4 to 10) of cycles for a membranous polymer electrolyte (fluororesin ion exchange resin: perfluorocarboxylic acid resin, under the trade name "Fleomin", manufactured by Asahi Glass Co., Ltd., ion exchange capacity: See Table 3/4) whose thickness in a dry state is 160 µm to obtain a polymer electrolyte having a formed metal layer. (1) Adsorption step: Immerse in a solution of dichlorophenanthroline metallic chloride having a desired metal species (listed in Table 3/4) as a cation species thereof for 12 hours to cause a molding to adsorb a dichlorophenanthroline metallic complex. (2) Reduction step: The adsorbed dichlorophenanthroline metallic complex was reduced in a solution containing sodium sulfite to form electrodes of the desired metal species on the surface of the membranous polymer electrolyte. The reduction step of the dichlorophenanthroline gold complex continued for six hours by gradually adding sodium sulfite at temperature 60-80 °C of the solution. Then, (3) Washing step: The membranous polymer electrolyte on which gold electrodes were formed was taken out and washed for one hour with water at temperature 70 °C.

### (Ion exchange step)

The ionic species contained in the polymer electrolyte obtained through the aforementioned steps is the sodium ion originating from sodium sulfite and a step to exchange the sodium ion for a desired ionic species was performed. The ion exchange was performed by immersing the polymer electrolyte in a solution containing the desired ion species (listed in Table 3/4) for 12 hours. Then, the polymer electrolyte having the desired exchanged ionic species was vacuum-dried for 30 min to completely remove moisture content contained in the polymer electrolyte. In the field of Element structure - Solvent in Table 3, PC is an abbreviation for propylene carbonate, DMSO for dimethyl sulfoxide, and NMP for N-methylpyrrolidinone.

### (Capacitor element preparation step)

The polymer electrolyte having a metal layer (metal electrodes) formed by the aforementioned steps was cut into predetermined sizes required for each measurement. Then, the polymer electrolyte was immersed in a desired nonaqueous polar liquid (listed in Table 3/4) containing a predetermined amount of a desired ionic species as a solution for capacitor elements to obtain capacitors for Examples 14-25.

**[Table 3]**

| | | Examples | | | | | |
|---|---|---|---|---|---|---|---|
| | | 14 | 15 | 16 | 17 | 19 | 20 |
| Ion exchange capacity (meq/g) | | 1.8 | 1.1 | 1.4 | 1 | 1.8 | 1.8 |
| Pretreatment | Swelling solution | MeOH | MeOH | MeOH | MeOH | MeOH | MeOH |
| | Degree of swelling (%) | 50 | 50 | 50 | 50 | 50 | 50 |
| Metal electrode formation step Number of cycles | | 6 | 6 | 6 | 6 | 8 | 10 |
| Element structure | Solvent | γ-butyrolactone | γ-butyrolactone | DMSO | PC | PC | PC |
| | Electrode | Copper | Iron | Nickel | Gold | Gold | Gold |
| | Ion | (C₂H₅)₄N⁺ | (C₂H₅)₄N⁺ | Na⁺ | H⁺ | Li⁺ | Li⁺ |
| Capacitance | Measuring method A ^{Note 1} (mF/cm²) | 8.0 | 6.8 | 6.8 | 4.0 | 25.0 | 30.0 |
| | Measuring method B ^{Note 2} (F/cm³) | 5.0 | 3.5 | 4.0 | 20 | 18.0 | 22.0 |

| | | | | | | | |
|---|---|---|---|---|---|---|---|
| Note 1) Measuring method A: Cyclic voltammetry method with two electrodes | | | | | | | |
| Note 2) Measuring method B: Constant current discharge method conforming to the Standard No. EIAJ RC-2377 of the Japan Electronics Industries Association Standard. | | | | | | | |

**[Table 4]**

| | | Examples | | | | |
|---|---|---|---|---|---|---|
| | | 21 | 22 | 23 | 24 | 25 |
| Ion exchange capacity (meq/g) | | 1.8 | 1.8 | 1.4 | 1.4 | 1.4 |
| Pretreatment | Swelling solution | MeOH | MeOH | MeOH | MeOH | MeOH |
| | Degree of swelling (%) | 50 | 50 | 50 | 50 | 50 |
| Metal electrode formation step Number of cycles | | 6 6 6 | | | 6 | 4 |
| Element structure | Solvent | DMSO | PC | NMP | DMSO | γ-butyrolactone |
| | Electrode | Gold | Gold | Copper | Nickel | Copper |
| | Ion | (C₂H₅)₄N⁺ | (C₂H₅)₄N⁺ | (CH₃)₄N⁺ | (CH₃)₄N⁺ | Mg²⁺ |
| Capacitance | Measuring method A ^{Note 1} (mF/cm²) | 15.0 | 30.0 | 31.0 | 20.0 | 15.0 |
| | Measuring method B ^{Note 2} (F/cm³) | 10.5 | 22.5 | 15.0 | 13.0 | 10.0 |

| | | | | | | |
|---|---|---|---|---|---|---|
| Note 1) Measuring method A: Cyclic voltammetry method with two electrodes | | | | | | |
| Note 2) Measuring method B: Constant current discharge method conforming to the Standard No. EIAJ RC-2377 of the Japan Electronics Industries Association Standard | | | | | | |

### [Evaluation]

### (Capacitance)

Table 1 and Table 2 list actual measurements of measured using the cyclic voltammetry method with two electrodes (measuring method A) and the constant current discharge method (measuring method B). The thickness of the obtained capacitors of Examples 1-25 was 160 µm.

### (Results)

The capacitor of Example 1 obtained by the nonelectrolytic plating process of the present invention showed, when compared with capacitance of conventional capacitors shown by a conventional technology, a larger capacitance of 1.5 mF/cm² by the cyclic voltammetry method and 2.0 F/cm³ by the constant current discharge method. The capacitors of Examples 2 and 3 also showed 3.4 mF/cm² and 1.0 mF/cm² by the cyclic voltammetry method, and 3.0 F/cm³ and 2.0 F/cm³ by the constant current discharge method respectively.

The capacitors of Examples 4-13 showed, when the degree of swelling in the swelling step was 40-60%, that is, the thickness of the polymer electrolyte in use in a swollen state (thickness of the swollen membranous polymer electrolyte) was 140-160% when compared with the polymer electrolyte in a dry state (dry thickness) larger capacitances than the capacitors of Examples 1-3.

The capacitors of Examples 4 and 5 used methanol as the swelling solvent thereof and showed excellent capacitances of 8 mF/cm² or more by the cyclic voltammetry method and 5.0 F/cm³ or more by the constant current discharge method. In Examples 7 and 8, because nonelectrolytic plating was repeated at least eight cycles in which the reduction step is performed after the adsorption step, excellent capacitances of 20 mF/cm² or more by the cyclic voltammetry method and 10.0 F/cm³ or more by the constant current discharge method were obtained.

The capacitors of Examples 14-25 used nonaqueous polar liquid as the solvent for the capacitors, but even using such liquid, they still showed excellent capacitances of 4 mF/cm² or more by the cyclic voltammetry method and 2.0 F/cm³ or more by the constant current discharge method. Among others, like Examples 1 and 20, using a polymer electrolyte whose ion exchange capacity is 1.8 meq/g, and eight or 10 cycles of the nonelectrolytic plating process, capacitances of the capacitors thus obtained were particularly excellent with 25 mF/cm² or more by the cyclic voltammetry method and 18 F/cm³ or more by the constant current discharge method. Furthermore, we have found that, like Example 22, capacitors having large capacitances could be obtained by appropriately combining the solvent, electrolyte, and electrode metal, and the like in the pretreatment step.

### (Example 26)

Example 26 is an example of the capacitor of the present invention in which metal electrodes are formed by a porous metal membrane and projecting portions.

The following steps (1)-(3) were repeated 10 cycles for a membranous polymer electrolyte (fluororesin ion exchange resin: perfluorocarboxylic acid resin, under the trade name "Fleomin", manufactured by Asahi Glass Co., Ltd., ion exchange capacity: 1.4 meq/g) whose thickness in a dry state is 160 µm to obtain a polymer electrolyte with porous metal electrodes formed on the surface thereof. (1) Adsorption step: Immerse in a solution of dichlorophenanthroline gold chloride for 12 hours to cause a molding to adsorb a dichlorophenanthroline gold complex. (2) Reduction step: The adsorbed dichlorophenanthroline gold complex was reduced in a solution containing sodium sulfite to form gold electrodes on the surface of the polymer electrolyte. The reduction step of the dichlorophenanthroline gold complex continued for six hours by gradually adding sodium sulfite at temperature 40-50 °C of the solution. (3) Washing step: Next, a layered product with porous gold electrodes formed on the surface of the polymer electrode was taken out and washed for one hour with water at temperature 70 °C to obtain a capacitor for Example 26.

### (Evaluation)

### (SEM photo)

The capacitor obtained by Example 26 was cut in a direction perpendicular to the capacitor thickness direction to cut out a cross section. Predetermined processing for SEM observation was performed for the cutout cross section and then the cross section of the capacitor was observed by taking SEM photos (400x). FIG. 16 shows an SEM photo of the capacitor cross section of Example 26.

### (Capacitance)

Capacitance of the capacitor of Example 26 was measured. Table 5 lists the result. The capacitance in this application is a value measured by the cyclic voltammetry method with two electrodes. The trade name "Potentio Galvanostat Model263A" (manufactured by Princeton Applied Research) was used to make actual measurements by the cyclic voltammetry method. Measurement conditions were the voltage in the range of -0.5 V to +0.5 V and the scanning voltage rate of 10 mV/sec, and a value in the third cycle was measured.

**(Table 5)**

| | Electric double layer capacity (µF/cm²) |
|---|---|
| Example 26 | 1000 |

### (Results)

It is evident from the SEM photo in FIG. 16 that metal electrodes of Example 26 have a porous metal membrane and projecting portions penetrating into the polymer electrolyte formed on the surface of the polymer electrolyte.

It is evident from Table 5 that the capacitor of Example 26 showed a large capacitance of 10000 µF/cm².

### (Examples 27-31)

Examples 27-31 are examples relating to capacitors according to the first embodiment of the present invention. Details of the capacitor performance evaluation are the same as those of Examples 1-25. However, in Examples 27-31, capacitances were measured only by the constant current discharge method.

### (Examples 27-29)

### (First step)

A membranous polymer electrolyte (fluororesin ion exchange resin: perfluorocarboxylic acid resin, under the trade name "Fleomin", manufactured by Asahi Glass Co., Ltd., ion exchange capacity: 1.4 meq/g) whose thickness in a dry state is 160 µm was immersed in methanol, which serves as a swelling solvent, at 20 °C for 30 min or longer. The thickness of the swollen membranous polymer electrolyte was measured, the ratio (degree of swelling (%)) of increase in thickness after swelling with respect to the thickness in a dry state was calculated, and the membranous polymer electrolyte was immersed in the swelling solvent so that the degree of swelling thereof becomes the value (50%).

### (Second step)

After swelling the membranous polymer electrolyte by immersing it in the swelling solvent, the following steps (1)-(3) were repeated 10 cycles to obtain a polymer electrolyte having formed metal electrodes. (1) Adsorption step: Immerse in a solution of dichlorophenanthroline gold chloride for 12 hours to cause a molding to adsorb a dichlorophenanthroline gold complex. (2) Reduction step: The adsorbed dichlorophenanthroline gold complex was reduced in a solution containing sodium sulfite to form gold electrodes on the surface of the polymer electrolyte. The reduction step of the dichlorophenanthroline gold complex continued for six hours by gradually adding sodium sulfite at temperature 60-80 °C of the solution. Then, (3) Washing step: The polymer electrolyte on which gold electrodes were formed was taken out and washed for one hour with water at temperature 70 °C.

### (Third step)

The polymer electrolyte with formed gold electrodes was immersed in water as a solvent for electrolysis and then the electrolysis was carried out under conditions (voltage, energization time) listed in Table 1.

### (Fourth step)

The polymer electrolyte on which metal electrodes were formed through the aforementioned steps was vacuum-dried at 80 °C for 30 min to completely remove moisture content contained in the polymer electrolyte. The polymer electrolyte on which the dry metal electrodes were formed was immersed in a 1 mol/L solution of propylene carbonate (polar liquid) containing Li(CF₃SO₂)₂N (ionic material) to perform ion exchange and the liquid electrolyte was filled in space parts of the polymer electrolyte to obtain capacitor of Examples 27-29.

### (Example 30)

A capacitor of Example 30 was obtained by the same steps as those of Examples 27-29, except that the solvent for electrolysis in the third step was changed to a 1:1 mixed solution of water and methanol.

### (Example 31)

A capacitor of Example 31 was obtained by the same steps as those of Examples 27-29, except that the solvent for electrolysis in the third step was changed to a 9:1 mixed solution of water and methanol.

### (Evaluation)

### (SEM photo)

The obtained capacitors were cut in a direction perpendicular to the capacitor thickness direction to cut out cross sections. Predetermined processing for SEM observation was performed for the cutout cross sections and then the cross sections of the capacitors were observed by taking SEM photos. FIGS. 2-7 show SEM photos of the capacitor cross sections of Examples 27-31. Table 6 shows the correspondence between Example and SEM photo.

### (Capacitance)

Capacitance of each Example was measured in the same manner as Examples 1-25. Capacitances were measured at the measuring voltage of 2.0-3.0 V. Table 6 lists obtained actual measurements. For part of the Examples, capacitances at the measuring voltage of 3.8-4.3 V were also measured.

**(Table 6)**

| | | Examples | | | | |
|---|---|---|---|---|---|---|
| | | 27 | 28 | 29 | 30 | 31 |
| Third step | Solvent (mixing ratio) | Water | Water | Water | Water+MeOH (1:1) | Water+MeOH (9:1) |
| | Electrolysis voltage (V) | 10 | 7 | 10 | 10 | 10 |
| | Energization time (min) | 5 1 1 | | | 1 | 1 |
| | SEM photo No. | Fig. 301 | Fig. 302 | Fig. 303 | Fig. 304 | Fig. 305 |
| | Capacitance (F/cm³) | 50 | 30 | 40 | 40 | 65 |
| Note) MeOH: methanol, PC: propylene carbonate | | | | | | |
| Note) Capacitance measuring voltage: 2.0-3.0 V | | | | | | |

### (Results)

As is evident from the SEM photos, the capacitors of Examples 27-31 have a plurality of space parts in the polymer electrolyte. Many space parts have an approximate circular shape or an approximate semicircular shape. All capacitors of Examples 27-31 showed large capacitances of 30 F/cm³ or more by the constant current discharge method, and all capacitors except that of Example 28 showed 40 F/cm³ or more. Furthermore, the capacitor of Example 31 showed a large capacitance of 65 F/cm³.

The capacitance at the measuring voltage of 3.8-4.3 V was 30 F/cm³ in Example 27, 30 F/cm³ in Example 29, and 20 F/cm³ in Example 31.

### (Examples 32-34)

Examples 32-34 are examples relating to capacitors according to the first embodiment of the present invention.

### (Examples 32, 33: nonelectrolytic plating process)

Plating was carried out at 60 °C of the plating solution by setting up a platinum coated titan electrode as the anode and an aluminum plate 40 X 20 mm, a plating substrate, as the cathode in a 250 ml gold plating solution "Nissin gold 24F" (manufactured by Nissin Kasei Co., Ltd.). Potentiostat/Galvanostat (HA-151) (manufactured by Hokuto Denko Co., Ltd.) was used as the power supply. For Examples 32 and 33, the voltage was 1.28 V and 1.46 V, the current 14 mA and 17 mA, and the plating time 10 min and 15 min respectively. In both cases, lusterless porous gold deposited on the surface of the aluminum plate.

### (Example 34: nonelectrolytic plating process)

A degreasing treated ABS resin plate (50 X 40 mm) was immersed in a palladium saline solution at temperature 60 °C for six min for catalyzing and then, the plate was immersed in a 7% sulfuric acid solution at temperature 25 °C for five min to reduce palladium salts. The treated ABS resin was plated in a mixed solution (temperature 70 °C) of 3.4 mL of gold plating solution "OPC Muden Gold 25-1" (Okuno Chemical Industries Co., Ltd.), 5 mL of reducing agent "OPC Muden Gold 25-2" (Okuno Chemical Industries Co., Ltd.), 10 mL of lye containing cyanogens "OPC Muden Gold 25-M" (Okuno Chemical Industries Co., Ltd.), and 50 mL of distilled water for an hour. With the aforementioned steps, lusterless porous gold deposited on the surface of the ABS resin plate.

### (Results)

To compare with capacitors with gold electrodes obtained in Examples 32-34, electric double layer capacities of an aluminum plate (comparative example 1) and an aluminum plate obtained by providing etching roughening treatment to the aluminum plate by acid treatment (comparative example 2) were measured. Table 7 shows the results.

**[Table 7]**

| | Manufacturing method of metal electrodes | Electric double layer capacity (µF/cm²) |
|---|---|---|
| Example 32 | Electrolytic plating process (1.28 V, 14 mA, 10 min) | 1100 |
| Example 33 | Electrolytic plating process (1.46 V, 17 mA, 15 min) | 2300 |
| Example 34 | Nonelectrolytic plating process | 9800 |
| Comparative Example 1 | Aluminum plate | 20 |
| Comparative Example 2 | Etching roughening | 350 |

It is clear from Table 7 that porous metal electrodes prepared by the electrolytic plating process or nonelectrolytic plating process showed large electric double layer capacities. Particularly porous metal electrodes prepared by the nonelectrolytic plating process showed large electric double layer capacities. Since an electrode having a large electric double layer capacity generally contributes, when used as an electrode of a capacitor, to improving capacitance of the capacitor, the porous electrode prepared by the nonelectrolytic plating process is suitable as an electrode of a capacitor.

### INDUSTRIAL APPLICABILITY

A capacitor of the present invention can be used particularly suitably for publicly known electric double layer capacitor uses and may be applicable to various uses as a device for storing electricity. Particularly the capacitor of the present invention is compact and lightweight, it can be used for publicly known capacitor uses and can suitably be used as a capacitor for portable machines and equipment power supplies and large-capacity non-portable power supplies. Particularly the capacitor can suitably be used for driving power sources of next-generation eco-friendly cars and power supplies of electronic autoparts, natural energy power generation storage and/or auxiliary power supplies, embeddable medical device power supplies, memory backup power supplies for portable electronic devices, portable clock power supplies, capacitors for fast charging, digital camera power supplies, and electric-powered toy and portable home appliance power supplies. Concrete examples will be described in more detail.

Since a capacitor of the present invention has compact and lightweight properties, it is suitable as a power supply of portable machines and equipment. Since the capacitor of the present invention can also narrow space of occupation even if a large-capacity power supply is needed, it is also suitable as a large-capacity non-portable power-supply. Particularly the capacitor can suitably be used for power supplies or auxiliary power supplies used in next-generation eco-friendly cars including HEV using the capacitor of the present invention, electric vehicles, and hybrid cars or motorcycles, power supplies for high power modules such as electric vehicles, power sources for information and telecommunication devices such as cellular phones, paper batteries such as ID cards, solar power energy storage system in parallel use with solar cells, and load leveling power supplies. Particularly the capacitor can suitably be used as a capacitor for electric vehicles equipped with fuel cells, capacitors, and a current output switching regulator. Furthermore, power supplies for electronic autoparts such as car audio units using the capacitor of the present invention will be able to improve fuel consumption because the capacitor of the present invention is lightweight. In addition, storage and/or auxiliary power supplies of natural energy power generation such as photovoltaic power systems, wind turbine generator systems, wind/photovoltaic hybrid systems, and wave activated power systems using the capacitor of the present invention are space-saving and can suitably be used as large-capacity power supplies.

Since embeddable medical devices using a capacitor of the present invention reduces the load on the human body due to lightweight thereof, the capacitor can suitably be used. Since the capacitor is lightweight, greater portability can be provided by using the capacitor of the present invention in power supplies for portable electronic devices such as mobile personal computers, cellular phones, timers, and clock function for power supplies, and power supplies for memory backup, power supplies or auxiliary power supplies for video cameras, portable terminals, personal computers, power supplies for particularly notebook computers and power supplies for instantaneous power interruption, power supplies of portable clocks using the capacitor of the present invention, power supply circuits of personal computers having excellent life, temperature characteristics, and high frequency characteristics, capacitors for fast charging using the capacitor of the present invention, power supplies for digital cameras using the capacitor of the present invention, and power supplies for portable home appliances such as electric-powered toys using the capacitor of the present invention and electric shavers and electric pots using the capacitor of the present invention.

Since a capacitor of the present invention is compact and has a large capacity, it can be used for other uses than for publicly known electric double layer capacitor uses. More specifically, since the capacitor of the present invention is compact and has a large capacity, it can suitably be used for uninterruptible power supplies, outside installed equipment such as home storage systems, power supply circuits for electronic autoparts connected between battery and DC-CD converter in parallel, switching regulators, motor control regulators, computer electronics, fly-back transformers used for cathode ray tubes used in TV sets, audio amplifiers, surge protectors, electric devices such as resistance spot welders, co-generation facilities, non-utility power generators, X-ray panels, high tension power capacitors (capacitors for electric power equipment, oil impregnated paper capacitors), destructors used to destroy objects to be destroyed such as rock masses, escape devices when cars are submerged, X-ray equipment receiving X-ray images (latent images) as image signals, Wrist watches without battery, display devices using a display panel, liquid crystal display (LCD) units, image display units using matrix LCD cathode ray tubes used particularly in projectors and the like, disposable cameras, resonance labels used by pasting on articles to prevent theft, flash or strobe devices, and power supplies or auxiliary power supplies for emitting display bodies.

Particularly, since a capacitor of the present invention has a large capacity, it can suitably be used for household electrical appliances, high power sources built in tools or electric vehicles, accumulating electricity devices for power receiving/transforming facilities or power distribution facilities, and auxiliary power storage units of energy conversion/storage systems.

The capacitor of the present invention can also be used for high voltage uses by laminating the capacitors.

Since a capacitor of the present invention is compact and has a large capacity, and miniaturization is enabled. Thus, the capacitor of the present invention can suitably be used for control modules used in driving devices for electric motor vehicles and inverter devices, and particularly for compact and cooling-efficient water-cooled control modules. Because of the aforementioned properties, it can also be suitably used for acceleration sensor units, gas sensors for measuring exhaust gas and inflammable gas, and gas concentration controllers. Furthermore, the capacitor of the present invention can also be suitably used for heat element type air meters in a form as a three-terminal electrochemical device.

Since a capacitor of the present invention is compact and has a large capacity and low equivalent series resistance, it can suitably be used for semiconductor packages in which capacitor parts are mounted as chip parts in a top layer thereof and printed circuit boards in which capacitor elements are incorporated in the boards. Printed circuit boards in which the capacitors are incorporated, wherein the capacitors are surface-mounted or embedded, are suitable for miniaturization, higher performance, and cost reduction of electronic devices in which the printed circuit boards are used. Therefore, since the capacitor is compact and has a large capacity and low equivalent series resistance, it can suitably be used for memory units, particularly DRAM (dynamic random access memory) and MMIC (monolithic microwave integrated circuit), and nonvolatile ferroelectric memory elements. Moreover, since the capacitor is compact and has a large capacity and low equivalent series resistance, it can suitably be used for filter circuits such as LCR built-in circuit boards and noise filters, ferroelectric memory, perovskite ferroelectrics, thin semiconductor devices such as IC (integrated circuit) cards, FeRAM using ferroelectrics, light emitting element arrays of organic EL elements, IC chips such as IC cards, semiconductor devices having ferroelectric capacitors, and switching elements for power conversion.

A capacitor of the present invention is applicable to power supply smoothing and noise removal of electric/electronic devices and areas where an ESR value at high frequencies is required. Since the capacitor has inhibitory action on high frequencies, which are noise components generated by a converter or inverter, it is suitable for noise filters.

Therefore, since the capacitor of the present invention is easy to miniaturize and has a large capacity and low equivalent series resistance, miniaturization of devices in use is enabled and the capacitor can be used for noise filters, it can suitably be used for plasma potential measuring devices and tactile sensors by equipping the capacitor with an LC series resonant circuit. Furthermore, because of the aforementioned properties, it can also be suitably used for optical voltage sensors to measure voltage using an electrooptic effect (Pockels effect), transformers for light transforming measuring instruments, high-frequency radio equipment, satellite broadcasting receivers, impedance matching boxes suitably implemented regarding impedance matching antennas and directional antennas in high-frequency equipment whose frequencies to be handled are generally 400 MHz to 20 GHz (UHF to SHF bands) such as wireless LAN, filter parts used in mobile communication equipment such as cellular phones, and tuners for receiving TV signals.

Moreover, a capacitor of the present invention can substantially be integrated with a cabinet, box, undercarriage, chassis, body, partition, bar, cover, or case of household electrical appliances, devices, facilities, measuring instruments, cars including electric vehicles, or motorcycles through connection by bonding a bendable metal plate to an electrode layer or by direct bonding using silver paste. Because the capacitor is compact, has a large capacity, and is also space-saving, a cabinet, box, chassis, partition, cover, or case substantially integrated with the capacitor of the present invention can be used for an undercarriage, chassis, or body in electric vehicles, power-assisted bicycles, electric wheelchairs, power-assisted walkers, electric scooters, electric running machines, and electric gold cars, a packaging case of notebook personal computers, handheld personal computers, cellular phones, and electric tools, and a bar of street lamps generating power by using solar energy.

Other than uses as a power source, a capacitor of the present invention can also be used for manufacturing pure water used for supplying water to boilers in power stations and the like, semiconductor manufacturing processes, and fuel cell power generation, and demineralizers used for manufacture and circulation of cooling tower water and recovery of various kinds of waste water. Using the capacitor, demineralized water and pure water can be obtained by removing not only various kinds of ions in raw water, but also silica. Moreover, if an origin or property of the raw water changes, demineralized water or pure water of stable quality can be manufactured accordingly without changing pretreatment, thereby making a demineralizer that enables stable manufacture of DI pure water (ultra pure water).

A capacitor of the present invention can be used for electrochemical elements applicable to display units. More specifically, the capacitor can be applied to the display units by forming an active matrix type light emitting element array in which unit pixels comprising a light emitting element equipped with a board, a pair of comb-shaped electrodes provided on the board, and a luminous layer containing scintillating material and an electrolyte provided adjacent to the comb-shaped electrodes, a current control transistor, and the capacitor are arranged in a matrix form to apply the capacitor of the present invention to the display units.

## Claims

1. A capacitor comprising at least a polymer electrolyte between metal electrodes opposite to each other, **characterized in that** the metal electrodes have projecting portions, which are in contact with the polymer electrolyte and form electrode components of the metal electrodes, in a boundary region with the polymer electrolyte.

2. The capacitor according to claim 1, wherein an ion exchange resin is comprised as a resin component of the polymer electrolyte.

3. The capacitor according to claim 2, wherein the ion exchange resin is a cation exchange resin.

4. The capacitor according to claim 1, wherein an electrolyte contained in a polymer electrolyte layer is a nonaqueous polar liquid.

5. The capacitor according to claim 1, wherein the projecting portions have a plurality of bay-like insertion portions.

6. The capacitor according to claim 1, wherein a borderline of the projecting portions has at least either of an approximate cyclic curve or indeterminate forms.

7. The capacitor according to claim 1, wherein the projecting portions have at least one of a fractal shape, peninsular shape, island shape, icicle shape, polyp shape, coral shape having a neck-like narrow section, tree shape, or mushroom shape.

8. The capacitor according to claim 1, wherein the metal electrodes have pores containing inside thereof components of the polymer electrolyte.

9. The capacitor according to claim 1, wherein, when the capacitor is divided into a polymer electrode area and a pair of metal electrode areas in a thickness direction, a ratio of thickness of each area in a cross section along the thickness direction, metal electrode area : polymer electrode area : metal electrode area, is in a range of 3:4:3 to 1:8:1.

10. The capacitor according to claim 1, wherein, when the capacitor is divided into a polymer electrode area and a pair of metal electrode areas in the thickness direction, the metal electrode areas have electrode areas rich in polymer electrolyte components on a side of the polymer electrolyte and electrode areas rich in electrode components on an opposite side of the polymer electrolyte.

11. A capacitor comprising at least a polymer electrolyte between metal electrodes opposite to each other, **characterized in that** the metal electrodes have narrow bay portions into which the polymer electrolyte penetrates in the boundary region with the polymer electrolyte.

12. The capacitor according to claim 11, wherein a part sandwiched by the narrow bay portions has a shape projecting from around a surface of the capacitor to an inner part.

13. The capacitor according to claim 11, wherein a borderline of the part sandwiched by the narrow bay portions has an approximate cyclic curve or indeterminate forms.

14. The capacitor according to claim 1, wherein the metal electrodes have through-holes containing the polymer electrolyte for communication from the surface of the metal electrodes to the polymer electrolyte inside the capacitor.

15. The capacitor according to claim 1, wherein the metal electrodes comprise
a porous metal membrane present in contact with the surface of the polymer electrolyte and
the projecting portions comprising components of the porous metal membrane and present in the boundary region inside the polymer electrolyte,
wherein the porous metal membrane and the projecting portions are linked and integrated.

16. A capacitor comprising at least ionic material, a polar liquid, and a polymer electrolyte between metal electrodes opposite to each other, **characterized in that**
the metal electrodes have projecting portions, which are in contact with the polymer electrolyte and form electrode components of the metal electrodes, in a boundary region with the polymer electrolyte and the polymer electrolyte has a space part.

17. The capacitor according to claim 16, wherein the space part of the polymer electrolyte comprises approximate circular or semicircular shapes.

18. The capacitor according to claim 17, wherein a plurality of approximately circular or semicircular space parts of the polymer electrolyte exist in a cross section along a capacitor thickness direction of the capacitor.

19. The capacitor according to claim 18, wherein at least one of the circular or semicircular space parts of the polymer electrolyte has a shortest value of 10 nm or more in diameter of the approximate circle or approximate semicircle in the cross section along the capacitor thickness direction of the capacitor.

20. The capacitor according to claim 16, wherein the polymer electrolyte is a cation exchange resin, an electrolyte contained in the cation exchange resin is propylene carbonate, and the ionic material is Li(CF₃SO₂)₂N.

21. The capacitor according to claim 1, wherein the capacitor has a shape of each part of the capacitor that can be observed using a scanning electron microscope photo when scanned in a cross section along the thickness direction of the capacitor.

22. The capacitor according to claim 1, wherein the capacitor has a shape of each part of the capacitor that can be observed when the shape is scanned including a cross section thereof while moving along the thickness direction of the capacitor using X rays.

23. The capacitor according to claim 1, wherein a capacitance of an interface between the metal electrodes and the polymer electrolyte layer is 3 mF/cm² or more by a cyclic voltammetry method with two electrodes.

24. The capacitor according to claim 1, wherein the capacitance of the capacitor in terms of the thickness 160 µm in a dry state is 3 mF/cm² or more by the cyclic voltammetry method with two electrodes.

25. The capacitor according to claim 1, wherein the capacitance of the interface between the metal electrodes and the polymer electrolyte layer is 2 F/cm³ or more by a constant current discharge method.

26. The capacitor according to claim 16, wherein the capacitance of the interface between the metal electrodes and the polymer electrolyte layer is 40 F/cm³ or more by the constant current discharge method.

27. A method for manufacturing a capacitor, wherein a metal electrode is formed on the polymer electrolyte by a nonelectrolytic plating process, **characterized in that** the nonelectrolytic plating process comprises an adsorption step wherein the polymer electrolyte is caused to adsorb a metal complex and a following reduction step wherein the polymer electrolyte on which the metal complex is adsorbed is brought into contact with a reduction solution.

28. The method for manufacturing a capacitor according to claim 27, wherein a swelling step comprising swelling the polymer electrolyte by infiltrating a good solvent or a mixed solvent containing the good solvent, **characterized in that** the swollen polymer electrolyte has a predetermined shape and the thickness in a swollen state of the polymer electrolyte is 120% or more of that in a dry state thereof, is performed as a pretreatment step of the nonelectrolytic plating process.

29. The method for manufacturing a capacitor according to claim 27, wherein the nonelectrolytic plating process repeats the adsorption step followed by the reduction step twice or more.

30. A method for manufacturing a capacitor, comprising at least a first step wherein a polymer electrolyte is swollen by infiltrating a good solvent or a mixed solvent containing the good solvent, a second step wherein a metal electrode is formed on the swollen polymer electrolyte by the nonelectrolytic plating process, a third step wherein bubbles are generated by electrolyzing liquid present between the formed metal electrodes to create porous space in the polymer electrolyte by pressure of the bubbles, and a fourth step wherein the liquid between the metal electrodes is removed, and a polar liquid containing ionic material is filled in.

31. The method for manufacturing a capacitor according to claim 30, wherein the nonelectrolytic plating process in the second step comprises an adsorption step wherein the polymer electrolyte is caused to adsorb a metal complex and a following reduction step wherein the polymer electrolyte on which the metal complex is adsorbed is brought into contact with a reduction solution.

32. The method for manufacturing a capacitor according to claim 31, wherein the liquid electrolyzed in the third step is water or a mixed solution of water and alcohol.

33. A method for manufacturing a capacitor having at least a polymer electrolyte between metal electrodes, comprising at least a step wherein water or a mixed solution of water and alcohols is filled between the metal electrodes and electrolysis is performed to generate bubbles, thereby creating porous space in the polymer electrolyte by pressure of the bubbles and a following step wherein water is removed and a polar liquid containing ionic material is filled between the metal electrodes.
